(19) Europäisches Patentamt
European Patent Office
Office européen des brevets

(11) **EP 2 612 886 A1**

(12) **EUROPEAN PATENT APPLICATION**
published in accordance with Art. 153(4) EPC

(43) Date of publication:
**10.07.2013 Bulletin 2013/28**

(51) Int Cl.:
***C08L 75/04*** (2006.01)    ***C08F 2/32*** (2006.01)

(21) Application number: **11821554.0**

(86) International application number:
**PCT/JP2011/068567**

(22) Date of filing: **16.08.2011**

(87) International publication number:
**WO 2012/029537 (08.03.2012 Gazette 2012/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
17.06.2011   JP 2011135009
23.05.2011   JP 2011114588
14.03.2011   JP 2011055085
07.10.2010   JP 2010227425
07.10.2010   JP 2010227424
07.10.2010   JP 2010227423
07.10.2010   JP 2010227422
07.10.2010   JP 2010227421
06.09.2010   JP 2010198922
06.09.2010   JP 2010198921
06.09.2010   JP 2010198920
31.08.2010   JP 2010194124
31.08.2010   JP 2010194123

(71) Applicant: **Nitto Denko Corporation**
**Ibaraki-shi, Osaka 567-8680 (JP)**

(72) Inventors:
• **HIRAO, Akira**
  **Ibaraki-shi**
  **Osaka 567-8680 (JP)**
• **DOI, Kohei**
  **Ibaraki-shi**
  **Osaka 567-8680 (JP)**
• **ISEKI, Azusa**
  **Ibaraki-shi**
  **Osaka 567-8680 (JP)**
• **NAKAYAMA, Yusuke**
  **Ibaraki-shi**
  **Osaka 567-8680 (JP)**
• **NAGASAKI, Kunio**
  **Ibaraki-shi**
  **Osaka 567-8680 (JP)**

(74) Representative: **Grünecker, Kinkeldey,**
**Stockmair & Schwanhäusser**
**Leopoldstrasse 4**
**80802 München (DE)**

(54) **FOAM, PRODUCTION METHOD FOR FOAM, AND FUNCTIONAL FOAM**

(57)    Provided are a novel foam which has a uniform fine-cell structure and is excellent in toughness and heat resistance, and a production method therefor. Also provided is a functional foam which includes the above-mentioned foam and has imparted thereto various functions. The foam includes spherical cells, in which: the spherical cells each have an average pore diameter of less than 20 $\mu$m; the foam has a density of 0.15 g/cm$^3$ to 0.9 g/cm$^3$; and the foam is crack-free in a 180° bending test. The functional foam includes the foam.

FIG. **1**

EP 2 612 886 A1

## Description

Technical Field

The present invention relates to a foam, a production method for a foam, and a functional foam.

Background Art

A foam is widely utilized in various applications such as a water-absorbing material, a water-retaining material, a cushioning material, a heat-insulating material, a sound-absorbing material, a separating film, a reflective material, various boards such as a circuit board, a holding member such as a printing plate, a supporting member, a polishing pad for a polishing process and a press platen for supporting the same, and a supporting base to be used for holding or conveying, for example, a semiconductor and various boards from their back surfaces by vacuum suction or the like.

Hitherto, the foam has been obtained by forming a foamed layer into a shape by a wet coagulation method, a dry transfer method, a chemical foaming method involving using a chemical foaming agent, a heat-expandable plastic microballoon, a physical foaming method involving using an aqueous dispersion of a thermoplastic resin, a mechanical foaming method involving mixing air into an aqueous dispersion of a thermoplastic resin, or the like (see, for example, Patent Literatures 1 to 3).

However, although the foam obtained by the wet coagulation method is a porous material, there is a problem in that the foam cannot express a sufficient mechanical strength because its pore diameter sizes are non-uniform in its thickness direction. There is also a problem in that it takes a long time to perform the wet coagulation.

The composite sheet obtained by the dry transfer method or the composite sheet obtained by the mechanical foaming method involving mixing air into an aqueous dispersion of a thermoplastic resin has pore diameter sizes distributed in a nearly uniform manner in its thickness direction. However, there is a problem in that formation of pores using a gas makes it difficult to control a pore diameter size, and thus pores having large diameters are generated in some cases, with the result that a sufficient mechanical strength cannot be expressed. There is also a problem in that the dry transfer method requires using an environmental load substance such as an organic solvent in its production steps, and thus it is necessary to finally remove the environmental load substance included in a resin by heating drying or the like from the viewpoint of environment-friendliness.

There is a problem in that the foam obtained by the chemical foaming method involving using a chemical foaming agent or the foam obtained by the heat-expandable plastic microballoon requires high temperature controllability in its production steps, and hence inevitably requires a dedicated facility that is expensive and large. There is also a problem in that, in the foam obtained by the chemical foaming method involving using a chemical foaming agent or the foam obtained by the heat-expandable plastic microballoon, a size of the foamed layer included in the foam becomes 3 to 5 times as large as that before the foaming treatment, and its pore diameter also becomes large, with the result that a sufficient mechanical strength cannot be expressed.

When the foam is obtained by subjecting a thermoplastic resin to extrusion molding, there is a problem in that the foam shows a remarkable dimensional change during heating storage, and its cell structure collapses owing to melting or the like of the thermoplastic resin, with the result that sufficient heat resistance cannot be expressed (see, for example, Patent Literature 1).

Although the foam obtained by the physical foaming method involving using an aqueous dispersion of a thermoplastic resin is a fine porous material, there is a problem in that a control range of a density of a porous layer is limited to a narrow range, i.e., 0.5 g/cm$^3$ to 0.9 g/cm$^3$. Further, a clearance upon application of the aqueous dispersion is suitably about 50 $\mu$m to 600 $\mu$m, and thus there is also a problem in that volatilization of water reduces a thickness of the porous layer as compared to that before the treatment, with the result that a control range of the thickness of the porous layer becomes narrow (see, for example, Patent Literature 3).

Meanwhile, a W/O type emulsion is known as, in particular, a W/O type high internal phase emulsion (HIPE) (see, for example, Patent Literature 4), and through formation of a W/O type HIPE including a polymerizable monomer in an external oil phase, followed by polymerization, geometrical arrangement of an oil phase and an aqueous phase in the emulsion has been studied. For example, it has been reported that, through preparation of a W/O type HIPE including 90% of an aqueous phase component and using a styrene monomer in an oil phase component, followed by polymerization, geometrical arrangement of an oil phase and an aqueous phase in the emulsion is studied (see, for example, Non Patent Literature 1). Non Patent Literature 1 reports that, when the W/O type HIPE is prepared by stirring the oil phase and the aqueous phase through use of a lipophilic emulsifying agent, followed by polymerization, a hard porous material having a cell shape which depends on a phase relationship in a precursor of the W/O type HIPE is formed.

Physical properties of the porous material formed by polymerizing the W/O type emulsion are influenced by kinds of components constituting the W/O type emulsion and emulsifying conditions in the preparation of the W/O type emulsion.

For example, there has been reported a method involving preparing an absorbing porous polymer from a W/O type HIPE including at least 90 parts by weight of water and an oil phase including a polymerizable monomer, a surfactant, and a polymerization catalyst (see, for example, Patent Literature 5).

There has been reported a method involving preparing a hydrophobic porous material having a dry density of less than about 100 mg/cc by subjecting a W/O type HIPE including at least an aqueous phase component and an oil phase component including a polymerizable monomer, a surfactant, and a polymerization catalyst to polymerization, followed by repeated washing and dehydration (see, for example, Patent Literature 6).

For example, there has been reported a production method for a porous cross-linked polymer involving continuously performing a process commencing on preparation of a W/O type HIPE and ending on polymerization thereof (see, for example, Patent Literature 7).

For example, there has been reported a production method for a foam involving subjecting a W/O type HIPE to photopolymerization (see, for example, Patent Literature 8).

As described above, some examples in which the porous material is produced from the W/O type emulsion have already been known. However, such porous material involves some problems.

For example, there has been reported a production method for a foam involving photopolymerization using a W/O type HIPE including a (meth)acrylic monomer, a polyfunctional (meth)acrylic monomer, and a lipophilic emulsifying agent such as sorbitan monooleate in a continuous oil phase component, or a W/O type HIPE including a (meth) acrylic monomer, an aromatic urethane acrylate, and a lipophilic emulsifying agent such as sorbitan monooleate in a continuous oil phase component. However, although a foam formed of a cross-linked type (meth)acrylic polymer is excellent in that it can be provided as a foam having a high cell content, there is a problem in that the foam is insufficient in cell structure uniformity. There is also a problem in that the foam is poor in toughness; for example, the foam is fissured (cracked) when subjected to a 180° bending test and a high-compression test (80% or more) (see, for example, Patent Literature 8).

Further, even only slight changes in continuous oil phase component composition (e.g., selection of contents of a monomer/cross-linking agent, an amount of an emulsifying agent, and a type of an emulsifying agent), temperature at the time of emulsification, stirring conditions, and the like of the W/O type emulsion break an emulsion state of the W/O type emulsion, at least part of which is clearly separated into an aqueous phase or an oil phase. Thus, it is not easy to prepare the W/O type emulsion suitable for obtaining a foam of interest.

That is, hitherto, it has been extremely difficult to provide a foam which has a uniform fine-cell structure and is excellent in toughness and heat resistance.

Citation List

Patent Literature

[PTL 1] JP 2001-9952 A
[PTL 2] JP 2001-38837 A
[PTL 3] WO 2002/101141 A1
[PTL 4] US 3565817 A
[PTL 5] JP 03-66323 B
[PTL 6] JP 2003-514052 W
[PTL 7] JP 2001-163904 A
[PTL 8] JP 2003-510390 W

Non Patent Literature

[NPL1] "A study of medium and high internal phase ratio water/polymer emulsions" (Lissant and Mahan, Journal of Colloid and Interface Science, Vol. 42, No. 1, Jan. 1973, pp. 201 to 208)

Summary of Invention

Technical Problem

An object of the present invention is to provide a novel foam which has a uniform fine-cell structure and is excellent in toughness and heat resistance, and a production method therefor.

**EP 2 612 886 A1**

Another object of the present invention is to provide a functional foam which includes the above-mentioned foam and has imparted thereto various functions.

Solution to Problem

A foam of the present invention is a foam, including spherical cells, in which:

the spherical cells each have an average pore diameter of less than 20 $\mu$m;
the foam has a density of 0.15 g/cm$^3$ to 0.9 g/cm$^3$; and
the foam is crack-free in a 180° bending test.

In a preferred embodiment, the foam of the present invention has a rate of dimensional change of less than $\pm$5% when stored at 125°C for 22 hours.
In a preferred embodiment, the foam of the present invention has a rate of change in tensile strength of less than $\pm$20% when stored at 125°C for 14 days.
In a preferred embodiment, the foam of the present invention has an open-cell structure in which through-holes are present between adjacent spherical cells.
In a preferred embodiment, the through-holes each have an average pore diameter of 5 $\mu$m or less.
In a preferred embodiment, the foam of the present invention includes a foam sheet having a sheet shape.
A production method for a foam of the present invention is a production method for a foam including spherical cells, the method including:

a step (I) of preparing a W/O type emulsion including a continuous oil phase component and an aqueous phase component immiscible with the continuous oil phase component;
a step (II) of forming the resultant W/O type emulsion into a shape;
a step (III) of polymerizing the W/O type emulsion formed into a shape; and
a step (IV) of dehydrating the resultant water-containing polymer,

in which:

the continuous oil phase component includes a hydrophilic polyurethane-based polymer, an ethylenically unsaturated monomer, and a cross-linking agent; and
the cross-linking agent includes one or more kinds selected from a polyfunctional (meth)acrylate, a polyfunctional (meth)acrylamide, and a polymerization-reactive oligomer each having a weight average molecular weight of 800 or more and one or more kinds selected from a polyfunctional (meth)acrylate and a polyfunctional (meth)acrylamide each having a weight average molecular weight of 500 or less.

In a preferred embodiment, the hydrophilic polyurethane-based polymer includes a polyoxyethylene polyoxypropylene unit derived from polyoxyethylene polyoxypropylene glycol, and the polyoxyethylene polyoxypropylene unit includes 5 wt% to 25 wt% of polyoxyethylene.
A functional foam of the present invention includes the foam of the present invention.
In a preferred embodiment, the functional foam of the present invention includes any one of a foamed pressure-sensitive adhesive, a foamed diffusive reflector, a chemical-resistant foam, a high-resilience foam, a high-airtight foam, a heat-resistant impact-absorbing foam, a liquid-absorbing open-cell porous material, a heat-resistant low-thermal conductive foam, a weather-resistant foam, and a water-repellent foam.

Advantageous Effects of Invention

According to the present invention, it is possible to provide the novel foam which has a uniform fine-cell structure and is excellent in toughness and heat resistance.
The foam of the present invention has a precisely controlled three-dimensional network structure, and hence can express excellent heat resistance and excellent mechanical physical properties.
The foam of the present invention can provide a functional foam by being caused to express various functions.
According to the present invention, it is possible to provide the production method for a novel foam which has a uniform fine-cell structure and is excellent in toughness and heat resistance.
According to the present invention, the foam can be continuously produced while a desired surface layer shape and thickness are controlled by forming a W/O type emulsion into a shape, followed by polymerization and dehydration.

4

According to the present invention, the foam can be produced through continuous steps in a commercially significant scale.

According to the present invention, a novel foam which includes spherical cells capable of being precisely controlled in size, in particular, spherical cells each having a small average pore diameter, can have a sufficient strength, and is excellent in toughness and heat resistance can be produced through use of the W/O type emulsion having excellent emulsifiability and excellent static storage stability.

According to the present invention, the W/O type emulsion has excellent emulsifiability and excellent static storage stability even when an emulsifying agent or the like is not positively added, and hence the foam of the present invention can be stably produced.

According to the present invention, a hydrophilic polyurethane-based polymer is used in the preparation of the W/O type emulsion, and hence the usage of an organic solvent as an environmental load substance can be reduced.

The foam obtained by the production method of the present invention has a precisely controlled three-dimensional network structure, and hence can express excellent heat resistance and excellent mechanical physical properties.

Brief Description of Drawings

[FIG. **1**] A photographic view of a cross-sectional SEM photograph of a foam obtained in Example A-1.

[FIG. **2**] A photographic view of a cross-sectional SEM photograph of a foam obtained in Example A-2.

[FIG. **3**] A photographic view of a cross-sectional SEM photograph of a foam obtained in Example A-3.

[FIG. **4**] A photographic view of a surface/cross-sectional SEM photograph of a foam obtained in Example A-4 taken from an oblique direction.

[FIG. **5**] A photographic view of a surface/cross-sectional SEM photograph of a foam obtained in Example A-5 taken from an oblique direction.

[FIG. **6**] A photographic view of a cross-sectional SEM photograph of a foam obtained in Comparative Example A-1.

[FIG. **7**] A photographic view of a cross-sectional SEM photograph of a foam obtained in Comparative Example A-2.

[FIG. **8**] A photographic view of a cross-sectional SEM photograph of a foam obtained in Comparative Example A-3.

[FIG. **9**] A photographic view of a cross-sectional SEM photograph of a foam obtained in Comparative Example A-4.

[FIG. **10**] A photographic view of a cross-sectional SEM photograph of a foam of the present invention, the photographic view clearly showing an open-cell structure in which through-holes are present between adjacent spherical cells.

[FIG. **11**] A photographic view of a surface/cross-sectional SEM photograph of a foamed pressure-sensitive adhesive produced in Example B-1 taken from an oblique direction.

[FIG. **12**] A chart showing measurement results of diffuse reflectivities of foamed diffusive reflectors of the present invention.

[FIG. **13**] A chart showing measurement results of rates of changes in 50% compression load before and after an immersion test in a 10% hydrochloric acid aqueous solution, acetone, and ethanol in Examples D-1, D-2, and D-3.

[FIGS. **14**] Explanatory views each illustrating a measurement method for a compression set recovery rate.

[FIG. **15**] An explanatory view illustrating a dustproofness evaluation test apparatus.

[FIG. **16**] A schematic view of a sample for evaluation to be used in a dynamic dustproofness evaluation test.

[FIG. **17**] A simple schematic cross-sectional view of an evaluation container for dynamic dustproofness evaluation mounted with the sample for evaluation to be used in the dynamic dustproofness evaluation test.

[FIG. **18**] A schematic cross-sectional view illustrating a tumbler on which the evaluation container for dynamic dustproofness evaluation is placed.

[FIGS. **19**] Top and cross-sectional views of the evaluation container for dynamic dustproofness evaluation mounted with the sample for evaluation to be used in the dynamic dustproofness evaluation test.

[FIG. **20**] An explanatory view illustrating a measurement method for an impact absorptivity.

[FIG. **21**] An explanatory view illustrating a measurement method for a thermal conductivity.

[FIG. **22**] An explanatory view illustrating a cross-section of a test piece in the measurement method for a thermal conductivity.

Description of Embodiments

<<<<A. Foam>>>>

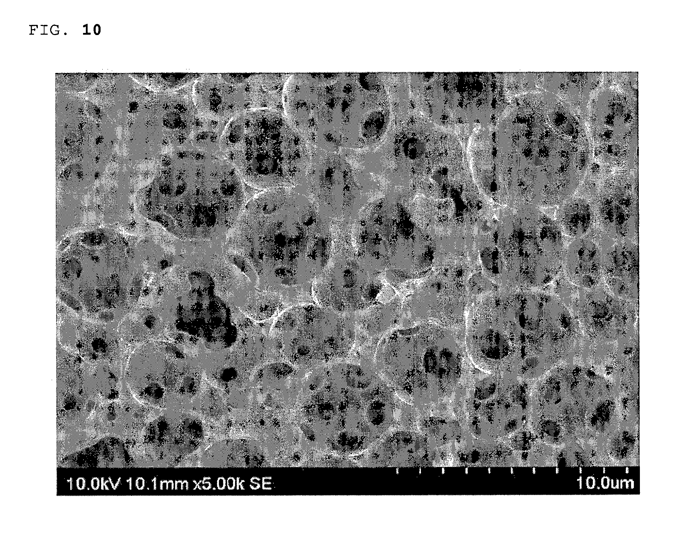

A foam of the present invention may be preferably produced by a production method of the present invention.
The foam of the present invention is a foam including spherical cells.
It should be noted that the "spherical cells" as used herein do not need to be true spherical cells in a strict sense, and for example, may be substantially spherical cells each partially having a strain or cells each formed of a space having a large strain.
The spherical cells included in the foam of the present invention each have an average pore diameter of less than 20 $\mu$m, preferably 15 $\mu$m or less, still more preferably 10 $\mu$m or less. The lower limit value of the average pore diameter of each of the spherical cells included in the foam of the present invention is not particularly limited, and for example, is preferably 0.01 $\mu$m, more preferably 0.1 $\mu$m, still more preferably 1 $\mu$m. When the average pore diameter of each of the spherical cells included in the foam of the present invention falls within the range, the average pore diameter of each of the spherical cells of the foam of the present invention can be precisely controlled to a small one, and a novel foam excellent in toughness and heat resistance can be provided.
The foam of the present invention has a density of 0.15 g/cm$^3$ to 0.9 g/cm$^3$, preferably 0.15 g/cm$^3$ to 0.7 g/cm$^3$, more preferably 0.15 g/cm$^3$ to 0.5 g/cm$^3$. When the density of the foam of the present invention falls within the range, while the range of the density of the foam of the present invention is controlled to a wide one, a novel foam excellent in toughness and heat resistance can be provided.
The foam of the present invention may have an open-cell structure in which through-holes are present between adjacent spherical cells. The open-cell structure may be an open-cell structure in which through-holes are present between most or all of adjacent spherical cells, or may be a semi-closed and semi-open-cell structure in which the number of through-holes is relatively small.
The through-holes present between the adjacent spherical cells affect the physical properties of the foam. For example, there is a tendency that, as the average pore diameter of each of the through-holes becomes smaller, the strength of the foam becomes higher. FIG. **10** shows a photographic view of a cross-sectional SEM photograph of the foam of the present invention, the photographic view clearly showing an open-cell structure in which through-holes are present between adjacent spherical cells.
The through-holes present between the adjacent spherical cells each have an average pore diameter of preferably 5 $\mu$m or less, more preferably 4 $\mu$m or less, still more preferably 3 $\mu$m or less. The lower limit value of the average pore diameter of each of the through-holes present between the adjacent spherical cells is not particularly limited, and for example, is preferably 0.001 $\mu$m, more preferably 0.01 $\mu$m. When the average pore diameter of each of the through-holes present between the adjacent spherical cells falls within the range, a novel foam excellent in toughness and heat resistance can be provided.
The foam of the present invention preferably has surface openings.
When the foam of the present invention has surface openings, the upper limit value of the average pore diameter of each of the surface openings is preferably 5 $\mu$m, more preferably 4 $\mu$m, still more preferably 3 $\mu$m. The lower limit value of the average pore diameter of each of the surface openings is not particularly limited, and for example, is preferably 0.001 $\mu$m, more preferably 0.01 $\mu$m. When the average pore diameter of each of the surface openings falls within the range, a novel foam excellent in toughness and heat resistance can be provided.
The foam of the present invention is crack-free in a 180° bending test. This fact indicates that the foam of the present invention has very excellent toughness.

The foam of the present invention has a rate of dimensional change of preferably less than ±5%, more preferably ±3% or less, still more preferably ±1% or less, when stored at 125°C for 22 hours. When the rate of dimensional change of the foam of the present invention stored at 125°C for 22 hours falls within the range, the foam of the present invention can have very excellent heat resistance.

The foam of the present invention has a rate of change in tensile strength of preferably less than ±20%, more preferably ±18% or less, when stored at 125°C for 14 days. When the rate of change in tensile strength of the foam of the present invention stored at 125°C for 14 days falls within the range, the foam of the present invention can have very excellent heat resistance.

The foam of the present invention has a tensile strength of preferably 0.1 MPa or more, more preferably 0.15 MPa or more, still more preferably 0.2 MPa or more. When the tensile strength of the foam of the present invention falls within the range, the foam of the present invention can have very excellent mechanical physical properties.

The foam of the present invention has a 50% compression load of preferably 3,000 kPa or less, more preferably 1,000 kPa or less, still more preferably 200 kPa or less. When the 50% compression load of the foam of the present invention falls within the range, the foam of the present invention can have very excellent flexibility.

Any appropriate material may be adopted as a material for the foam of the present invention as long as it provides a foam including spherical cells, in which the spherical cells each have an average pore diameter of less than 20 μm, the foam has a density of 0.15 g/cm$^3$ to 0.9 g/cm$^3$, and the foam is crack-free in a 180° bending test.

The foam of the present invention may have any appropriate shape. For practical purposes, the foam of the present invention is preferably a foam sheet having a sheet shape. When the foam of the present invention is a foam sheet, its thickness and long and short side lengths may each be any appropriate value.

<<<<B. Production method for foam>>>>

As a production method for the foam of the present invention, for example, there is given a "continuous method" involving continuously supplying an emulsifying machine with a continuous oil phase component and an aqueous phase component to prepare a W/O type emulsion which may be used for obtaining the foam of the present invention, subsequently polymerizing the resultant W/O type emulsion to produce a water-containing polymer, and subsequently dehydrating the resultant water-containing polymer. As another production method for the foam of the present invention, for example, there is given a "batch method" involving feeding an emulsifying machine with an appropriate amount of an aqueous phase component with respect to a continuous oil phase component, continuously supplying the aqueous phase component with stirring to prepare a W/O type emulsion which may be used for obtaining the foam of the present invention, polymerizing the resultant W/O type emulsion to produce a water-containing polymer, and subsequently dehydrating the resultant water-containing polymer.

A continuous polymerization method involving continuously polymerizing a W/O type emulsion is a preferred method because its production efficiency is high and an effect of shortening a polymerization time and shortening of a polymerization apparatus can be most effectively utilized.

More specifically, the production method for the foam of the present invention involves:

a step (I) of preparing a W/O type emulsion;
a step (II) of forming the resultant W/O type emulsion into a shape;
a step (III) of polymerizing the W/O type emulsion formed into a shape; and
a step (IV) of dehydrating the resultant water-containing polymer. Herein, at least part of the step (II) of forming the resultant W/O type emulsion into a shape and the step (III) of polymerizing the W/O type emulsion formed into a shape may be simultaneously performed.

<<B-1. Step (I) of preparing W/O type emulsion>>

The W/O type emulsion is a W/O type emulsion including a continuous oil phase component and an aqueous phase component immiscible with the continuous oil phase component. More specifically, the W/O type emulsion is obtained by dispersing the aqueous phase component in the continuous oil phase component.

The ratio of the aqueous phase component to the continuous oil phase component in the W/O type emulsion may be any appropriate ratio in such a range that the W/O type emulsion can be formed. The ratio of the aqueous phase component to the continuous oil phase component in the W/O type emulsion can serve as an important factor for determining structural, mechanical, and performance characteristics of a porous polymer material to be obtained by the polymerization of the W/O type emulsion. Specifically, the ratio of the aqueous phase component to the continuous oil phase component in the W/O type emulsion which may be used for obtaining the foam of the present invention can serve as an important factor for determining, for example, the density, cell size, cell structure, and dimensions of a wall body for forming a porous structure of a porous polymer material to be obtained by polymerization of the W/O type emulsion.

The lower limit value of the ratio of the aqueous phase component in the W/O type emulsion is preferably 30 wt%, more preferably 40 wt%, still more preferably 50 wt%, particularly preferably 55 wt%, and the upper limit value thereof is preferably 95 wt%, more preferably 90 wt%, still more preferably 85 wt%, particularly preferably 80 wt%. When the ratio of the aqueous phase component in the W/O type emulsion falls within the range, the effects of the present invention can be sufficiently expressed.

The W/O type emulsion may include any appropriate additive in such a range that the effects of the present invention are not impaired. Examples of such additive include: a tackifier resin; talc; fillers such as calcium carbonate, magnesium carbonate, silicic acid and salts thereof, clay, micapowder, aluminumhydroxide, magnesium hydroxide, zinc oxide, bentonite, carbon black, silica, alumina, aluminum silicate, acetylene black, and aluminum powder; a pigment; and a dye. Such additives may be used alone or in combination.

Any appropriate method may be adopted as a production method for the W/O type emulsion. Examples of the production method for the W/O type emulsion which may be used for obtaining the foam of the present invention include: a "continuous method" involving forming the W/O type emulsion by continuously supplying an emulsifying machine with a continuous oil phase component and an aqueous phase component; and a "batch method" involving forming the W/O type emulsion by feeding an emulsifying machine with an appropriate amount of an aqueous phase component with respect to a continuous oil phase component and continuously supplying the emulsifying machine with the aqueous phase component with stirring.

In the production of the W/O type emulsion, as shearing means for obtaining an emulsion state, for example, there is given application of a high shearing condition using a rotor/stator mixer, a homogenizer, or a microfluidization apparatus. Further, as another shearing means for obtaining an emulsion state, for example, there is given shaking using an impeller mixer or a pin mixer, or gentle mixing of a continuous and dispersion phase through application of a low shearing condition using an electromagnetic stirrer bar.

As an apparatus for preparing the W/O type emulsion by the "continuous method, " for example, there are given a static mixer, arotor/statormixer, andapinmixer. It is also possible to achieve more vigorous stirring by increasing a stirring speed or by using an apparatus designed so as to disperse the aqueous phase component more finely in the W/O type emulsion in a mixing method.

As an apparatus for preparing the W/O type emulsion by the "batch method, " for example, there are given, mixing or shaking by hand, a driven impeller mixer, and a three-propeller mixing blade.

Any appropriate method may be adopted as a preparation method for the continuous oil phase component. Typical preferred examples of the preparation method for the continuous oil phase component include a preparation method for a continuous oil phase component involving preparing a mixed syrup including a hydrophilic polyurethane-based polymer and an ethylenically unsaturated monomer and subsequently compounding the mixed syrup with a polymerization initiator, a cross-linking agent, and any other appropriate component.

Any appropriate method may be adopted as a preparation method for the hydrophilic polyurethane-based polymer. Typical examples of the preparation method for the hydrophilic polyurethane-based polymer include a preparation method involving subjecting polyoxyethylene polyoxypropylene glycol and a diisocyanate compound to a reaction in the presence of a urethane reaction catalyst.

<B-1-1. Aqueous phase component>

Anyaqueous fluid substantially immiscible with the continuous oil phase component may be adopted as the aqueous phase component. Water such as ion-exchanged water is preferred from the viewpoints of ease of handling and low cost.

The aqueous phase component may include any appropriate additive in such a range that the effects of the present invention are not impaired. Examples of such additive include a polymerization initiator and a water-soluble salt. The water-solublesalt can serve as an effective additive for additionally stabilizing the W/O type emulsion. Examples of such water-soluble salt include sodium carbonate, calcium carbonate, potassium carbonate, sodium phosphate, calcium phosphate, potassium phosphate, sodium chloride, and potassium chloride. Such additives may be used alone or in combination. Theadditiveswhichmaybeincludedintheaqueousphasecomponentmaybeusedaloneorincombination.

<B-1-2. Continuous oil phase component>

The continuous oil phase component includes a hydrophilic polyurethane-based polymer, an ethylenically unsaturated monomer, and a cross-linking agent. The content of each of the hydrophilic polyurethane-based polymer and the ethylenically unsaturated monomer in the continuous oil phase component may be any appropriate content in such a range that the effects of the present invention are not impaired.

The content of the hydrophilic polyurethane-based polymer, which depends on the ratio of polyoxyethylene in a polyoxyethylene polyoxypropylene glycol unit constituting the hydrophilic polyurethane-based polymer or the amount of the aqueous phase component to be compounded, is as described below, for example. The hydrophilic polyurethane-based polymer is preferably contained in the range of 10 to 30 parts by weight with respect to 70 to 90 parts by weight of the ethylenically unsaturated monomer, and the hydrophilic polyurethane-based polymer is more preferably contained in the range of 10 to 25 parts by weight with respect to 75 to 90 parts by weight of the ethylenically unsaturated monomer. Further, for example, the hydrophilic polyurethane-based polymer is preferably contained in the range of 1 to 30 parts by weight, and the hydrophilic polyurethane-based polymer is more preferably contained in the range of 1 to 25 parts by weight, with respect to 100 parts by weight of the aqueous phase component. When the content of the hydrophilic polyurethane-based polymer falls within the range, the effects of the present invention can be sufficiently expressed.

(B-1-2-1. Hydrophilic polyurethane-based polymer)

The hydrophilic polyurethane-based polymer includes a polyoxyethylene polyoxypropylene unit derived from polyoxyethylene polyoxypropylene glycol, and the polyoxyethylene polyoxypropylene unit contains 5 wt% to 25 wt% of polyoxyethylene.

The content of the polyoxyethylene in the polyoxyethylene polyoxypropylene unit is 5 wt% to 25 wt% as described above, the lower limit value thereof is preferably 10 wt%, more preferably 15 wt%, and the upper limit value thereof is preferably 25 wt%, more preferably 20 wt%. The polyoxyethylene in the polyoxyethylene polyoxypropylene unit expresses an effect of stably dispersing an aqueous phase component in a continuous oil phase component. When the content of the polyoxyethylene in the polyoxyethylene polyoxypropylene unit is less than 5 wt%, it may become difficult to stably disperse the aqueous phase component in the continuous oil phase component. When the content of the polyoxyethylene in the polyoxyethylene polyoxypropylene unit is more than 25 wt%, as the condition becomes closer to anHIPE condition, phase transition from a W/O type emulsion to an oil-in-water type (O/W type) emulsion may occur.

A conventional hydrophilic polyurethane-based polymer is obtained by subjecting a diisocyanate compound, a hydrophobic long-chain diol, polyoxyethylene glycol and a derivative thereof, and a low-molecular active hydrogen compound (chain extension agent) to a reaction. However, the number of polyoxyethylene groups included in the hydrophilic polyurethane-based polymer obtained by such method is non-uniform, and hence a W/O type emulsion including such hydrophilic polyurethane-based polymer may have lowered emulsification stability. On the other hand, the hydrophilic polyurethane-based polymer included in the continuous oil phase component of the W/O type emulsionhas such a characteristic structure as described above. Hence, in the case where the hydrophilic polyurethane-based polymer is incorporated into the continuous oil phase component of the W/O type emulsion, excellent emulsifiability and excellent static storage stability can be expressed even when an emulsifying agent or the like is not positively added.

The hydrophilic polyurethane-based polymer is preferably obtained by subj ecting polyoxyethylene polyoxypropylene glycol and a diisocyanate compound to a reaction. In this case, the lower limit value of the ratio of the polyoxyethylene polyoxypropylene glycol and the diisocyanate compound in terms of NCO/OH (equivalent ratio) is preferably 1, more preferably 1.2, still more preferably 1.4, particularly preferably 1.6, and the upper limit value thereof is preferably 3, more preferably 2.5, still more preferably 2. When the ratio in terms of NCO/OH (equivalent ratio) is less than 1, a gelled product may be liable to be generated in the production of the hydrophilic polyurethane-based polymer. When the ratio in terms of NCO/OH (equivalent ratio) is more than 3, the remaining amount of the diisocyanate compound increases, which may make the W/O type emulsion unstable.

Examples of the polyoxyethylene polyoxypropylene glycol include polyether polyols manufactured by ADEKA CORPORATION (ADEKA (trademark) Pluronic L-31, L-61, L-71, L-101, L-121, L-42, L-62, L-72, L-122, 25R-1, 25R-2, and 17R-2), and polyoxyethylene polyoxypropylene glycols manufactured by NOF CORPORATION (PLONON (trademark) 052, 102, and 202). The polyoxyethylene polyoxypropylene glycols may be used alone or in combination.

Examples of the diisocyanate compound include aromatic, aliphatic, and alicyclic diisocyanates, dimers and trimers of these diisocyanates, and polyphenylmethane polyisocyanate. Examples of the aromatic, aliphatic, and alicyclic diisocyanates include tolylene diisocyanate, diphenylmethane diisocyanate, hexamethylene diisocyanate, xylylene diisocyanate, hydrogenated xylylene diisocyanate, isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis (isocyanatomethyl) cyclohexane, methylcyclohexane diisocyanate, andm-tetramethylxylylene diisocyanate. Examples of the trimers of the diisocyanates include an isocyanurate type, a biuret type, and an allophanate type. The diisocyanate compounds may be used alone or in combination.

The kind, combination, or the like of the diisocyanate compounds has only to be appropriately selected from the viewpoint of, for example, urethane reactivity with polyol. An alicyclic diisocyanate is preferably used from the viewpoints of, for example, rapid urethane reactivity with polyol and suppression of a reaction with water.

The lower limit value of the weight average molecular weight of the hydrophilic polyurethane-based polymer is preferably 5,000, more preferably 7,000, still more preferably 8,000, particularly preferably 10,000, and the upper limit value thereof is preferably 50, 000, more preferably 40, 000, still more preferably 30,000, particularly preferably 20,000.

The hydrophilic polyurethane-based polymer may have a radically polymerizable unsaturated double bond at a terminal thereof. By virtue of the fact that the hydrophilic polyurethane-based polymer has a radically polymerizable unsaturated double bond at a terminal thereof, the effects of the present invention can be additionally expressed.

(B-1-2-2. Ethylenically unsaturated monomer)

Any appropriate monomer may be adopted as the ethylenically unsaturated monomer as long as the monomer has an ethylenically unsaturated double bond. The ethylenically unsaturated monomers may be used alone or in combination.

The ethylenically unsaturated monomer preferably includes a (meth) acrylic acid ester. The lower limit value of the content of the (meth)acrylic acid ester in the ethylenically unsaturated monomer is preferably 80 wt%, more preferably 85 wt%, and the upper limit value thereof is preferably 100 wt%, more preferably 98 wt%. The (meth) acrylic acid esters may be used alone or in combination.

The (meth)acrylic acid ester is preferably an alkyl (meth)acrylate having an alkyl group (concept encompassing a cycloalkyl group, an alkyl(cycloalkyl) group, and a (cycloalkyl) alkyl group as well) having 1 to 2 0 carbon atoms. The alkyl group preferably has 4 to 18 carbon atoms. It should be noted that the term "(meth)acrylic" means acrylic and/or methacrylic, and the term "(meth)acrylate" means acrylate and/or methacrylate.

Examples of the alkyl (meth)acrylate having an alkyl group having 1 to 20 carbon atoms include methyl (meth) acrylate, ethyl (meth)acrylate, propyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth) acrylate, hexyl (meth) acrylate, heptyl (meth) acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, lauryl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, and isostearyl (meth) acrylate. Of those, n-butyl (meth)acrylate and 2-ethylhexyl (meth)acrylate are preferred. The alkyl (meth)acrylates each having an alkyl group having 1 to 20 carbon atoms may be used alone or in combination.

The ethylenically unsaturated monomer preferably further contains a polar monomer copolymerizable with the (meth) acrylic acid ester. The lower limit value of the content of the polar monomer in the ethylenically unsaturated monomer is preferably 0 wt%, more preferably 2 wt%, and the upper limit value thereof is preferably 20 wt%, more preferably 15 wt%. The polar monomers may be used alone or in combination.

Examples of the polar monomer include: carboxyl group-containing monomers such as (meth) acrylic acid, carboxyethyl (meth)acrylate, carboxypentyl (meth)acrylate, $\omega$-carboxy-polycaprolactone monoacrylate, phthalic acid monohydroxyethyl acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth) acrylate, 10-hydroxydecyl (meth)acrylate, 12-hydroxylauryl (meth)acrylate, and (4-hydroxymethylcyclohexyl)methyl (meth)acrylate; and amide group-containing monomers such as N,N-dimethyl (meth) acrylamide and N,N-diethyl(meth) acrylamide.

(B-1-2-3. Polymerization initiator)

The continuous oil phase component preferably includes a polymerization initiator.

Examples of the polymerization initiator include a radical polymerization initiator and a redox polymerization initiator. Examples of the radical polymerization initiator include a thermal polymerization initiator and a photopolymerization initiator.

Examples of the thermal polymerization initiator include an azo compound, a peroxide, peroxycarbonic acid, a peroxycarboxylic acid, potassium persulfate, t-butyl peroxyisobutyrate, and 2,2'-azobisisobutyronitrile.

Examples of the photopolymerization initiator may include: acetophenone-based photopolymerization initiators such as 4-(2-hydroxyethoxy)phenyl (2-hydroxy-2-propyl) ketone (e.g., a product available under the trade name Darocur-2959 from Ciba Japan), $\alpha$-hydroxy-$\alpha,\alpha$'-dimethylacetophenone (e.g., a product available under the trade name Darocur-1173 from Ciba Japan), methoxyacetophenone, 2,2-dimethoxy-2-phenylacetophenone (e.g., a product available under the trade name Irgacure-651 from Ciba Japan) , and 2-hydroxy-2-cyclohexylacetophenone (e.g., a product available under the trade name Irgacure-184 from Ciba Japan); ketal-based photopolymerization initiators such as benzyl dimethyl ketal; other halogenated ketones; and acylphosphine oxides (e.g., a product available under the trade name Irgacure-819 from Ciba Japan).

The polymerization initiators may be used alone or in combination.

The lower limit value of the content of the polymerization initiator is preferably 0.05 wt%, more preferably 0.1 wt%, and the upper limit value thereof is preferably 5.0 wt%, more preferably 1.0 wt%, with respect to the whole continuous oil phase component. When the content of the polymerization initiator is less than 0. 05 wt% with respect to the whole continuous oil phase component, the amount of unreacted monomer components increases, with the result that the amount of monomers remaining in a porous material to be obtained may increase. When the content of the polymerization initiator is more than 5.0 wt% with respect to the whole continuous oil phase component, the mechanical physical properties of a porous material to be obtained may lower.

It should be noted that the amount of radicals generated by the photopolymerization initiator varies depending on, for example, the kind, intensity, and irradiation time of irradiation light and the amount of dissolved oxygen in a mixture of a monomer and a solvent as well. In addition, when the amount of dissolved oxygen is large, the amount of radicals generated by the photopolymerization initiator is suppressed, and thus polymerization does not sufficiently proceed, with the result that the amount of an unreacted product may increase. Accordingly, it is preferred to blow inert gas such as nitrogen into a reaction system to replace oxygen by the inert gas or to perform degassing by reduced pressure treatment in advance before photoirradiation.

(B-1-2-4. Cross-linking agent)

The continuous oil phase component includes a cross-linking agent.

The cross-linking agent is typically used for constructing a more three-dimensional molecular structure by linking polymer chains together. The selection of the kind and content of the cross-linking agent is influenced by structural characteristics, mechanical characteristics, and fluid treatment characteristics desired for a porous material to be obtained. The selection of the specific kind and content of the cross-linking agent is important for realizing a desired combination of the structural characteristics, mechanical characteristics, and fluid treatment characteristics of the porous material.

In the production method for the foam of the present invention, at least two kinds of cross-linking agents having different weight average molecular weights are each used as the cross-linking agent.

In the production method for the foam of the present invention, it is more preferred to use, as the cross-linking agent, "one or more kinds selected from a polyfunctional (meth) acrylate, a polyfunctional (meth)acrylamide, and a polymerization-reactive oligomer each having a weight average molecular weight of 800 or more" in combination with "one or more kinds selected from a polyfunctional (meth)acrylate and a polyfunctional (meth)acrylamide each having a weight average molecular weight of 500 or less." Herein, the polyfunctional (meth)acrylate specifically refers to a polyfunctional (meth)acrylate having at least two ethylenically unsaturated groups per molecule, and the polyfunctional (meth) acrylamide specifically refers to a polyfunctional (meth)acrylamide having at least two ethylenically unsaturated groups per molecule.

Examples of the polyfunctional (meth)acrylate include diacrylates, triacrylates, tetraacrylates, dimethacrylates, trimethacrylates, and tetramethacrylates.

Examples of the polyfunctional (meth)acrylamide include diacrylamides, triacrylamides, tetraacrylamides, dimethacrylamides, trimethacrylamides, and tetramethacrylamides.

The polyfunctional (meth) acrylate may be derived from, for example, a diol, a triol, a tetraol, or a bisphenol A derivative. Specifically, the polyfunctional (meth)acrylate may be derived from, for example, 1,10-decanediol, 1,8-octanediol, 1,6-hexane-diol, 1,4-butanediol, 1,3-butanediol, 1,4-but-2-enediol, ethylene glycol, diethylene glycol, trimethylolpropane, pentaerythritol, hydroquinone, catechol, resorcinol, triethylene glycol, polyethylene glycol, sorbitol, polypropylene glycol, polytetramethylene glycol, or a propylene oxide-modified product of bisphenol A.

The polyfunctional (meth) acrylamide may be derived from, for example, its corresponding diamine, triamine, or tetraamine.

Examples of the polymerization-reactive oligomer include urethane (meth)acrylate, epoxy (meth)acrylate, copolyester (meth)acrylate, and oligomer di(meth)acrylate. Hydrophobic urethane (meth)acrylate is preferred.

The weight average molecular weight of the polymerization-reactive oligomer is preferably 1,500 or more, more preferably 2,000 or more. The upper limit of the weight average molecular weight of the polymerization-reactive oligomer is not particularly limited, but is, for example, preferably 10,000 or less.

When the "one or more kinds selected from a polyfunctional (meth)acrylate, a polyfunctional (meth)acrylamide, and a polymerization-reactive oligomer each having a weight average molecular weight of 800 or more" and the "one or more kinds selected from a polyfunctional (meth)acrylate and a polyfunctional (meth)acrylamide each having a weight average molecular weight of 500 or less" are used in combination as the cross-linking agent, the lower limit value of the usage of the "one or more kinds selected from a polyfunctional (meth)acrylate, a polyfunctional (meth)acrylamide, and a polymerization-reactive oligomer each having a weight average molecular weight of 800 or more" is preferably 30 wt%, and the upper limit value thereof is preferably 100 wt%, more preferably 80 wt%, with respect to the total amount of the hydrophilic polyurethane-based polymer and the ethylenically unsaturated monomer in the continuous oil phase component. When the usage of the "one or more kinds selected from a polyfunctional (meth)acrylate, a polyfunctional (meth)acrylamide, and a polymerization-reactive oligomer each having a weight average molecular weight of 800 or more" is less than 30 wt% with respect to the total amount of the hydrophilic polyurethane-based polymer and the ethylenically unsaturated monomer in the continuous oil phase component, the cohesive strength of a foam to be obtained may lower, and it may become difficult to achieve both of toughness and flexibility. When the usage of the "one or more kinds selected from a polyfunctional (meth)acrylate, a polyfunctional (meth)acrylamide, and a polymerization-reactive oligomer each having a weight average molecular weight of 800 or more" is more than 100 wt% with respect to the total amount of the hydrophilic polyurethane-based polymer and the ethylenically unsaturated monomer in the continuous oil phase component, the emulsification stability of the W/O type emulsion lowers, with the result that a desired foam may not be obtained.

When the "one or more kinds selected from a polyfunctional (meth)acrylate, a polyfunctional (meth)acrylamide, and a polymerization-reactive oligomer each having a weight average molecular weight of 800 or more" and the "one or more kinds selected from a polyfunctional (meth)acrylate and a polyfunctional (meth)acrylamide each having a weight average molecular weight of 500 or less" are used in combination as the cross-linking agent, the lower limit value of the usage of the "one or more kinds selected from a polyfunctional (meth)acrylate and a polyfunctional (meth)acrylamide each having a weight average molecular weight of 500 or less" is preferably 1 wt%, more preferably 5 wt%, and the upper limit value thereof is preferably 30 wt%, more preferably 20 wt%, with respect to the total amount of the hydrophilic polyurethane-based polymer and the ethylenically unsaturated monomer in the continuous oil phase component. When the usage of the "one or more kinds selected from a polyfunctional (meth) acrylate and a polyfunctional (meth) acrylamide each having a weight average molecular weight of 500 or less" is less than 1 wt% with respect to the total amount of the hydrophilic polyurethane-based polymer and the ethylenically unsaturated monomer in the continuous oil phase component, heat resistance lowers, with the result that a cell structure may collapse owing to shrinkage in the step (IV) of dehydrating a water-containing polymer. When the usage of the "one or more kinds selected from a polyfunctional (meth)acrylate and a polyfunctional (meth) acrylamide each having a weight average molecular weight of 500 or less" is more than 30 wt% with respect to the total amount of the hydrophilic polyurethane-based polymer and the ethylenically unsaturated monomer in the continuous oil phase component, the toughness of a foam to be obtained lowers, with the result that the foam may exhibit brittleness.

The cross-linking agents may be used alone or in combination.

(B-1-2-5. Other components in continuous oil phase component)

The continuous oil phase component may include any appropriate other component in such a range that the effects of the present invention are not impaired. Typical preferred examples of such other component include a catalyst, an antioxidant, and an organic solvent. Such other components may be used alone or in combination.

Examples of the catalyst include a urethane reaction catalyst. Any appropriate catalyst may be adopted as the urethane reaction catalyst. Specific examples thereof include dibutyltin dilaurate.

Any appropriate content may be adopted as the content of the catalyst depending on a catalytic reaction of interest.

The catalysts may be used alone or in combination.

Examples of the antioxidant include a phenol-based antioxidant, a thioether-based antioxidant, and a phosphorus-based antioxidant.

Any appropriate content may be adopted as the content of the antioxidant in such a range that the effects of the present invention are not impaired.

The antioxidants may be used alone or in combination.

Any appropriate organic solvent may be adopted as the organic solvent in such a range that the effects of the present invention are not impaired.

Any appropriate content may be adopted as the content of the organic solvent in such a range that the effects of the present invention are not impaired.

The organic solvents may be used alone or in combination.

<B-2. Step (II) of forming W/O type emulsion into shape>>

In the step (II), any appropriate shape formation method may be adopted as the method of forming the W/O type emulsion into a shape. For example, there is given a method involving continuously supplying the W/O type emulsion on a moving belt and forming the emulsion into a flat sheet shape on the belt. Further, there is given a method involving applying the W/O type emulsion onto one surface of a thermoplastic resin film to form the emulsion into a shape.

In the step (II), when the method involving applying the W/O type emulsion onto one surface of a thermoplastic resin film to form the emulsion into a shape is adopted as the method of forming the W/O type emulsion into a shape, the application method is, for example, a method using a roll coater, a die coater, or a knife coater.

<<B-3. Step (III) of polymerizing W/O type emulsion formed into shape>>

In the step (III), any appropriate polymerization method may be adopted as the method of polymerizing the W/O type emulsion formed into a shape. For example, there are given: a method involving continuously supplying the W/O type emulsion onto a moving belt having a structure in which a belt surface of a belt conveyor is warmed with a heating apparatus and polymerizing the emulsion by heating while forming the emulsion into a flat sheet shape on the belt; and a method involving continuously supplying the W/O type emulsion onto a moving belt having a structure in which a belt surface of a belt conveyor is warmed by irradiation with active energy rays and polymerizing the emulsion by irradiation with active energy rays while forming the emulsion into a flat sheet shape on the belt.

When the polymerization is performed by heating, the lower limit value of a polymerization temperature (heating temperature) is preferably 23°C, more preferably 50°C, still more preferably 70°C, particularly preferably 80°C, most preferably 90°C, and the upper limit value thereof is preferably 150°C, more preferably 130°C, still more preferably 110°C. When the polymerization temperature is less than 23°C, it takes a long time to perform the polymerization, with the result that industrial productivity may lower. When the polymerization temperature is more than 150°C, the pore diameters of a foam to be obtained may become non-uniform, and the strength of the foam may lower. It should be noted that the polymerization temperature does not need to be kept constant, and for example, may be changed in two stages or a plurality of stages during the polymerization.

When the polymerization is performed by irradiation with active energy rays, examples of the active energy rays include UV light, visible light, and electron beams. The active energy rays are preferably UV light and visible light, more preferably visible to UV light having a wavelength of 200 nm to 800 nm. The W/O type emulsion has a strong tendency to scatter light. Hence, when the visible to UV light having a wavelength of 200 nm to 800 nm is used, the light can pass through the W/O type emulsion. Further, a photopolymerization initiator which can be activated by the light having a wavelength of 200 nm to 800 nm is easily available, and a source for the light is also easily available.

The lower limit value of the wavelength of the active energy rays is preferably 200 nm, more preferably 300 nm, and the upper limit value thereof is preferably 800 nm, more preferably 450 nm.

As a typical apparatus to be used in the irradiation with active energy rays, for example, there is given an apparatus having a spectrum distribution in a region having a wavelength of 300 to 400 nm as a UV lamp which can perform irradiation with UV light. Examples thereof include a chemical lamp, a Black Light lamp (manufactured by TOSHIBA LIGHTING & TECHNOLOGY CORPORATION, trade name), and a metal halide lamp.

An illuminance upon the irradiation with active energy rays may be set to any appropriate illuminance by regulating a distance from an irradiation apparatus to an object to be irradiated and a voltage. For example, according to the method disclosed in JP 2003-13015 A, irradiation with UV light in each step can be performed in a plurality of divided stages, thereby precisely regulating the efficiency of a polymerization reaction.

In order to prevent oxygen having a polymerization-inhibiting action from causing an adverse influence, for example, the irradiation with UV light is preferably performed under an inert gas atmosphere after a W/O type emulsion has been applied onto one surface of a substrate such as a thermoplastic resin film and formed into a shape, or by covering with a film which transmits UV light but blocks oxygen, e.g., polyethylene terephthalate coated with a releasing agent such as silicone, after a W/O type emulsion has been applied onto one surface of a substrate such as a thermoplastic resin film and formed into a shape.

Any appropriate thermoplastic resin film may be adopted as the thermoplastic resin film as long as the W/O type emulsion can be applied onto one surface of the film and formed into a shape. Examples of the thermoplastic resin film include plastic films and sheets made of polyester, an olefin-based resin, and polyvinyl chloride.

The inert gas atmosphere refers to an atmosphere in which oxygen in a photoirradiation zone has been replaced by inert gas. Accordingly, the amount of oxygen present in the inert gas atmosphere needs to be as small as possible, and is preferably 5,000 ppm or less in terms of oxygen concentration.

<<B-4. Step (IV) of dehydrating resultant water-containing polymer>>

In the step (IV), the resultant water-containing polymer is dehydrated. An aqueous phase component is present in a dispersed state in the water-containing polymer obtained in the step (III). The foam is obtained by removing the aqueous phase component through dehydration, followed by drying.

Any appropriate drying method may be adopted as the dehydration method in the step (IV). Examples of such drying method include vacuum drying, freeze drying, press drying, drying in a microwave oven, drying in a heat oven, drying with infrared rays, and combinations of these technologies.

<<<<C. Functional foam>>>>

The foam of the present invention is applicable to, for example, a functional foam having various functions. That is, the functional foam of the present invention includes the foam of the present invention. The functional foam of the present invention has a uniform fine-cell structure, is excellent in toughness and heat resistance, and can express various functions. As typical structures thereof, for example, there are given a functional foam formed of a foam, and a functional foam including a substrate (to be described later) between foams. Examples of such functional foam include a foamed pressure-sensitive adhesive, a foamed diffusive reflector, a chemical-resistant foam, a high-resilience foam, a high-airtight foam, a heat-resistant impact-absorbing foam, a liquid-absorbing open-cell porous material, a heat-resistant low-thermal conductive foam, a weather-resistant foam, and a water-repellent foam.

<<C-1. Foamed pressure-sensitive adhesive>>

The foam of the present invention is applicable to, for example, a foamed pressure-sensitive adhesive. That is, the foamed pressure-sensitive adhesive of the present invention includes the foam of the present invention. As typical structures thereof, for example, there are given a foamed pressure-sensitive adhesive formed of a foam, and a foamed pressure-sensitive adhesive including a substrate (to be described later) between foams.

The foamed pressure-sensitive adhesive of the present invention can express a sufficient adhesion by virtue of the fact that, when the foam of the present invention included in the foamed pressure-sensitive adhesive has surface openings as described above and the average pore diameter of each of the surface openings falls within the range, each of the surface openings plays a role as a micro absorbent.

The foamed pressure-sensitive adhesive of the present invention has an ordinary-state shearing adhesive strength of preferably 1 $N/cm^2$ or more, more preferably 3 $N/cm^2$ or more, still more preferably 5 $N/cm^2$ or more, yet still more preferably 7 $N/cm^2$ or more, particularly preferably 9 $N/cm^2$ or more, most preferably 10 $N/cm^2$ or more. When the ordinary-state shearing adhesive strength of the foamed pressure-sensitive adhesive of the present invention falls within the range, the foamed pressure-sensitive adhesive of the present invention can express a sufficient adhesion.

The foamed pressure-sensitive adhesive of the present invention has a 180° peel test force of preferably 1 N/25 mm or less, more preferably 0.8 N/25 mm or less, still more preferably 0.5 N/25 mm or less, particularly preferably 0.3 N/25 mm or less. When the 180° peel test force of the foamed pressure-sensitive adhesive of the present invention falls within the range, the foamed pressure-sensitive adhesive of the present invention can express an excellent effect of being able to be easily peeled off in spite of having a high adhesion as described above.

The foamed pressure-sensitive adhesive of the present invention has a 60°C retention force of preferably 0.5 mm or less, more preferably 0.4 mm or less, still more preferably 0.3 mm or less, particularly preferably 0.2mm or less. When the 60°C retention force of the foamed pressure-sensitive adhesive of the present invention falls within the range, the foamed pressure-sensitive adhesive of the present invention can achieve both of excellent heat resistance and a sufficient adhesion.

The foamed pressure-sensitive adhesive of the present invention has a 50% compression load of preferably 150 $N/cm^2$ or less, more preferably 120 $N/cm^2$ or less, still more preferably 100 $N/cm^2$ or less, particularly preferably 70 $N/cm^2$ or less, most preferably 50 $N/cm^2$ or less. When the 50% compression load of the foamed pressure-sensitive adhesive of the present invention falls within the range, the foamed pressure-sensitive adhesive of the present invention can express excellent flexibility.

The foamed pressure-sensitive adhesive of the present invention has a rate of dimensional change of preferably less than ±5%, more preferably ±3% or less, still more preferably ±1% or less, when stored at 125°C for 22 hours. When the rate of dimensional change in the foamed pressure-sensitive adhesive of the present invention stored at 125°C for 22 hours falls within the range, the foamed pressure-sensitive adhesive of the present invention can have excellent heat resistance.

The foamed pressure-sensitive adhesive of the present invention may have any appropriate shape. For practical purposes, the foamed pressure-sensitive adhesive of the present invention is preferably a foamed pressure-sensitive adhesive sheet having a sheet shape. When the foamed pressure-sensitive adhesive of the present invention is a foamed pressure-sensitive adhesive sheet, its thickness and long and short side lengths may each be any appropriate value.

The foamed pressure-sensitive adhesive of the present invention may contain any appropriate substrate in such a range that the effects of the present invention are not impaired. As a mode in which the foamed pressure-sensitive adhesive of the present invention contains a substrate, for example, there is given such a mode that a substrate layer is provided inside the foamed pressure-sensitive adhesive. Examples of such substrate include a fiber woven fabric, a fiber nonwoven fabric, a fiber laminated fabric, a fiber knitted fabric, a resin sheet, a metal foil sheet, and an inorganic fiber. Any appropriate thickness may be adopted as the thickness of the substrate depending onmaterials and purposes.

A woven fabric formed of any appropriate fiber may be adopted as the fiber woven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further, the fiber woven fabric may be subjected to metallic processing through plating, sputtering, or the like.

A nonwoven fabric formed of any appropriate fiber may be adopted as the fiber nonwoven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further, the fiber nonwoven fabric may be subjected to metallic processing through plating, sputtering, or the like. A more specific example of the fiber nonwoven fabric is a spunbond nonwoven fabric.

A laminated fabric formed of any appropriate fiber may be adopted as the fiber laminated fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further, the fiber laminated fabric may be subjected to metallic processing through plating, sputtering, or the like. A more specific example of the fiber laminated fabric is a polyester fiber laminated fabric.

A knitted fabric formed of any appropriate fiber may be adopted as the fiber knitted fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. Examples of the synthetic fiber include a fiber obtained by melt-spinning a thermoplastic fiber. Further, the fiber knitted fabric may be subjected to metallic processing through plating, sputtering, or the like.

A sheet formed of any appropriate resin may be adopted as the resin sheet. Examples of such resin include a thermoplastic resin. The resin sheet may be subjected to metallic processing through plating, sputtering, or the like.

A sheet formed of any appropriate metal foil may be adopted as the metal foil sheet.

Any appropriate inorganic fiber may be adopted as the inorganic fiber. Specific examples of such inorganic fiber include a glass fiber, a metal fiber, and a carbon fiber.

In the foamedpressure-sensitive adhesive of the present invention, when voids are present in the substrate, the same material as that for the foamed pressure-sensitive adhesive may be present in part or all of the voids.

The substrates may be used alone or in combination.

When the foamed pressure-sensitive adhesive of the present invention is formed of the foam of the present invention, the above-mentioned production method for the foam of the present invention is directly employed as a production method for the foamed pressure-sensitive adhesive of the present invention.

When the foamed pressure-sensitive adhesive of the present invention contains a substrate, as one preferred embodiment of the production method for the foamed pressure-sensitive adhesive of the present invention, there is given a mode of providing a foamed pressure-sensitive adhesive having a laminated structure of "substrate/foamed layer," the mode involving: applying a W/O type emulsion onto one surface of a substrate; polymerizing the W/O type emulsion by heating or irradiation with active energy rays under an inert gas atmosphere or in a state in which oxygen is blocked by covering with a UV-transmitting film coated with a releasing agent such as silicone to produce a water-containing polymer; and dehydrating the resultant water-containing polymer.

As another preferred embodiment of the production method for the foamed pressure-sensitive adhesive of the present invention, there is given a mode of providing a foamed pressure-sensitive adhesive having a laminated structure of "foamed layer/substrate/foamed layer," the mode involving: preparing two W/O type emulsion-applied sheets by applying a W/O type emulsion onto one surface of a UV-transmitting film coated with a releasing agent such as silicone; polymerizing the W/O type emulsion by heating or irradiation with active energy rays in a state in which a substrate is laminated on the applied surface of one out of the two W/O type emulsion-applied sheets and the other W/O type emulsion-applied sheet is laminated on the other surface of the laminated substrate so that its applied surface comes into contact with the substrate, thereby producing a water-containing polymer; and dehydrating the resultant water-containing polymer.

As a method of applying a W/O type emulsion onto one surface of a substrate or a UV-transmitting film coated with a releasing agent such as silicone, for example, there are given a roll coater, a die coater, and a knife coater.

<<C-2. Foamed diffusive reflector>>

The foam of the present invention is applicable to, for example, a foamed diffusive reflector. That is, the foamed diffusive reflector of the present invention includes the foam of the present invention. As typical structures thereof, for example, there are given a foamed diffusive reflector formed of a foam, and a foamed diffusive reflector including a substrate (to be described later) between foams.

The foamed diffusive reflector of the present invention can express very excellent diffuse reflection performance when the foam of the present invention included in the foamed diffusive reflector has surface openings as described above and the average pore diameter of each of the surface openings falls within the range.

The foamed diffusive reflector of the present invention, when the cell content of the foam of the present invention included in the foamed diffusive reflector falls within the range as described above, can express very excellent diffuse reflection performance and can have excellent flexibility and excellent heat resistance.

The foamed diffusive reflector of the present invention has a 50% compression load of preferably 300 N/cm$^2$ or less, more preferably 200 N/cm$^2$ or less, still more preferably 150 N/cm$^2$ or less, particularly preferably 100 N/cm$^2$ or less, most preferably 50 N/cm$^2$ or less. When the 50% compression load of the foamed diffusive reflector of the present invention falls within the range, the foamed diffusive reflector of the present invention can express excellent flexibility.

The foamed diffusive reflector of the present invention has a rate of dimensional change of preferably less than $\pm 5\%$, more preferably $\pm 3\%$ or less, still more preferably $\pm 1\%$ or less, when stored at 125°C for 22 hours. When the rate of dimensional change in the foamed diffusive reflector of the present invention stored at 125°C for 22 hours falls within the range, the foamed diffusive reflector of the present invention can have excellent heat resistance.

The foamed diffusive reflector of the present invention has preferably a diffuse reflectivity in the wavelength range of 400 nm to 500 nm of 90% or more, more preferably a diffuse reflectivity in the wavelength range of 400 nm to 500 nm of 95% or more, still more preferably a diffuse reflectivity in the wavelength range of 400 nm to 500 nm of 98% or more, particularly preferably a diffuse reflectivity in the wavelength range of 400 nm to 500 nm of 99% or more, most preferably a diffuse reflectivity in the wavelength range of 400 nm to 500 nm of 99.5% or more.

The foamed diffusive reflector of the present invention has preferably a diffuse reflectivity in the wavelength range of 400 nm to 700 nm of 90 % or more, more preferably a diffuse reflectivity in the wavelength range of 400 nm to 700 nm of 95% or more, still more preferably a diffuse reflectivity in the wavelength range of 400 nm to 700 nm of 98% or more, particularly preferably a diffuse reflectivity in the wavelength range of 400 nm to 700 nm of 99% or more, most preferably a diffuse reflectivity in the wavelength range of 400 nm to 700 nm of 99.5% or more.

By virtue of the fact that the foam included in the foamed diffusive reflector of the present invention includes a hydrophilic polyurethane-based polymer, a novel foamed diffusive reflector which has a precisely controlled cell structure, has a high cell content, has a number of precisely controlled fine surface openings, can express very excellent diffuse reflection performance, and has excellent flexibility and excellent heat resistance can be provided.

The foamed diffusive reflector of the present invention may have any appropriate shape. The thickness and lengths such as long and short side lengths of the foamed diffusive reflector of the present invention may each be any appropriate value.

The foamed diffusive reflector of the present invention may contain any appropriate substrate in such a range that the effects of the present invention are not impaired. The description of the substrate in the <<C-1. Foamed pressure-sensitive adhesive>> section is directly employed as the description of the substrate in the foamed diffusive reflector.

The description of the production method in the <<C-1. Foamed pressure-sensitive adhesive>> section is directly employed as the description of a production method for the foamed diffusive reflector of the present invention.

<<C-3. Chemical-resistant foam>>

The foam of the present invention is applicable to, for example, a chemical-resistant foam. That is, the chemical-resistant foam of the present invention includes the foam of the present invention. As typical structures thereof, for example, there are given a chemical-resistant foam formed of a foam, and a chemical-resistant foam including a substrate (to be described later) between foams.

The through-holes present between the adjacent spherical cells affect the physical properties of the chemical-resistant foam. For example, there is a tendency that, as the average pore diameter of each of the through-holes becomes smaller, the strength of the chemical-resistant foambecomes higher.

The chemical-resistant foam of the present invention, when the cell content of the foam of the present invention included in the chemical-resistant foam falls within the range as described above, can express excellent chemical resistance.

The chemical-resistant foam of the present invention has a 50% compression load of preferably 300 N/cm$^2$ or less, more preferably 200 N/cm$^2$ or less, still more preferably 150 N/cm$^2$ or less, particularly preferably 100 N/cm$^2$ or less, most preferably 50 N/cm$^2$ or less. When the 50% compression load of the chemical-resistant foam of the present invention falls within the range, the chemical-resistant foam of the present invention can express excellent flexibility.

The chemical-resistant foam of the present invention has a rate of change in average pore diameter of each of the spherical cells before and after an immersion test in any solvent of a 10% hydrochloric acid aqueous solution, acetone, and ethanol of 5% or less, preferably 4% or less, more preferably 3% or less, still more preferably 2% or less, particularly preferably 1% or less. When the rate of change in average pore diameter of each of the spherical cells before and after the immersion test in any solvent of the 10% hydrochloric acid aqueous solution, acetone, and ethanol of the chemical-resistant foam of the present invention falls within the range, the chemical-resistant foam of the present invention can express excellent chemical resistance. It should be noted that the immersion test is described in detail in Examples to be described later.

It is preferred that the chemical-resistant foam of the present invention have a rate of change in average pore diameter of each of the spherical cells before and after an immersion test in each and every solvent of a 10% hydrochloric acid aqueous solution, acetone, and ethanol of 5% or less, preferably 4% or less, more preferably 3% or less, still more preferably 2% or less, particularly preferably 1% or less. When the rate of change in average pore diameter of each of the spherical cells before and after the immersion test in each and every solvent of the 10% hydrochloric acid aqueous solution, acetone, and ethanol of the chemical-resistant foam of the present invention falls within the range, the chemical-resistant foam of the present invention can express more excellent chemical resistance.

The chemical-resistant foam of the present invention has a rate of change in 50% compression load before and after an immersion test in any solvent of a 10% hydrochloric acid aqueous solution, acetone, and ethanol of preferably 10% or less, more preferably 8% or less, still more preferably 6% or less, particularly preferably 5% or less, most preferably 4% or less. When the rate of change in 50% compression load before and after the immersion test in any solvent of the 10% hydrochloric acid aqueous solution, acetone, and ethanol of the chemical-resistant foam of the present invention falls within the range, the chemical-resistant foam of the present invention can express excellent chemical resistance.

The chemical-resistant foam of the present invention has a rate of change in 50% compression load before and after an immersion test in each and every solvent of a 10% hydrochloric acid aqueous solution, acetone, and ethanol of preferably 10% or less, more preferably 8% or less, still more preferably 6% or less, particularly preferably 5% or less, most preferably 4% or less. When the rate of change in 50% compression load before and after the immersion test in each and every solvent of the 10% hydrochloric acid aqueous solution, acetone, and ethanol of the chemical-resistant foam of the present invention falls within the range, the chemical-resistant foam of the present invention can express more excellent chemical resistance.

The chemical-resistant foam of the present invention has a rate of change in weight before and after an immersion test in any solvent of a 10% hydrochloric acid aqueous solution, acetone, and ethanol of preferably 5% or less, more preferably 4% or less, still more preferably 3% or less, particularly preferably 2% or less, most preferably 1% or less. When the rate of change in weight before and after the immersion test in any solvent of the 10% hydrochloric acid aqueous solution, acetone, and ethanol of the chemical-resistant foam of the present invention falls within the range, the chemical-resistant foam of the present invention can express excellent chemical resistance. Further, that the rate of change in weight before and after the immersion test in any solvent of the 10% hydrochloric acid aqueous solution, acetone, and ethanol of the chemical-resistant foam of the present invention falls within the range shows that the content of the surfactant in the chemical-resistant foam of the present invention is extremely small or is substantially zero.

The chemical-resistant foam of the present invention has a rate of change in weight before and after an immersion test in each and every solvent of a 10% hydrochloric acid aqueous solution, acetone, and ethanol of preferably 5% or less, more preferably 4% or less, still more preferably 3% or less, particularly preferably 2% or less, most preferably 1% or less. When the rate of change in weight before and after the immersion test in each and every solvent of the 10% hydrochloric acid aqueous solution, acetone, and ethanol of the chemical-resistant foam of the present invention falls within the range, the chemical-resistant foam of the present invention can express more excellent chemical resistance. Further, that the rate of change in weight before and after the immersion test in each and every solvent of the 10% hydrochloric acid aqueous solution, acetone, and ethanol of the chemical-resistant foam of the present invention falls within the range shows that the content of the surfactant in the chemical-resistant foam of the present invention is extremely small or is substantially zero.

The chemical-resistant foam of the present invention has a rate of dimensional change of preferably less than ±5%, more preferably ±3% or less, still more preferably ±1% or less, when stored at 125°C for 22 hours. When the rate of dimensional change in the chemical-resistant foam of the present invention stored at 125°C for 22 hours falls within the range, the chemical-resistant foam of the present invention can have excellent heat resistance.

By virtue of the fact that the foam included in the chemical-resistant foam of the present invention includes a hydrophilic polyurethane-based polymer, a novel chemical-resistant foam which has a precisely controlled cell structure, has a high cell content, has a number of precisely controlled fine surface openings, can express excellent chemical-resistance, and has excellent flexibility and excellent heat resistance can be provided.

The chemical-resistant foam of the present invention may have any appropriate shape. The thickness and lengths such as long and short side lengths of the chemical-resistant foam of the present invention may each be any appropriate value.

The chemical-resistant foam of the present invention may contain any appropriate substrate in such a range that the effects of the present invention are not impaired. The description of the substrate in the <<C-1. Foamed pressure-sensitive adhesive>> section is directly employed as the description of the substrate in the chemical-resistant foam.

The description of the production method in the <<C-1. Foamed pressure-sensitive adhesive>> section is directly employed as the description of a production method for the chemical-resistant foam of the present invention.

**<<C-4. High-resilience foam>>**

The foam of the present invention is applicable to, for example, a high-resilience foam. That is, the high-resilience foam of the present invention includes the foam of the present invention. As typical structures thereof, for example, there are given a high-resilience foam formed of a foam, and a high-resilience foam including a substrate (to be described later) between foams.

The high-resilience foam of the present invention has a 50% compression load of preferably 200 N/cm$^2$ or less, more preferably 150 N/cm$^2$ or less, still more preferably 100 N/cm$^2$ or less, particularly preferably 50 N/cm$^2$ or less, most preferably 20 N/cm$^2$ or less. The lower limit of the 50% compression load is preferably 10 N/cm$^2$. When the 50% compression load of the high-resilience foam of the present invention falls within the range, the high-resilience foam of the present invention can express excellent flexibility and cushioning property.

The high-resilience foam of the present invention can express a very high compression set recovery rate and can express extremely excellent compression set recoverability.

The high-resilience foam of the present invention, when stored at 80°C for 24 hours in a 50% compression state, then cooled to 23°C, and then released from the compression state, has a 50% compression set recovery rate after a lapse of 1 hour from the release of 80% or more, preferably 85% or more, more preferably 90% or more, still more preferably 95% or more. The upper limit of the 50% compression set recovery rate is preferably 100%. When the 50% compression set recovery rate of the high-resilience foam of the present invention falls within the range, the high-resilience foam of the present invention can express excellent compression set recoverability.

It should be noted that a specific measurement method for the 50% compression set recovery rate is described later.

The high-resilience foam of the present invention has a stress relaxation rate after 5 minutes in a 50% compression state of preferably 18% or less, more preferably 15% or less, still more preferably 12% or less, particularly preferably 10% or less. The lower limit of the stress relaxation rate after 5 minutes is preferably 2%. When the stress relaxation rate after 5 minutes of the high-resilience foam of the present invention falls within the range, the high-resilience foam of the present invention can express excellent flexibility and cushioning property and can express excellent compression set recoverability.

In this context, the stress relaxation rate after 5 minutes is calculated by the following equation. It should be noted that a specific measurement method for the stress relaxation rate after 5 minutes is described later.

Stress relaxation rate after 5 minutes (%)=[(Maximum stress value at the time of start of 50% compression state - Stress value after 5 minutes)/Maximum stress value at the time of start of 50% compression state]x100

The high-resilience foam of the present invention has a rate of dimensional change of preferably less than ±5%, more preferably ±3% or less, still more preferably ±1% or less, when stored at 125°C for 22 hours. When the rate of dimensional change in the high-resilience foam of the present invention stored at 125°C for 22 hours falls within the range, the high-resilience foam of the present invention can have excellent heat resistance.

The foam included in the high-resilience foam of the present invention preferably includes a hydrophilic polyurethane-based polymer. By virtue of the fact that the foam included in the high-resilience foam of the present invention includes a hydrophilic polyurethane-based polymer, a high-resilience foam which has a precisely controlled cell structure, has a high cell content, has a number of precisely controlled fine surface openings, is excellent in flexibility and cushioning property, is excellent in heat resistance, and is excellent in compression set recoverability can be provided.

The high-resilience foam of the present invention may have any appropriate shape. The thickness and lengths such as long and short side lengths of the high-resilience foam of the present invention may each be any appropriate value.

The high-resilience foam of the present invention may contain any appropriate substrate in such a range that the effects of the present invention are not impaired. The description of the substrate in the <<C-1.Foamedpressure-sensitive adhesive>> section is directly employed as the description of the substrate in the high-resilience foam.

The description of the production method in the <<C-1. Foamed pressure-sensitive adhesive>> section is directly employed as the description of a production method for the high-resilience foam of the present invention.

**<<C-5. High-airtight foam>>**

The foam of the present invention is applicable to, for example, a high-airtight foam. That is, the high-airtight foam of the present invention includes the foam of the present invention. As typical structures thereof, for example, there are given a high-airtight foam formed of a foam, and a high-airtight foam including a substrate (to be described later) between foams.

The high-airtight foam of the present invention has a 50% compression load of preferably 300 N/cm$^2$ or less, more preferably 200 N/cm$^2$ or less, still more preferably 100 N/cm$^2$ or less, particularly preferably 50 N/cm$^2$ or less, most preferably 20 N/cm$^2$ or less. The lower limit of the 50% compression load is preferably 10 N/cm$^2$. When the 50% compression load of the high-airtight foam of the present invention falls within the range, the high-airtight foam of the present invention can express excellent flexibility and cushioning property.

The high-airtight foam of the present invention has a 50% compression set recovery rate (at normal temperature) of preferably 80% or more, more preferably 85% or more, still more preferably 90% or more, particularly preferably 95% or more. The upper limit of the 50% compression set recovery rate (at normal temperature) is preferably 100%. When the 50% compression set recovery (at normal temperature) of the high-airtight foam of the present invention falls within the range, the high-airtight foam of the present invention can express excellent flexibility and cushioning property. It should be noted that a specific measurement method for the 50% compression set recovery rate (at normal temperature) is described later.

The high-airtight foam of the present invention can express very high airtightness. The high-airtight foam of the present invention has an airtightness of 4 kPa or more, preferably 5 kPa or more. That the high-airtight foam of the present invention has an airtightness of 5 kPa or more means that the high-airtight foam of the present invention has very excellent airtightness. The upper limit of the airtightness of the high-airtight foam of the present invention is preferably 5.5 kPa.

In this context, the airtightness in the present invention is represented by a differential pressure inside and outside a foam when the foam is compressed by 30%. That is, a value determined by the following equation is defined as airtightness.

Airtightness (kPa)=Internal pressure of foam when compressed by 30% - External pressure of foam when compressed by 30%

It should be noted that a specific measurement method for the airtightness is described later.

The high-airtight foam of the present invention can express very high dustproofness.

The high-airtight foam of the present invention has a dustproofness index of preferably 90% or more, more preferably 93% or more, still more preferably 95% or more, yet still more preferably 97% or more, particularly preferably 99% or more, most preferably substantially 100%. That the dustproofness index of the high-airtight foam of the present invention is 90% or more means that the high-airtight foam of the present invention has very excellent dustproofness.

It should be noted that a specific measurement method for the dustproofness index is described later.

The high-airtight foam of the present invention has a foam passing-through particle total area in a dynamic dustproofness evaluation test of preferably 1,500 (PixelxPixel) or less, more preferably 1,000 (PixelxPixel) or less, still more preferably 700 (PixelxPixel) or less, particularly preferably 300 (PixelxPixel) or less, most preferably 100 (PixelxPixel) or less. When the foam passing-through particle total area in the dynamic dustproofness evaluation test falls within the range, dustproofness can be expressed at a very excellent level. In particular, when the foam passing-through particle total area in the dynamic dustproofness evaluation test is 100 (PixelxPixel) or less, dustproofness can be expressed at an extremely high level.

It should be noted that a specific measurement method for the foam passing-through particle total area in the dynamic dustproofness evaluation test is described later.

The high-airtight foam of the present invention has a rate of dimensional change of preferably less than ±5%, more preferably ±3% or less, still more preferably ±1% or less, when stored at 125°C for 22 hours. When the rate of dimensional change in the high-airtight foam of the present invention stored at 125°C for 22 hours falls within the range, the high-airtight foam of the present invention can have excellent heat resistance.

The foam included in the high-airtight foam of the present invention preferably includes a hydrophilic polyurethane-based polymer. By virtue of the fact that the foam included in the high-airtight foam of the present invention includes a hydrophilic polyurethane-based polymer, a high-airtight foam which has a precisely controlled cell structure, has a high cell content, has a number of precisely controlled fine surface openings, is excellent in flexibility and cushioning property, and is excellent in airtightness and dustproofness can be provided.

The high-airtight foam of the present invention may have any appropriate shape. The thickness and lengths such as long and short side lengths of the high-airtight foam of the present invention may each be any appropriate value.

The high-airtight foam of the present invention may contain any appropriate substrate in such a range that the effects of the present invention are not impaired. The description of the substrate in the <<C-1. Foamed pressure-sensitive adhesive>> section is directly employed as the description of the substrate in the high-airtight foam.

The description of the production method in the <<C-1. Foamed pressure-sensitive adhesive>> section is directly employed as the description of a production method for the high-airtight foam of the present invention.

<<C-6. Heat-resistant impact-absorbing foam>>

The foam of the present invention is applicable to, for example, a heat-resistant impact-absorbing foam. That is, the heat-resistant impact-absorbing foam of the present invention includes the foam of the present invention. As typical structures thereof, for example, there are given a heat-resistant impact-absorbing foam formed of a foam, and a heat-resistant impact-absorbing foam including a substrate (to be described later) between foams.

The heat-resistant impact-absorbing foam of the present invention has very excellent impact absorbability.

The heat-resistant impact-absorbing foam of the present invention has an impact absorptivity in a pendulum test of 60% or more, preferably 65% or more, more preferably 70% or more, at a compression rate of 40%. The upper limit of the impact absorptivity is preferably 100% at a compression rate of 40%. That the impact absorptivity of the heat-resistant impact-absorbing foam of the present invention at a compression rate of 40% falls within the range means that the heat-resistant impact-absorbing foam of the present invention has very excellent impact absorbability.

The heat-resistant impact-absorbing foam of the present invention has an impact absorptivity in a pendulum test of preferably 60% or more, more preferably 65% or more, still more preferably 70% or more, at a compression rate of 5%. The upper limit of the impact absorptivity is preferably 100% at a compression rate of 5%. That the impact absorptivity of the heat-resistant impact-absorbing foam of the present invention at a compression rate of 5% falls within the range means that the heat-resistant impact-absorbing foam of the present invention has very excellent impact absorbability.

The heat-resistant impact-absorbing foam of the present invention has an impact absorptivity in a pendulum test of preferably 60% or more, more preferably 65% or more, still more preferably 70% or more, at a compression rate of 20%. The upper limit of the impact absorptivity is preferably 100% at a compression rate of 20%. That the impact absorptivity of the heat-resistant impact-absorbing foam of the present invention at a compression rate of 20% falls within the range means that the heat-resistant impact-absorbing foam of the present invention has very excellent impact absorbability.

The heat-resistant impact-absorbing foam of the present invention has an impact absorptivity in a pendulum test of preferably 60% or more, more preferably 65% or more, still more preferably 70% or more, at a compression rate of 60%. The upper limit of the impact absorptivity is preferably 100% at a compression rate of 60%. That the impact absorptivity of the heat-resistant impact-absorbing foam of the present invention at a compression rate of 60% falls within the range means that the heat-resistant impact-absorbing foam of the present invention has very excellent impact absorbability.

The heat-resistant impact-absorbing foam of the present invention has an impact absorptivity in a pendulum test of preferably 50% or more, more preferably 55% or more, still more preferably 60% or more, at a compression rate of 80%. The upper limit of the impact absorptivity is preferably 100% at a compression rate of 80%. That the impact absorptivity of the heat-resistant impact-absorbing foam of the present invention at a compression rate of 80% falls within the range means that the heat-resistant impact-absorbing foam of the present invention has very excellent impact absorbability.

It should be noted that a specific measurement method for the impact absorptivity in the pendulum test is described later.

The heat-resistant impact-absorbing foam of the present invention has a 50% compression load of preferably 50 $N/cm^2$ or less, more preferably 45 $N/cm^2$ or less, still more preferably 40 $N/cm^2$ or less, particularly preferably 35 $N/cm^2$ or less, most preferably 30 $N/cm^2$ or less. The lower limit of the 50% compression load is preferably 10 $N/cm^2$. When the 50% compression load of the heat-resistant impact-absorbing foam of the present invention falls within the range, the heat-resistant impact-absorbing foam of the present invention can express excellent flexibility and cushioning property.

The heat-resistant impact-absorbing foam of the present invention has a rate of change in 50% compression load of preferably ±10% or less, more preferably ±9% or less, still more preferably ±8% or less, when stored at 125°C for 22 hours. When the rate of change in 50% compression load in the heat-resistant impact-absorbing foam of the present invention stored at 125°C for 22 hours falls within the range, the heat-resistant impact-absorbing foam of the present invention can have excellent heat resistance.

The heat-resistant impact-absorbing foam of the present invention has a rate of dimensional change of preferably less than ±5%, more preferably ±3% or less, still more preferably ±1% or less, when stored at 125°C for 22 hours. When the rate of dimensional change in the heat-resistant impact-absorbing foam of the present invention stored 125°C for 22 hours falls within the range, the heat-resistant impact-absorbing foam of the present invention can have excellent heat resistance.

The foam included in the heat-resistant impact-absorbing foam of the present invention preferably includes a hydrophilic polyurethane-based polymer. By virtue of the fact that the foam included in the heat-resistant impact-absorbing foam of the present invention includes a hydrophilic polyurethane-based polymer, a heat-resistant impact-absorbing foam which has a precisely controlled cell structure, has a high cell content, has a number of precisely controlled fine surface openings, is excellent in heat resistance, and is excellent in impact absorbability can be provided.

The heat-resistant impact-absorbing foam of the present invention may have any appropriate shape. The thickness and lengths such as long and short side lengths of the heat-resistant impact-absorbing foam of the present invention may each be any appropriate value.

The heat-resistant impact-absorbing foam of the present invention may contain any appropriate substrate in such a range that the effects of the present invention are not impaired. The description of the substrate in the <<C-1. Foamed pressure-sensitive adhesive>> section is directly employed as the description of the substrate in the heat-resistant impact-absorbing foam.

The description of the production method in the <<C-1. Foamed pressure-sensitive adhesive>> section is directly employed as the description of a production method for the heat-resistant impact-absorbing foam of the present invention.

<<C-7. Liquid-absorbing open-cell porous material>>

The foam of the present invention is applicable to, for example, a liquid-absorbing open-cell porous material. That is, the liquid-absorbing open-cell porous material of the present invention includes the foam of the present invention. As typical structures thereof, for example, there are given a liquid-absorbing open-cell porous material formed of a foam, and a liquid-absorbing open-cell porous material including a substrate (to be described later) between foams.

The liquid-absorbing open-cell porous material of the present invention is excellent in liquid absorbability for both of oil and water.

The liquid-absorbing open-cell porous material of the present invention has a liquid absorptivity of 100 wt% or more for each of oil and water.

The liquid-absorbing open-cell porous material of the present invention has an oil absorptivity of preferably 150 wt% or more, more preferably 200 wt% or more, still more preferably 250 wt% or more, particularly preferably 300 wt% or more. The upper limit of the oil absorptivity is not particularly limited and is preferably as large as possible. In reality, however, the upper limit is preferably 200 wt%.

The liquid-absorbing open-cell porous material of the present invention has a water absorptivity of preferably 120 wt% or more, more preferably 150 wt% or more, still more preferably 170 wt% or more, particularly preferably 200 wt% or more. The upper limit of the water absorptivity is not particularly limited and is preferably as large as possible. In reality, however, the upper limit is preferably 150 wt%.

The liquid-absorbing open-cell porous material of the present invention has a very high liquid absorptivity for each of oil and water, and hence can absorb oil and water continuously. That is, for example, the liquid-absorbing open-cell porous material first absorbs water at a liquid absorptivity of 100 wt% or more, and subsequently (without releasing the absorbed liquid) can absorb oil at a liquid absorptivity of 100 wt% or more. In this case, substantially no separation of water absorbed in advance occurs at the time of the oil absorption.

The possible reason why the liquid absorptivity for each of oil and water in the liquid-absorbing open-cell porous material of the present invention is very high as described above is that the liquid-absorbing open-cell porous material of the present invention has a porous structure controlled in an extremely precise manner.

It should be noted that a specific measurement method for the liquid absorptivity is described later.

The liquid-absorbing open-cell porous material of the present invention preferably has very excellent liquid absorption recoverability. Specifically, when the liquid-absorbing open-cell porous material first absorbs a liquid at a liquid absorptivity of 100 wt% or more (first liquid absorption), releases the absorbed liquid, and then absorbs a liquid again (second liquid absorption), the material can absorb the liquid at a level equal to that of the liquid absorptivity in the first liquid absorption.

That is, the liquid-absorbing open-cell porous material of the present invention, when caused to absorb a liquid L at a liquid absorptivity of A wt%, then subjected to heating drying to release the absorbed liquid L, and then caused to absorb the liquid L again, has a liquid absorptivity of preferably 0.9A wt% or more, more preferably 0.92A wt% or more, still more preferably 0.95A wt% or more, particularly preferably 0.97A wt% or more, most preferably 0.99A wt% or more. The upper limit value of the liquid absorptivity when the material is caused to absorb the liquid L again is generally A wt% but may be about 1.1A wt% depending on conditions.

The possible reason why the liquid-absorbing open-cell porous material of the present invention preferably has very excellent liquid absorption recoverability as described above is that the liquid-absorbing open-cell porous material of the present invention has a porous structure controlled in an extremely precise manner.

The liquid-absorbing open-cell porous material of the present invention has a rate of dimensional change after oil absorption of preferably 50% or less, more preferably 40% or less, still more preferably 30% or less. The lower limit value of the rate of dimensional change after oil absorption is preferably 0%. When the rate of dimensional change after oil absorption falls within the range, volume expansion due to liquid absorption can be reduced and problems such as liquid back can be suppressed.

The liquid-absorbing open-cell porous material of the present invention has a rate of dimensional change after water absorption of preferably 10% or less, more preferably 7% or less, still more preferably 5% or less, particularly preferably 3% or less. The lower limit value of the rate of dimensional change after water absorption is preferably 0%. When the rate of dimensional change after water absorption falls within the range, volume expansion due to liquid absorption can be reduced and problems such as liquid back can be suppressed.

The liquid-absorbing open-cell porous material of the present invention has a rate of dimensional change of preferably less than ±5%, more preferably ±3% or less, still more preferably ±1% or less, when stored at 125°C for 22 hours. When the rate of dimensional change in the liquid-absorbing open-cell porous material of the present invention stored 125°C for 22 hours falls within the range, the liquid-absorbing open-cell porous material of the present invention can have excellent heat resistance.

When the cell content of the foam included in the liquid-absorbing open-cell porous material of the present invention falls within the range, a liquid-absorbing open-cell porous material which is excellent in heat resistance and is excellent in liquid absorbability for both of oil and water can be provided.

The foam included in the liquid-absorbing open-cell porous material of the present invention preferably includes a hydrophilic polyurethane-based polymer. By virtue of the fact that the foam included in the liquid-absorbing open-cell porous material of the present invention includes a hydrophilic polyurethane-based polymer, a liquid-absorbing open-cell porous material which has a precisely controlled cell structure, has a high cell content, has a number of precisely controlled fine surface openings, is excellent in heat resistance, and is excellent in liquid absorbability for both of oil and water can be provided.

The liquid-absorbing open-cell porous material of the present invention may have any appropriate shape. The thickness and lengths such as long and short side lengths of the liquid-absorbing open-cell porous material of the present invention may each be any appropriate value.

The liquid-absorbing open-cell porous material of the present invention may contain any appropriate substrate in such a range that the effects of the present invention are not impaired. The description of the substrate in the <<C-1. Foamed pressure-sensitive adhesive>> section is directly employed as the description of the substrate in the liquid-absorbing open-cell porous material.

The description of the production method in the <<C-1. Foamed pressure-sensitive adhesive>> section is directly employed as the description of a production method for the liquid-absorbing open-cell porous material of the present invention.

<<C-8. Heat-resistant low-thermal conductive foam>>

The foam of the present invention is applicable to, for example, a heat-resistant low-thermal conductive foam. That is, the heat-resistant low-thermal conductive foam of the present invention includes the foam of the present invention. As typical structures thereof, for example, there are given a heat-resistant low-thermal conductive foam formed of a foam, and a heat-resistant low-thermal conductive foam including a substrate (to be described later) between foams.

The heat-resistant low-thermal conductive foam of the present invention has very excellent low thermal conductivity.

The heat-resistant low-thermal conductive foam of the present invention has a thermal conductivity, which is measured in conformity with ASTM-D5470, of 0.1 W/m·K or less, preferably 0.09 W/m·K or less, more preferably 0.08 W/m·K or less, at a compression rate of 20%. The lower limit of the thermal conductivity is preferably 0.024 W/m·K at a compression rate of 20%. The fact that the thermal conductivity of the heat-resistant low-thermal conductive foam of the present invention at a compression rate of 20% falls within the range means that the heat-resistant low-thermal conductive foam of the present invention has very excellent low thermal conductivity.

The heat-resistant low-thermal conductive foam of the present invention has a thermal conductivity, which is measured in conformity with ASTM-D5470, of 0.1 W/m·K or less, preferably 0.09 W/m·K or less, more preferably 0.08 W/m·K or less, at a compression rate of 5%. The lower limit of the thermal conductivity is preferably 0.024 W/m·K at a compression rate of 5%. The fact that the thermal conductivity of the heat-resistant low-thermal conductive foam of the present invention at a compression rate of 5% falls within the range means that the heat-resistant low-thermal conductive foam of the present invention has very excellent low thermal conductivity.

The heat-resistant low-thermal conductive foam of the present invention has a thermal conductivity, which is measured in conformity with ASTM-D5470, of 0.1 W/m·K or less, preferably 0.095 W/m·K or less, more preferably 0.09 W/m·K or less, at a compression rate of 40%. The lower limit of the thermal conductivity is preferably 0.024 W/m·K at a compression rate of 40%. The fact that the thermal conductivity of the heat-resistant low-thermal conductive foam of the present invention at a compression rate of 40% falls within the range means that the heat-resistant low-thermal conductive foam of the present invention has very excellent low thermal conductivity.

It should be noted that a specific measurement method for the thermal conductivity is described later.

The heat-resistant low-thermal conductive foam of the present invention has a 50% compression load of preferably 50 N/cm$^2$ or less, more preferably 45 N/cm$^2$ or less, still more preferably 40 N/cm$^2$ or less, particularly preferably 35 N/cm$^2$ or less. The lower limit of the 50% compression load is preferably 10 N/cm$^2$. When the 50% compression load of the heat-resistant low-thermal conductive foam of the present invention falls within the range, the heat-resistant low-thermal conductive foam of the present invention can express excellent flexibility and cushioning property.

The heat-resistant low-thermal conductive foam of the present invention has a rate of change in 50% compression load of preferably ±10% or less, more preferably ±9% or less, still more preferably ±8% or less, when stored at 125°C for 22 hours. When the rate of change in 50% compression load in the heat-resistant low-thermal conductive foam of the present invention stored at 125°C for 22 hours falls within the range, the heat-resistant low-thermal conductive foam of the present invention can have excellent heat resistance.

The heat-resistant low-thermal conductive foam of the present invention has a rate of dimensional change of preferably less than ±5%, more preferably ±3% or less, still more preferably ±1% or less, when stored at 125°C for 22 hours. When the rate of dimensional change in the heat-resistant low-thermal conductive foam of the present invention stored at 125°C for 22 hours falls within the range, the heat-resistant low-thermal conductive foam of the present invention can have excellent heat resistance.

The foam included in the heat-resistant low-thermal conductive foam of the present invention preferably includes a hydrophilic polyurethane-based polymer. By virtue of the fact that the foam included in the heat-resistant low-thermal conductive foam of the present invention includes a hydrophilic polyurethane-based polymer, a heat-resistant low-thermal conductive foam which has a precisely controlled cell structure, has a high cell content, has a number of precisely controlled fine surface openings, is excellent in heat resistance, and is excellent in low thermal conductivity can be provided.

The heat-resistant low-thermal conductive foam of the present invention may have any appropriate shape. The thickness and lengths such as long and short side lengths of the heat-resistant low-thermal conductive foam of the present invention may each be any appropriate value.

The heat-resistant low-thermal conductive foam of the present invention may contain any appropriate substrate in such a range that the effects of the present invention are not impaired. The description of the substrate in the <<C-1. Foamed pressure-sensitive adhesive>> section is directly employed as the description of the substrate in the heat-resistant low-thermal conductive foam.

The description of the production method in the <<C-1. Foamed pressure-sensitive adhesive>> section is directly employed as the description of a production method for the heat-resistant low-thermal conductive foam of the present invention.

<<C-9. Weather-resistant foam>>

The foam of the present invention is applicable to, for example, a weather-resistant foam. That is, the weather-resistant foam of the present invention includes the foam of the present invention. As typical structures thereof, for example, there are given a weather-resistant foam formed of a foam, and a weather-resistant foam including a substrate (to be described later) between foams.

The weather-resistant foam of the present invention can express excellent diffuse reflection performance. The weather-resistant foam of the present invention has a diffuse reflectivity at a wavelength of 550 nm of preferably 85% or more, more preferably 90% or more, still more preferably 95% or more, particularly preferably 98% or more. The upper limit value of the diffuse reflectivity at a wavelength of 550 nm of the weather-resistant foam of the present invention is not particularly limited and is, for example, 100% or less (provided that, in a sample showing a reflectivity equal to or higher than that of a standard plate to be used in the measurement of the diffuse reflectivity, the measured value is more than 100% in some cases).

The weather-resistant foam of the present invention can express excellent light resistance. The weather-resistant foam of the present invention, when irradiated with light at an illuminance of 90 mW/cm$^2$ through use of a metal halide lamp, has a reduction in diffuse reflectivity before and after the irradiation at a wavelength of 550 nm of 20% or less, preferably 10% or less, more preferably 5% or less, still more preferably 3% or less, particularly preferably 2% or less, most preferably 1% or less.

Further, the weather-resistant foam of the present invention, when irradiated with light at an illuminance of 90 mW/cm$^2$ through use of a metal halide lamp, has a color difference ∆E before and after the irradiation of 5 or less, preferably 3 or less, more preferably 2 or less, still more preferably 1.5 or less, particularly preferably 1 or less. The weather-resistant foam of the present invention can express very excellent light resistance by the virtue of the fact that, when the weather-resistant foam is irradiated with light at an illuminance of 90 mW/cm$^2$ through use of a metal halide lamp, the reduction in diffuse reflectivity before and after the irradiation at a wavelength of 550 nm falls within the range and the color difference ∆E before and after the irradiation falls within the range.

When the weather-resistant foam of the present invention is irradiated with light at an illuminance of 90 mW/cm$^2$ through use of a metal halide lamp, the wavelength at which the reduction in diffuse reflectivity before and after the irradiation is 5% or less is preferably a visible light region (e.g., a wavelength of 400 nm to 700 nm).

The foam included in the weather-resistant foam of the present invention includes a hydrophilic polyurethane-based polymer. By virtue of the fact that the foam included in the weather-resistant foam of the present invention includes a hydrophilic polyurethane-based polymer, a novel weather-resistant foam which has a precisely controlled cell structure, preferably has a high cell content, has a number of precisely controlled fine surface openings, thus can express additionally excellent flexibility, and can express excellent diffuse reflection performance can be provided.

The weather-resistant foam of the present invention may have any appropriate shape. The thickness and lengths such as long and short side lengths of the weather-resistant foam of the present invention may each be any appropriate value.

The weather-resistant foam of the present invention preferably includes a light stabilizing agent in the foam in order to express more excellent weather resistance.

The weather-resistant foam of the present invention may contain any appropriate substrate in such a range that the effects of the present invention are not impaired. The description of the substrate in the <<C-1. Foamedpressure-sensitive adhesive>> section is directly employed as the description of the substrate in the weather-resistant foam.

The description of the production method in the <<C-1. Foamed pressure-sensitive adhesive>> section is directly employed as the description of a production method for the weather-resistant foam of the present invention.

<<C-10. Water-repellent foam>>

The foam of the present invention is applicable to, for example, a water-repellent foam. That is, the water-repellent foam of the present invention includes the foam of the present invention. As typical structures thereof, for example, there are given a water-repellent foam formed of a foam, and a water-repellent foam including a substrate (to be described later) between foams.

In one preferred embodiment of the water-repellent foam of the present invention, a water-repellent layer is provided on at least one surface side thereof.

In one preferred embodiment of the water-repellent foam of the present invention, a water-repellent layer is provided on at least part of pore inner walls of surface openings.

The water-repellent foam of the present invention has a shearing adhesive strength of 1 $N/cm^2$ or more, preferably 3 $N/cm^2$ or more, more preferably 5 $N/cm^2$ or more, still more preferably 7 $N/cm^2$ or more, particularly preferably 9$N/cm^2$ or more, mostpreferably 10 $N/cm^2$ or more. When the shearing adhesive strength of the water-repellent foam of the present invention falls within the range, the water-repellent foam of the present invention can express a sufficient adhesion.

The water-repellent foam of the present invention has a 50% compression load of preferably 300 $N/cm^2$ or less, more preferably 150 $N/cm^2$ or less, still more preferably 100 $N/cm^2$ or less, particularly preferably 70 $N/cm^2$ or less, most preferably 50 $N/cm^2$ or less. When the 50% compression load of the water-repellent foam of the present invention falls within the range, the water-repellent foam of the present invention can express excellent flexibility.

The water-repellent foam of the present invention has a water absorptivity, which is defined by the following equation, of 1.0 times or less, preferably 0.5 times or less, more preferably 0.3 times or less, still more preferably 0.2 times or less, particularly preferably 0.1 times or less. When the water absorptivity in the water-repellent foam of the present invention falls within the range, the water-repellent foam of the present invention can have excellent water repellency.

$$\texttt{Water absorptivity (times)=(W1-W0)/W0}$$

W0: Initial weight of a sample punched into a piece having a size of 25 mm by 25 mm.

W1: Weight of the sample, which has been measured for its W0, measured 10 minutes after the following procedure: leaving the sample to stand for 24 hours while completely immersing it in ion-exchanged water; taking out the sample; and then wiping water off a surface of the sample.

Any appropriate material may be adopted as a material for the foam included in the water-repellent foam of the present invention as long as the material provides a water-repellent foam including a foam having an open-cell structure in which through-holes are present between adjacent spherical cells, the foam including a hydrophilic polyurethane-based polymer and having a water absorptivity of 1.0 times or less and a shearing adhesive strength of 1 $N/cm^2$ or more.

Any appropriate layer may be adopted as the water-repellent layer which may be included in the water-repellent foam of the present invention as long as the layer can express water repellency.

The water-repellent layer preferably includes a water-repellent compound. The content of the water-repellent compound in the water-repellent layer is preferably 0.01 to 100 wt%, more preferably 0.01 to 90 wt%, still more preferably 0.01 to 80 wt%.

Any appropriate water-repellent compound may be adopted as the water-repellent compound. Examples of such water-repellent compound include at least one kind selected from a silicone-based compound and a fluorine-based compound.

As the silicone-based compound, there is given a silicone-based compound which maybe used as a water-repellent agent. Such silicone-based compound is, for example, a resin having a main skeleton having a siloxane bond. Specific examples of the silicone-based compound include dimethylpolysiloxane, methylhydropolysiloxane, a silicone oil, a silicone varnish, and a silicone-modified acrylic copolymer shown in JP 09-111185 A.

As the fluorine-based compound, there is given a fluorine-based compound which may be used as a water-repellent agent. Such fluorine-based compound is, for example, a compound having a fluorine-containing chain, or a resin obtained by polymerizing a fluorine-containing olefin. Specific examples of the fluorine-based compound include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The water-repellent compounds may be used in the water-repellent layer alone or in combination.

The water-repellent layer may further contain any appropriate additive depending on purposes.

Examples of the additive include a photopolymerization initiator, a silane coupling agent, a release agent, a curing agent, a curing accelerator, a diluent, an antioxidant, a modifying agent, a surfactant, a dye, a pigment, a discoloration preventing agent, a UV absorbing agent, a softening agent, a stabilizer, a plasticizer, andanantifoamingagent. The kinds, number, and amounts of additives which may be contained in the water-repellent layer may be appropriately set depending on purposes.

The water-repellent layer may be provided on at least one surface side of the water-repellent foamof the present invention. Further, the water-repellent layer may be preferably provided on at least part of pore inner walls of surface openings. The water-repellent layer may be of a single layer or may be of two or more layers.

The water-repellent layer has a thickness of preferably 1 to 500 nm, more preferably 1 to 100 nm. When the thickness of the water-repellent layer falls within the range, excellent water repellency canbe expressed without any impairment of the flexibility of the water-repellent foam of the present invention.

When the water-repellent foam of the present invention has a water-repellent layer, the water-repellent layer may be formed by any appropriate method.

The water-repellent layer may be preferably formed by applying a water-repellent layer formation material including the water-repellent compound as described above onto a surface of the water-repellent foam. Examples of the water-repellent layer formationmaterial include a commercially available water-repellent treatment agent. As a method of applying the water-repellent layer formation material, for example, there are given dipping, a spray gun, and spin coating.

The water-repellent foam of the present invention may have any appropriate shape. For practical purposes, the water-repellent foam of the present invention is preferably a foam sheet having a sheet shape. When the water-repellent foam of the present invention is a foam sheet having a sheet shape, its thickness and long and short side lengths may each be any appropriate value.

The water-repellent foam of the present invention may contain any appropriate substrate in such a range that the effects of the present invention are not impaired. The description of the substrate in the <<C-1. Foamed pressure-sensitive adhesive>> section is directly employed as the description of the substrate in the water-repellent foam.

The description of the production method in the <<C-1. Foamed pressure-sensitive adhesive>> section is directly employed as the description of a production method for the water-repellent foam of the present invention.

Examples

Hereinafter, the present invention is described by way of examples. However, the present invention is not limited by these examples. It should be noted that normal temperature means 23°C.

(Measurement of molecular weight)

A weight average molecular weight was determined by gel permeation chromatography (GPC).
Apparatus: "HLC-8020" manufactured by Tosoh Corporation
Column: "TSKgel GMH$_{HR}$-H (20) "manufactured by Tosoh Corporation
Solvent: Tetrahydrofuran
Standard substance: Polystyrene

(Static storage stability of emulsion)

About 30 g of a prepared W/O type emulsion were weighed in a container having a volume of 50 ml. The emulsion was observed for its generation status of free water from immediately after the preparation, and evaluated for its static storage stability at normal temperature.
O: No free water was generated even after 24 hours
△: A slight amount of free water was generated within 1 hour
✕: Free water was generated within 1 hour

(Measurement of average pore diameter)

A produced foam sheet was cut in its thickness direction with a microtome cutter to prepare a sample for measurement. Images of the cut surface of the sample for measurement were taken at magnifications of 800 to 5, 000 with a low-vacuum scanning electron microscope (manufactured by Hitachi, Ltd., S-3400N). Through use of the resultant images, the long axis lengths of about 30 largest pores were measured for each of spherical cells, through-holes, and surface openings in any appropriate range, and an average of the measured values was defined as an average pore diameter.

(Variance of pore diameters)

A produced foam sheet was cut in its thickness direction with a microtome cutter to prepare a sample for measurement. Images of the cut surface of the sample for measurement were taken at magnifications of 800 to 5, 000 with a low-vacuum scanning electron microscope (manufactured by Hitachi, Ltd., S-3400N). Through use of the resultant images, the long axis lengths of about 30 largest pores were measured for each of spherical cells, through-holes, and surface openings in any appropriate range, and an average of the measured values was defined as an average pore diameter. The variance of pore diameters for each of the spherical cells, through-holes, and surface openings was calculated by Equation 1 through use of the determined average pore diameter value.

$$\texttt{Variance=Sum of (squares of (data - average))÷number}$$

$$\texttt{····Equation 1}$$

(Standard deviation of pore diameters)

A produced foam sheet was cut in its thickness direction with a microtome cutter to prepare a sample for measurement. Images of the cut surface of the sample for measurement were taken at magnifications of 800 to 5,000 with a low-vacuum scanning electron microscope (manufactured by Hitachi, Ltd., S-3400N). Through use of the resultant images, the long axis lengths of about 30 largest pores were measured for each of spherical cells, through-holes, and surface openings in any appropriate range, and an average of the measured values was defined as an average pore diameter. The standard deviation of pore diameters for each of the spherical cells, through-holes, and surface openings was calculated by Equation 2 through use of the variance calculated from the average pore diameter value.

$$\texttt{Standard deviation=Square root of (variance) ····Equation 2}$$

(Measurement of tensile strength)

A produced foam was measured for its tensile strength at a tensile speed of 50 mm/min in conformity with JIS-K-7113.

(Measurement of rate of change in tensile strength)

A produced foam was stored in an oven at 125°C for 14 days and then measured for its tensile strength at a tensile speed of 50 mm/min in conformity with JIS-K-7113, and a rate of change in tensile strength before and after the heating storage treatment was determined.

(180° Bending test)

A produced foam was cut in its machine direction (MD) or transverse direction (TD) to prepare samples for measurement each having a size of 100 mm by 100 mm. Each of the samples for measurement was bent by 180° in its longitudinal direction at a bending position about 50 mm away from each of its end portions so that the end portions overlappedeachother. Afterthat, one reciprocation of a 1-kg roller was performed from the overlapped end portion side toward the bending position side, and then the generation status of a crack at the bending position was visually observed. The number of the samples measured was n=3.

(Measurement of density of foam (or foam portion))

The resultant foam (or foam portion) was cut into five test pieces each having a size of 100 mm by 100 mm. The weights were divided by the volumes to determine bulk densities. An average value of the resultant bulk densities was defined as a density of the foam (or foam portion).

(Measurement of cell content)

Only an oil phase component in the production of an emulsion was polymerized, and the resultant polymer sheet was cut into five test pieces each having a size of 100 mm by 100 mm. The weights were divided by the volumes to determine bulk densities. An average value of the resultant bulk densities was defined as a density of a resin component constituting the foam (or foam portion). The cell content of the foam (or foam portion) was calculated according to the following equation through use of a relative density obtained by dividing the density of the foam (or foam portion) by the density of the resin component.

$$\texttt{Cell content=(1 - Relative density)} \times 100$$

(Measurement of ordinary-state shearing adhesive strength)

The resultant foam or the like was cut into pieces each having a size of 20 mm by 20 mm, which were used as samples. A BA plate (SUS304) was attached to each of both surfaces of the samples of the foam or the like, and crimping was performed by one reciprocation of a 2-kg roller on the samples in a horizontal attitude. After the crimping, each of the samples was left to stand at normal temperature overnight, fixed to Tensilon at normal temperature so as to be perpendicular, pulled at a tensile speed of 50 mm/min, and measured for its shearing adhesive strength in the middle of the pulling. The number of the samples measured was n=2, and an average of the measured values was defined as an ordinary-state shearing adhesive strength.

(Measurement of 180° peel test force)

The resultant foam or the like was cut into pieces each having a size of 25 mm by 100 mm, which were used as samples. Each of the samples, from which one of the separators was peeled off, was attached to a BAplate (SUS304), and crimping was performed by one reciprocation of a 2-kg roller. After the crimping, each of the samples was left to stand at normal temperature for 30 minutes, subjected to peeling in a 180-degree direction at a tensile speed 50 mm/min through use of Tensilon, and measured for its adhesive strength in the middle of the peeling. The number of the samples measured was n=2, and an average of the measured values was defined as a 180° peel test force.

(Measurement of 60°C retention force)

The resultant foam or the like was cut into a piece having a size of 10 mm by 100 mm, which was used as a sample. The sample, from which one of the separators was peeled off, was attached to a bakelite plate so as to achieve an attachment area of 10 mm by 20 mm, and crimping was performed by one reciprocation of a 2-kg roller. After the crimping, under a 60°C atmosphere, the bakelite plate was fixed so that the sample was perpendicular, a load of 500 g was applied to one foamed pressure-sensitive adhesive, and the sample was left to stand for 2 hours. The sample after left to stand for 2 hours was measured for its amount of deviation in attachment position.

(Measurement of 50% compression load)

Ten sheets of the resultant foam or the like were laminated together and then cut into pieces each having a size of 20 mm by 20 mm, which were used as samples for measurement. Tensilon was used for the measurement, each of the samples for measurement was compressed in its thickness direction at a speed of 10 mm/min until the thickness reached 50% of the initial thickness, and a maximum value at the time when the thickness was reduced by 50% was measured. The number of the samples measured was n=2, and an average of the measured values was defined as a 50% compression load.

(Rate of dimensional change after storage at 125°C for 22 hours)

The resultant foam or the like was measured for its dimensional change by heating in conformity with the dimensional stability evaluationat high temperature of JIS-K-6767. That is, the resultant foam or the like was cut into a test piece having a size of 100 mm by 100 mm, stored in an oven at 125°C for 22 hours, and then determined for its rate of dimensional change before and after the heating storage treatment in conformity with the dimensional stability evaluation at high temperature of JIS-K-6767.

(Diffuse reflectivity)

A diffuse reflectivity in the wavelength region of 190 nm to 800 nm was measured every 1 nm through use of a spectrophotometer UV-2250 equipped with an integrating sphere apparatus manufactured by Shimadzu Corporation. In this case, the measurement apparatus was adjusted with the diffuse reflectivity of barium sulfate powder being defined as 100%.

(Immersion test)

The resultant foam or the like was cut into a piece having a size of 50 mm by 50 mm, and immersed in each of solvents including a 10% hydrochloric acid aqueous solution, acetone, and ethanol for 24 hours. After the immersion, the foam or the like was taken out from each of the solvents, left to stand at normal temperature for 2 hours, and then heated at 130°C over 20 minutes to remove each of the solvents.
It should be noted that rates of changes in various physical properties before and after the immersion test are represented by absolute values of values calculated by:

```
((Physical properties after immersion test - Physical properties
before immersion test)÷Physical properties before immersion
test)×100.
```

(Measurement of stress relaxation rate after 5 minutes)

The resultant foam or the like was cut out into a piece having a size of 5 mm by 5 mm, which was then used as a sample for measurement. An evaluation under an 80°C atmosphere was performed through use of a dynamic viscoelasticity measurement apparatus (DMA) (specification: RSAIII, manufactured by TA Instruments) and a compression jig. The sample for measurement was compressed in its thickness direction until the thickness reached 50% of the initial thickness, and a value determined by the following calculation equation (1) based on a maximum stress value at the time when the thickness was reduced by 50% and a stress value after 5 minutes was defined as a stress relaxation rate after 5 minutes.

```
Calculation equation (1): Stress relaxation rate after 5
minutes (%)=[(Maximum stress value at the time of start of 50%
compression state - Stress value after 5 minutes)/Maximum stress
value at the time of start of 50% compression state]×100
```

(Measurement of 50% compression set recovery rate (80°C atmosphere, 50% compression permanent set))

A 50% compression set recovery rate (80°C atmosphere, 50% compression permanent set) in the present invention is determined by a method to be described below.

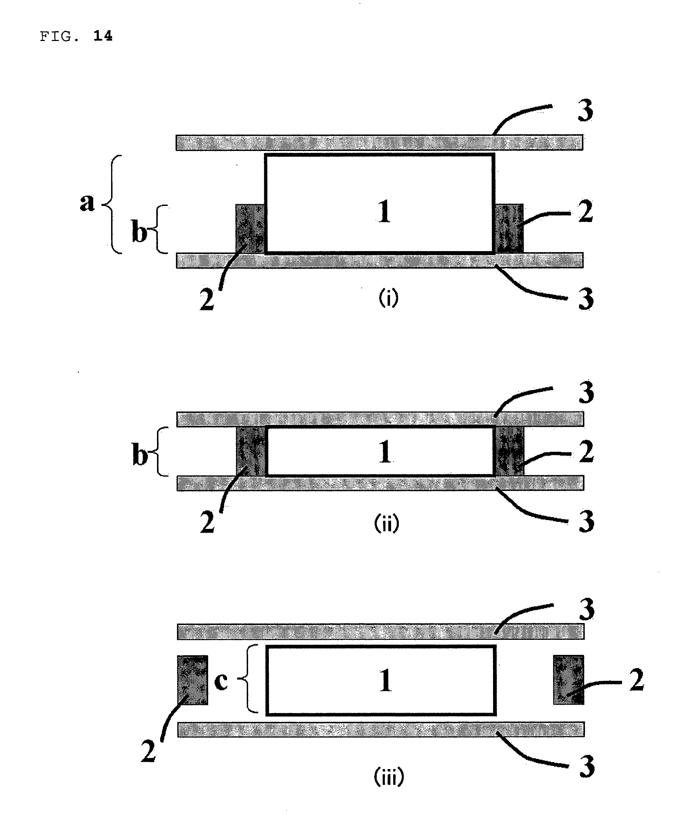

FIGS. **14** are views each illustrating a measurement method for the 50% compression set recovery rate. In FIGS. **14 (i)**, **14 (ii)**, and **14(iii),** a foam or the like, spacers, and plates are represented by **1**, **2**, and **3**, respectively. For the foam or the like **1**, a sheet having a thickness of about 1 mm is used as a sample. The thickness a of the sample was exactly measured so that the thickness b of each of the spacers **2** was one-half the thickness a. As illustrated in FIG. **14(i),** the sample and the spacers **2** were disposed so as to be sandwiched between the two plates **3**. A pressure perpendicular to each of the plates **3** was applied to compress the sample until the thickness of the sample was equal to the thickness b of each of the spacers **2** as illustrated in FIG. **14(ii)**. While this compression state was maintained, the sample was stored under an 80°C atmosphere for 24 hours. After a lapse of 24 hours, while the compression state was maintained, the temperature was returned to 23°C. After the temperature of the foam or the like **1** had been returned to 23°C, the sample was released from the compression state and left to stand at 23°C. FIG. **14(iii)** illustrates a state after the release from the compression state. The thickness c of the sample was measured 1 hour after the release from the compression state. A value determined by the following calculation equation (2) was defined as a 50% compression set recovery rate (80°C atmosphere, 50% compression permanent set).

$$\text{Calculation equation (2): 50\% Compression set recovery rate}$$

$$\text{(80°C atmosphere, 50\% compression permanent set)}$$

$$(\%) = [(c-b)/(a-b)] \times 100$$

(Measurement of 50% compression set recovery rate (at normal temperature))

A 50% compression set recovery rate (at normal temperature) in the present invention is determined by a method to be described below.

FIGS. **14** are views each illustrating a measurement method for the 50% compression set recovery rate. In FIGS. **14(i)**, **14(ii)**, and **14(iii)**, a foam or the like, spacers, and plates are represented by **1**, **2**, and **3**, respectively. For the foam or the like **1**, a sheet having a thickness of about 1 mm is used as a sample. The thickness a of the sample was exactly measured so that the thickness b of each of the spacers **2** was one-half the thickness a. As illustrated in FIG. **14(i)**, the sample and the spacers **2** were disposed so as to be sandwiched between the two plates **3**. A pressure perpendicular to each of the plates **3** was applied to compress the sample until the thickness of the sample was equal to the thickness b of each of the spacers **2** as illustrated in FIG. **14(ii).** While this compression state was maintained, the sample was stored at normal temperature for 24 hours. After a lapse of 24 hours, the sample was released from the compression state at normal temperature and left to stand at normal temperature. FIG. **14(iii)** illustrates a state after the release from the compression state. The thickness c of the sample was measured 30 minutes after the release from the compression state. A value determined by the following calculation equation (3) was defined as a 50% compression set recovery rate (at normal temperature).

$$\text{Calculation equation (3): 50\% Compression set recovery rate}$$

$$\text{(at normal temperature)} \ (\%) = [(c-b)/(a-b)] \times 100$$

(Measurement of airtightness)

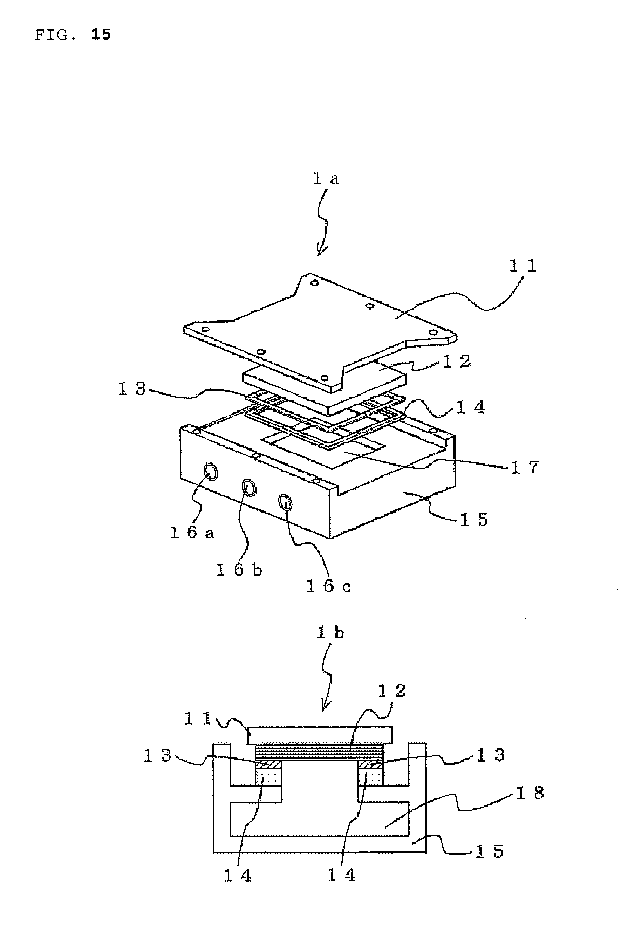

A foam or the like was compressed by 30% and evaluated for its airtightness by measuring a differential pressure inside and outside the foam or the like. A foam or the like subjected to punching processing into a frame shape (thickness: 1.0 mm, width: 1.0 mm, a square shape with a side length of 54 mm, an opening having a square shape with a side length of 52 mm) was compressed by 30%, and a differential pressure inside and outside the foam or the like was measured. The differential pressure was measured through use of a dustproofness evaluation test apparatus illustrated in FIG. **15.**

In FIG. **15**, a schematic configuration of a dustproofness evaluation test apparatus is represented by **1a**, a schematic configuration of a cross-section of the dustproofness evaluation test apparatus is represented by **1b**, a ceiling plate is represented by **11**, a spacer is represented by **12**, a double coated tape (a pressure-sensitive adhesive double coated tape having a frame shape, a substrate-less type, thickness: 80 μm, unused when a foam or the like exhibits adhesion property) is represented by **13**, a foam or the like (a foam or the like subjected to punching processing into a frame shape) is represented by **14**, a housing for evaluation is represented by **15**, a through-hole to be connected to a metering pump via a pipe joint is represented by **16a**, a through-hole to be connected to a differential pressure gauge via a pipe joint is represented by **16b**, a through-hole to be connected to a needle valve via a pipe joint is represented by **16c**, an opening (a square shape with a side length of 50 mm) is represented by **17**, and a space portion is represented by **18**.

The dustproofness evaluation test apparatus may include therein the space portion **18**, which has a substantially rectangular shape and is sealable, the portion being formed by fastening the ceiling plate **11** having a substantially quadrangular flat plate shape and the housing for evaluation **15** with screws. It should be noted that the opening **17** is an opening of the space portion **18**. Further, the ceiling plate **11** has slits each of which has a quadrangular shape (trapezoidal shape) when seen in a plan view and serves as an opening. The spacer **12,** which has a quadrangular flat plate shape and is larger than the opening **17,** is attached to the lower surface of the ceiling plate **11** facing the opening **17** so as to face the entire surface of the opening **17**. In addition, the foam or the like **14** having a window portion having substantially the same size as that of the opening **17** is attached to a position facing the opening **17** on the lower surface of the spacer **12**, via the double coated tape **13** only in the case where the foam or the like does not exhibit adhesion property. Thus, when the ceiling plate 11 is fastened with screws, the foam or the like **14** is compressed in its thickness direction by the spacer **12** and the peripheral edge portion of the opening **17**.

The compression rate of the foam or the like **14** was adjusted to 30% compression by adjusting the thickness of the spacer **12**.

Accordingly, when the ceiling plate **11** and the housing for evaluation **15** are fastened with screws, the space portion **18** in the housing for evaluation **15** is sealed by the foam or the like **14**, the double coated tape **13**, and the spacer **12**.

Through use of such dustproofness evaluation test apparatus, the foam or the like was compressed at a compression rate of 30%, a metering pump was connected to the through-hole **16a** via a pipe joint, a differential pressure gauge was connected to the through-hole **16b** via a pipe joint, and a needle valve was connected to the through-hole **16c** via a pipe joint. In a state in which the needle valve was closed, aspiration was performed with the metering pump at an aspiration speed of 0.5 L/min, and a differential pressure inside and outside the foam or the like was measured with the differential pressure gauge.

A value determined by the following calculation equation was defined as airtightness (kPa).

Airtightness (kPa)=Internal pressure of foam or the like - External pressure of foam or the like

(Measurement of dustproofness index)

A foam or the like subjected to punching processing into a frame shape (thickness: 1.0 mm, width: 1.0 mm, a square shape with a side length of 54 mm, an opening having a square shape with a side length of 52 mm) was compressed by 30%, and the ratio of passed particles each having a diameter of 0.5 $\mu$m or more (dustproofness index (%)) was determined with the dustproofness evaluation test apparatus. Specifically, in the same manner as in the "(Measurement of airtightness)" section, a foam or the like subjected to punching processing into a frame shape was set in the dustproofness evaluation test apparatus at a compression rate of 30%, disposed in a dust housing, and sealed. It should be noted that the through-hole **16b** is connected to a particle counter via a pipe joint.

Next, through use of a dust supply apparatus connected to the dust housing and the particle counter connected to the dust housing, control was performed so that the particle count value (number) of particles each having a diameter of 0.5 $\mu$m or more in the sealed dust housing was kept almost constant at around 100,000. Thus, the number of atmospheric particles P0 was determined.

Next, in a state in which the needle valve of the through-hole **16c** was closed, aspiration from the through-hole **16a** was performed with the metering pump at an aspiration speed of 0.5 L/min for 15 minutes. After the aspiration, the number of particles each having a diameter of 0.5$\mu$m ormore in the space portion **18** of the dustproofness evaluation test apparatus was measured with the particle counter. Thus, the number of particles each passing through the foam or the like Pf was determined.

A value determined by the following calculation equation was defined as a dustproofness index (%).

$$\text{Dustproofness index } (\%)=[(P0-Pf)/P0]\times100$$

P0: Number of atmospheric particles
Pf: Number of particles each passing through foam or the like

(Dynamic dustproofness evaluation test)

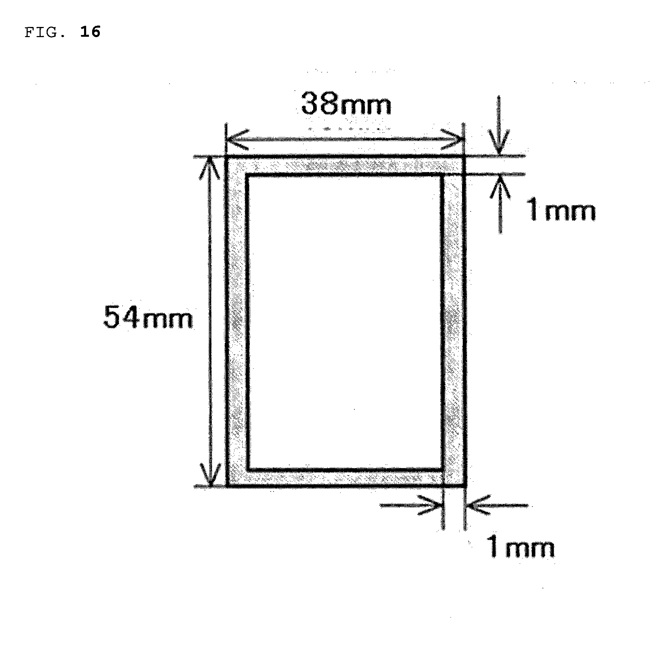

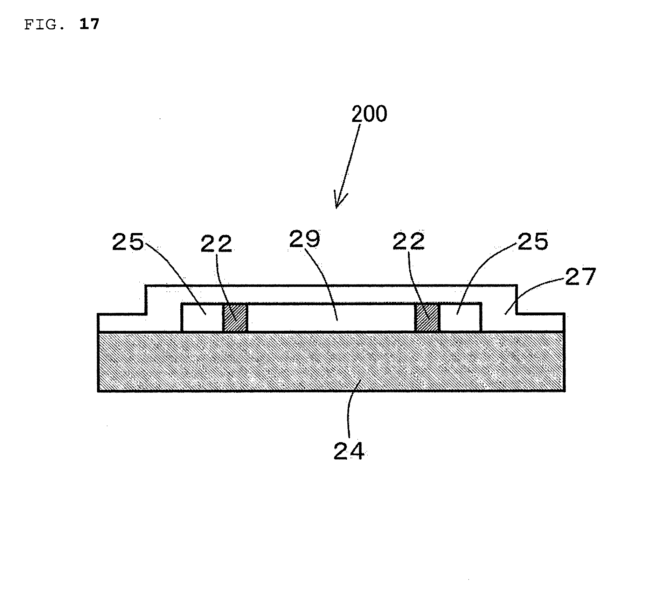

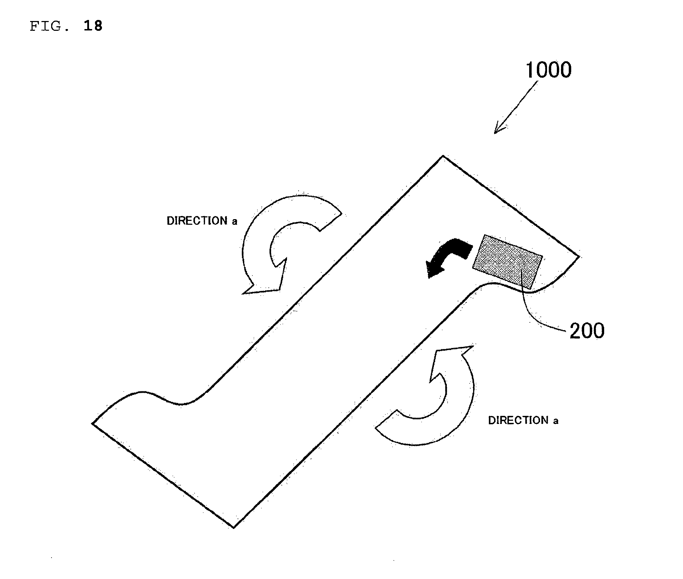

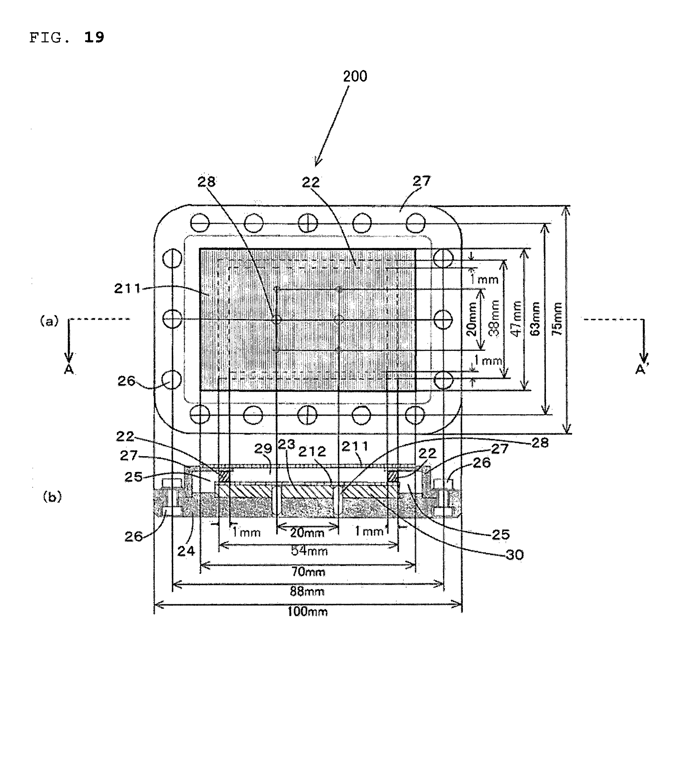

A foam or the like was punched into a picture frame shape to prepare a sample for evaluation (see FIG. **16**). After that, an evaluation container (an evaluation container for dynamic dustproofness evaluation to be described later, see FIG. **17** and FIGS. **19**) was mounted with the sample. Next, a portion (powder supply portion) outside the sample for evaluation in the evaluation container was supplied with a particulate substance, and as illustrated in FIG. **18**, the evaluation container supplied with the particulate substance was placed in a tumbler (rotary tank). After that, the tumbler was rotated counterclockwise, and an impact was repeatedly applied to the evaluation container. Then, the number of powders that passed through the sample for evaluation and entered the inside of the evaluation container was measured. Thus, dynamic dustproofness was evaluated.

FIG. **17** is a simple schematic cross-sectional view of an evaluation container for dynamic dustproofness evaluation mounted with a sample for evaluation. In FIG. **17**, an evaluation container mounted with a sample for evaluation (a package mounted with a sample for evaluation) is represented by **200,** a sample for evaluation (a foam punched into a picture frame shape) is represented by **22,** a base plate is represented by **24,** apowdersupplyportionis represented by **25,** a foamcompressionplate is represented by **27,** andanevaluation container interior (package interior) is represented by **29.** In the evaluation container mounted with the sample for evaluation of FIG. **17,** the powder supply portion **25** and the evaluation container interior **29** are separated from each other by the sample for evaluation **22,** and the powder supplyportion **25** and the evaluation container interior **29** are each a closed system.

FIG. **18** is a schematic cross-sectional view illustrating a tumbler in which an evaluation container was placed. In FIG. **18,** a tumbler is represented by **1000,** and an evaluation container mounted with a sample for evaluation is represented by **200.** Further, a direction a is a rotational direction of the tumbler. When the tumbler **1000** rotates, an impact is repeatedly applied to the evaluation container **200.**

An evaluation method for the dynamic dustproofness evaluation test is described in more detail.

A foam or the like was punched into a picture frame shape (window frame shape) (width: 1 mm) as illustrated in FIG. **16** to prepare a sample for evaluation.

As illustrated in FIG. **17** and FIGS. **19,** an evaluation container (an evaluation container for dynamic dustproofness evaluation, see FIG. **17** and FIGS. **19**) was mounted with the sample for evaluation. It should be noted that the sample for evaluation upon the mounting had a compression rate of 30% (was compressed so as to have a thickness of 30% with respect to its initial thickness).

As illustrated in FIGS. **19,** the sample for evaluation is provided between a foam compression plate and a black acrylic plate on an aluminum plate fixed to a base plate. In the evaluation container mounted with the sample for evaluation, a certain region of the container interior is a system closed by the sample for evaluation.

As illustrated in FIGS. **19,** an evaluation container was mounted with a sample for evaluation. After that, 0.1 g of corn starch (particle diameter: 17 $\mu$m) as dust was loaded into a powder supply portion, and the evaluation container was placed in a tumbler (a rotary tank, a drum type drop testing machine), which was rotated at a speed of 1 rpm.

Then, the tumbler was rotated at a predetermined number of times so as to achieve a collision frequency of 100 times (repeated impact), and then the package was taken apart. Particles that passed through the sample for evaluation from the powder supply portion and deposited on the black acrylic plate on the aluminum plate and a black acrylic plate as a cover plate were observed with a digital microscope (a product available under the apparatus name "VHX-600" from KEYENCE CORPORATION). Still images were prepared for the black acrylic plate on the aluminum plate side and the black acrylic plate on the cover plate side, and subjected to binarization processing using image analysis software (a product available under the software name "Win ROOF" from MITANI CORPORATION), and a particle total area was measured as the number of particles. It should be noted that the observation was performed in a clean bench in order to reduce the influence of air-borne dust in air.

A case where the particle total area of the particles adhering to the black acrylic plate on the aluminumplate side and the particles adhering to the black acrylic plate on the cover plate side was less than 1,500 (Pixel×Pixel) was determined to be satisfactory, a case where the particle total area was 1, 500 to 2, 000 (Pixel×Pixel) was determined to be slightly poor, and a case where the particle total area was more than 2,000 (Pixel×Pixel) was determined to be poor.

FIGS. **19** illustrate top and cross-sectional views of an evaluation container (an evaluation container for dynamic dustproofness evaluation) mounted with a sample for evaluation.

FIG. **19 (a)** illustrates a top view of an evaluation container for dynamic dustproofness evaluation mounted with a sample for evaluation. Further, FIG. **19(b)** is a cross-sectional view of an evaluation container mounted with a sample for evaluation taken along the line A-A'. The dynamic dustproofness (dustproofness upon impact) of the sample for evaluation can be evaluated by dropping the evaluation container aftermountedwith the sample for evaluation. In FIGS. **19,** an evaluation container mounted with a sample for evaluation is represented by **200,** a black acrylic plate (a black acrylic plate on the cover plate side) is represented by **211,** a black acrylic plate (a black acrylic plate on the aluminum plate side) is represented by **212,** a sample for evaluation (a resin foam having a picture frame shape) is represented by **22,** an aluminum plate is represented by **23,** a base plate is represented by **24,** a powder supply portion is represented by **25,** screws are represented by **26,** a foam compression plate is represented by **27,** pins are represented by **28,** an evaluation container interior is represented by **29,** and an aluminum spacer is represented by **30.** The compression rate of the sample for evaluation **22** can be controlled by adjusting the thickness of the aluminum spacer **30.** It should be noted that, although omitted in the top view of the evaluation container for dynamic dustproofness evaluation mounted with sample for evaluation of FIG. **19(a),** cover plate fixing fittings are provided between the screws facing each other, and the black acrylic plate **211** is firmly fixed to the foam compression plate **27.**

(Measurement of rate of change in 50% compression load)

A sample for measurement of a 50% compression load was stored in an oven at 100°C for 22 hours, in an oven at 125°C for 22 hours, or in an oven at 150°C for 22 hours, and then measured for its 50% compression load, and a rate of change in 50% compression load before and after the heating storage treatment was determined.

(Measurement of impact absorptivity)

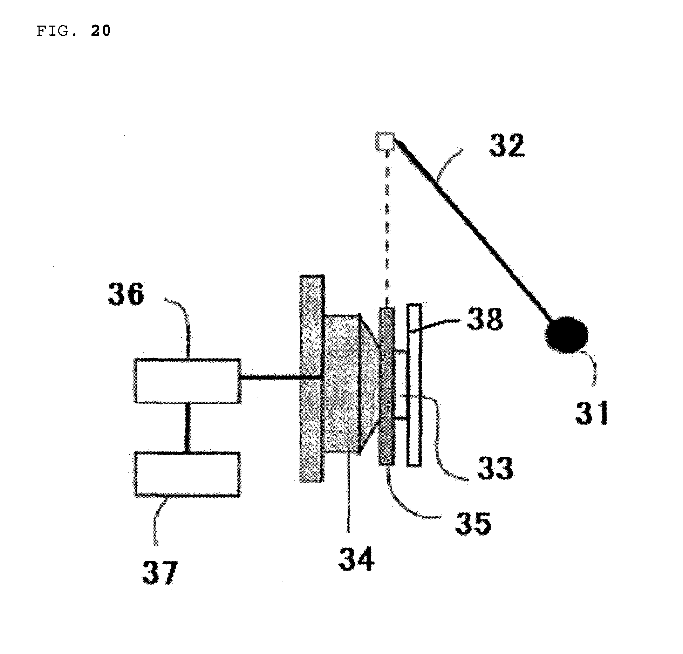

An impact force when a foam or the like was not interposed (F0) and an impact force when a foam or the like was interposed (F1) were measured through use of such a pendulum testing machine as illustrated in FIG. **20**, and an impact absorptivity was determined by the following equation.

```
Impact absorptivity (%)=[(F0-F1)/F0]×100
```

A pendulum testing machine **300** was produced by providing an impactor **31** formed of a steel ball having a diameter of 19 mm and a weight of 28 gw (0.27 N) with a supporting bar **32** having a length of 350 mm. A force sensor (manufactured by TOYO Corporation), an aluminum plate, a power source, and a Multi-Purpose FTT Analyzer (manufactured by ONO SOKKI CO., LTD.) are represented by **34**, **35**, **36**, and **37**, respectively. A foam or the like to be measured was cut into a piece having a size of 20 mm by 20 mm, which was used as a test piece **33.** The test piece was attached to one surface of the aluminum plate **35.** Further, an acrylic plate **38** having a thickness of 1 mm was attached to the other surface of the test piece **33.** An impact force when the impactor **31** collided with the top of the acrylic plate was sensed with the force sensor **34** and measured with the Multi-Purpose FTT Analyzer (manufactured by ONO SOKKI CO., LTD.) **37.**

(Measurement of liquid absorptivity)

The resultant foam or the like was cut into a piece having a size of 25 mm by 25 mm, which was used as a test piece. The test piece was measured for its weight (initial weight: W0 (g)) in advance. The test piece was immersed in a liquid in an amount enough to immerse the test piece for 3 0 minutes, 1 hour, or 24 hours. After the immersion, the test piece was taken out from the liquid and left to stand on a waste cloth at normal temperature for 1 minute. After having been left to stand for 1 minute, the test piece was measured for its weight (weight of the porous material that absorbed the liquid: W1 (g)) again. A liquid absorptivity was calculated based on the following equation.

```
Liquid absorptivity (wt%)=[(W1-W0)/W0]×100
```

(Measurement of rate of dimensional change after liquid absorption (immersion test))
After the liquid absorption (immersion test), the test piece that had absorbed the liquid was measured for its end portion length, and a rate of dimensional change after the liquid absorption (immersion test) was calculated based on the following equation. It should be noted that the end portion length of the test piece before the liquid absorption (immersion test) was defined as L1 (mm) and the end portion length of the test piece after the liquid absorption (immersion test) was defined as L2 (mm).

```
Rate of dimensional change after liquid absorption (immersion

test) (%)=[(L2-L1)/L1]×100
```

(Re-immersion test)

The resultant foam or the like was cut into a piece having a size of 25 mm by 25 mm, which was used as a test piece. The test piece was measured for its weight (initial weight: W0 (g)) in advance. The test piece was immersed in a liquid in an amount enough to immerse the test piece for 24 hours. After the immersion, the test piece was taken out from the liquid and left to stand on a waste cloth at normal temperature for 1 minute. After having been left to stand for 1 minute, the test piece was measured for its weight (weight of the porous material that absorbed the liquid: W1 (g)) again. In this case, a liquid absorptivity was calculated based on the above-mentioned equation (primary immersion test). Subsequently, the test piece that had already been measured for its liquid absorptivity was immersed in water for 1 hour and then stored in an oven at 130°C for 2 hours to remove the liquid absorbed by the porous material by heating drying. Further, the test piece was subjected to storage treatment in an oven at 125°C for 22 hours and then measured for its liquid absorptivity in accordance with the above-mentioned measurement method for a liquid absorptivity again (re-immersion test).

(Measurement of thermal conductivity)

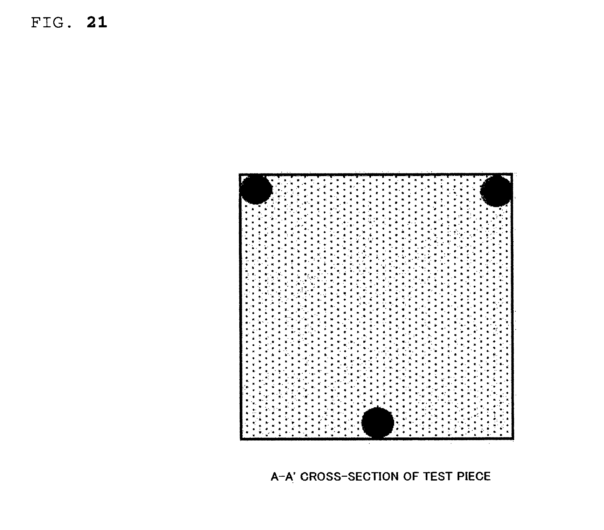

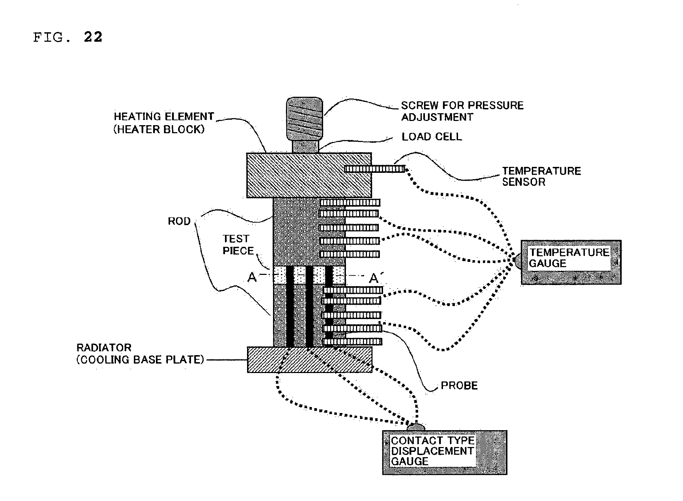

In conformity with ASTM-D5470 (the standard of American Society of Testing Materials), a thermal conductivity was measured through use of a thermal characteristic evaluation apparatus illustrated in each of FIGS. **21** and **22.** Specifically, a test piece (20 mm by 20 mm) was sandwiched betweenapairofrodsLmadeof aluminum (A5052, thermal conductivity: 140 W/m·K) formed so as to be a cube with a side length of 20 mm.

Then, the pair of rods was disposed between a heating element (a heater block) H and a radiator (a cooling base plate configured so as to circulate cooling water therethrough) C so as to be arranged on the upper and lower sides. Specifically, the heating element H was disposed on the rod L on the upper side, and the radiator C was disposed below the rod L on the lower side.

In this case, the pair of rods L is positioned between a pair of screws for pressure adjustment T penetrating the heating element and the radiator. It should be noted that a load cell R is disposed between each of the screws for pressure adjustment T and the heating element H, and is configured so as to measure a pressure in tightening the screw for pressure adjustment T. Such pressure was defined as a pressure to be applied to the test piece.

Further, three probes P (diameter: 1 mm) of a contact type displacement gauge were installed so as to penetrate the rod L on the lower side and the test piece from the radiator C side. In this case, each of the upper end portions of the probes P is in contact with the lower surface of the rod L on the upper side, and is configured so that an interval between the rods L on the upper and lower sides (a thickness of the test piece) can be measured.

A temperature sensor D was attached to the heating element H and the rods L on the upper and lower sides. Specifically, the temperature sensor D was attached to one site of the heating element H and five sites at an interval of 5 mm in the vertical direction of each of the rods L.

In the measurement, first, a pressure was applied to the test piece by tightening the screws for pressure adjustment T, the temperature of the heating element H was set to 80°C, and cooling water at 20°C was circulated through the radiator C. Then, after the temperatures of the heating element H and the rods L on the upper and lower sides hadbecome stable, the temperatures of the rods L on the upper and lower sides were measured with the temperature sensor D, a heat flux passing through the test piece was calculated based on the thermal conductivities and temperature gradient of the rods L on the upper and lower sides, and temperatures at the interfaces between the rods L on the upper and lower sides and the test piece were calculated. Then, through use of those values , a thermal conductivity (W/m·K) at the compression rate was calculated.

(Light resistance test)

Through use of DAYPLA METAL WEATHER KU-R5N-W (manufactured by DAYPLA WINTES CO., LTD.), irradiation was performed at an illuminance of 90 mW/cm$^2$ through use of a metal halide lamp under the conditions of a temperature of 63°C and a humidity of 50%.

(Reduction in diffuse reflectivity before and after light resistance test)

A diffuse reflectivity was measured before and after the light resistance test, and its reduction amount was calculated.

(Color difference ΔE)

A color difference ΔE was measured before and after the light resistance test through use of a spectral color difference meter NF333 manufactured by Nippon Denshoku Industries Co., Ltd.

(Measurement of water absorptivity)

The resultant foam or the like was punched into a piece having a size of 25 mm by 25 mm, which was used as a sample. The sample was measured for its initial weight (W0). The sample measured for its W0 was left to stand for 24 hours in a state of being completely immersed in ion-exchanged water and then taken out. After that, water adhering to a foam sheet surface was wiped off. The sample was measured for its weight after 10 minutes (W1), and a water absorptivity was calculated by the following equation.

```
Water absorptivity (times) = (W1-W0)/W0
```

W0: Initial weight of a sample punched into a size of 25 mm by 25 mm.

W1: Weight of the sample, which has been measured for its W0, measured 10 minutes after the following procedure: leaving the sample to stand for 24 hours while completely immersing it in ion-exchanged water; taking out the sample; and then wiping water off a surface of the sample.

(In-water shearing adhesion test (measurement of in-water creep))

The resultant foam or the like was punched into a piece having a size of 25 mm by 50 mm, which was used as a sample. One of the separators was peeled off from the sample, and the sample was attached to an SUS plate. Crimping was performed by one reciprocation of a 2-kg roller. Further, the other separator was peeled off, and an SUS plate was attached to the sample. Crimping was performed by one reciprocation of a 2-kg roller. After that, while a load of 500 g was applied to one of the SUS plates, the sample was immersed in a water tank. A water level in the water tank was a height of 25 cm (from the bottom), and a weight central portion was at a height of 7 cm (from the bottom). A time taken from the immersion to peeling of the SUS plate from the foam or the like was measured, which was defined as a measured value for in-water creep.

(Production Example A-1): Preparation of mixed syrup A-1

A reactor equipped with a cooling tube, a temperature gauge, and a stirrer was fed with 173.2 parts by weight of a monomer solution formed of 2-ethylhexyl acrylate (manufactured by TOAGOSEICO., LTD., hereinafter, abbreviated as "22EHA") as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight ofdibutyltindilaurate (manufactured by KISHIDA CHEMICAL Co., Ltd. , hereinafter, abbreviated as "DBTL") as a urethane reaction catalyst. To the stirred mixture were added dropwise 12.4 parts by weight of hydrogenated xylylene diisocyanate (manufactured by Takeda Pharmaceutical Co., Ltd., TAKENATE 600, hereinafter, abbreviated as "HxDI"), and the resultant mixture was subjected to a reaction at 65°C for 4 hours. It should be noted that the usage of a polyisocyanate component and a polyol component in terms of NCO/OH (equivalent ratio) was 1.6. After that, 1.5 parts by weight of methanol (manufactured by KISHIDA CHEMICAL Co., Ltd., special grade) were added dropwise, and the mixture was subj ected to a reaction at 65°C for 2 hours. Thus, a hydrophilic polyurethane-based polymer/ethylenically unsaturated monomer mixed syrup was obtained. The resultant hydrophilic polyurethane-based polymer had a weight average molecular weight of 15, 000. To 100 parts by weight of the resultant hydrophilic polyurethane-based polymer/ethylenically unsaturated monomer mixed syrup were added 48 parts by weight of 2EHA and 12 parts by weight of acrylic acid (manufactured by TOAGOSEI CO., LTD., hereinafter, abbreviated as "AA") as a polar monomer. Thus, a hydrophilic polyurethane-based polymer/ethylenically unsaturated monomer mixed syrup A-1 was obtained.

(Production Example A-2): Preparation of mixed syrup A-2

In the preparation of the syrup A-1 in Production Example A-1, polyoxyethylene polyoxypropylene glycol and DBTL were fed into 2EHA. To the stirred mixture was added dropwise HXDI, and the resultant mixture was subjected to a reaction at 65°C for 4 hours. After that, 5.6 parts by weight of 2-hydroxyethyl acrylate (manufactured by KISHIDA CHEMICAL Co., Ltd., hereinafter, abbreviated as "HEA") were added dropwise in place of methanol, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer having an acryloyl group at each of both terminals/ethylenically unsaturated monomer mixed syrup were added 48 parts by weight of 2EHA and 12 parts by weight of AA as a polar monomer. Thus, a hydrophilic polyurethane-based polymer/ethylenically unsaturated monomer mixed syrup A-2 was obtained.

(Production Example A-3) : Preparation of mixed monomer A-1

20 Parts by weight of sorbitan monooleate (a product available under the trade name "RHEODOL SP-O10V" from Kao Corporation), 72 parts by weight of 2EHA, and 8 parts by weight of AA were mixed and stirred well until a homogeneous mixture was obtained. Thus, a mixed monomer A-1 was obtained.

(Example A-1)

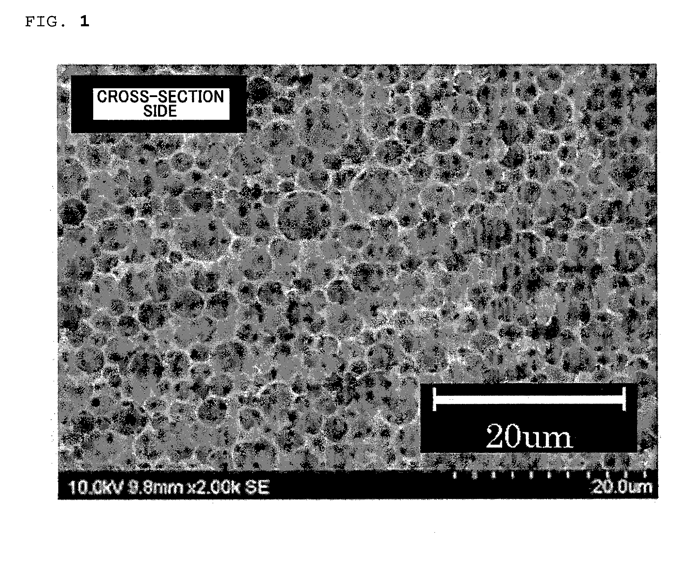

100 Parts by weight of the hydrophilic polyurethane-based polymer/ethylenically unsaturated monomer mixed syrup A-1 obtained in Production Example A-1 were homogeneously mixed with 10 parts by weight of 1, 6-hexanediol diacrylate (a product available under the trade name "NK Ester A-HD-N" from Shin Nakamura Chemical Co., Ltd.) (molecular weight: 226), 56 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.5 part by weight of diphenyl(2,4,6-trimethylbenzoyl)phosphine oxide (a product available under the trade name "Lucirin TPO" from BASF), and 1.0 part by weight of a hindered phenol-based antioxidant (a product available under the trade name "Irganox 1010" from by Ciba Japan) . Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 1 hour, and was then applied onto a substrate subjected to releasing treatment, so as to have a thickness of 1 mm after photoirradiation, and continuously formed into a shape. The top of the resultant was further covered with a polyethylene terephthalate film subjected to releasing treatment and having a thickness of 38 $\mu$m. The sheet was irradiated with UV light at a light illuminance of 5 mW/cm$^2$ (measured with TOPCONUVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 20 minutes. Thus, a foam (A-1) having a thickness of about 1 mm was obtained.
Table 1 shows the results.
Further, FIG. **1** shows a photographic view of a cross-sectional SEM photograph of the resultant foam.

(Example A-2)

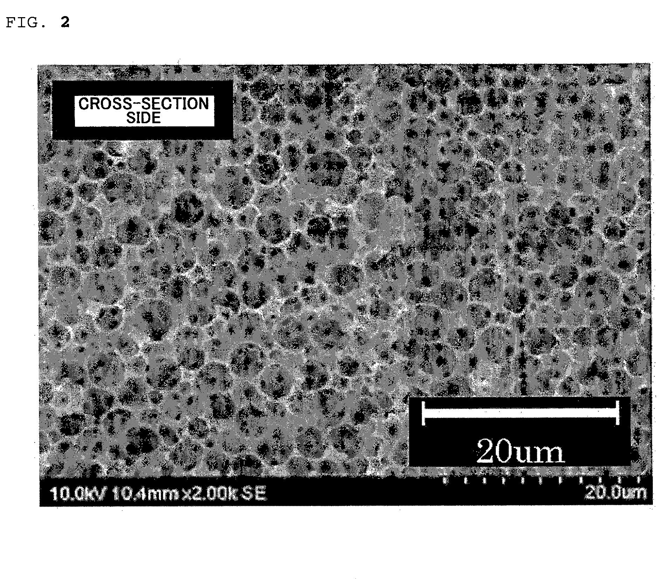

A stable W/O type emulsion was prepared in the same manner as in Example A-1 except that, in Example A-1, the hydrophilic polyurethane-based polymer/ethylenically unsaturated monomer mixed syrup A-2 obtained in Production Example A-2 was used in place of the hydrophilic polyurethane-based polymer/ethylenically unsaturated monomer mixed syrup A-1 obtained in Production Example A-1. It should be noted that the emulsion had the aqueous phase and the oil phase at a weight ratio of 75/25.
Next, a foam (A-2) having a thickness of about 1 mm was obtained in the same manner as in Example A-1.
Table 1 shows the results.
Further, FIG. **2** shows a photographic view of a cross-sectional SEM photograph of the resultant foam.

(Example A-3)

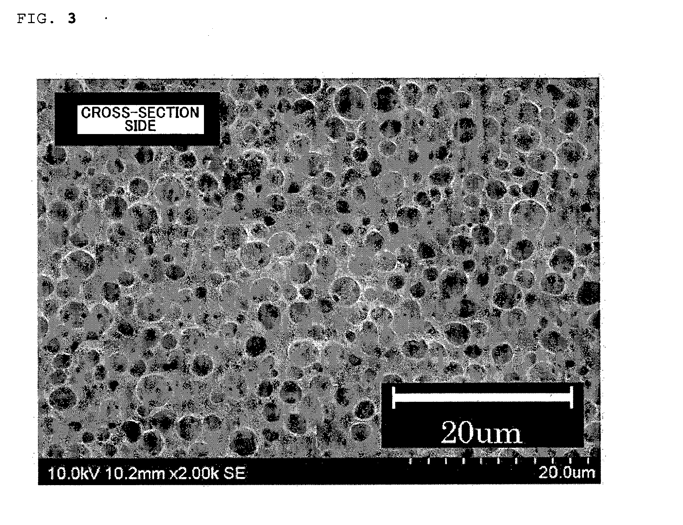

A stable W/O type emulsion was prepared in the same manner as in Example A-2 except that, in Example A-2, 122 parts by weight of ion-exchanged water as the aqueous phase were continuously supplied dropwise at normal temperature. The emulsion had the aqueous phase and the oil phase at a weight ratio of 55/45.
Next, a foam (A-3) having a thickness of about 1 mm was obtained in the same manner as in Example A-1.
Table 1 shows the results.
Further, FIG. **3** shows a photographic view of a cross-sectional SEM photograph of the resultant foam.

(Example A-4)

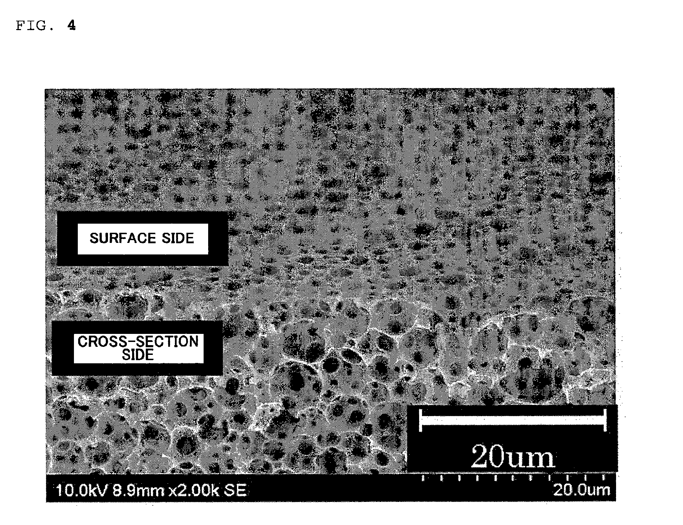

A stable W/O type emulsion was prepared in the same manner as in Example A-2 except that, in Example A-2, 567 parts by weight of ion-exchanged water as the aqueous phase were continuously supplied dropwise at normal temperature. The emulsion had the aqueous phase and the oil phase at a weight ratio of 85/15.
Next, a foam (A-4) having a thickness of about 1 mm was obtained in the same manner as in Example A-1.
Table 1 shows the results.
Further, FIG. **4** shows a photographic view of a surface/cross-sectional SEM photograph of the resultant foam taken from an oblique direction.

(Example A-5)

A stable W/O type emulsion was prepared in the same manner as in Example A-2 except that, in Example A-2, bisphenol A propylene oxide-modified diacrylate (a product available under the trade name "FANCRYL FA-P321A" from Hitachi Chemical Company, Ltd.) (molecular weight: 898) was used in place of the urethane acrylate. It should be noted that the emulsion had the aqueous phase and the oil phase at a weight ratio of 75/25.

Next, a foam (A-5) having a thickness of about 1 mm was obtained in the same manner as in Example A-1.

Table 1 shows the results.

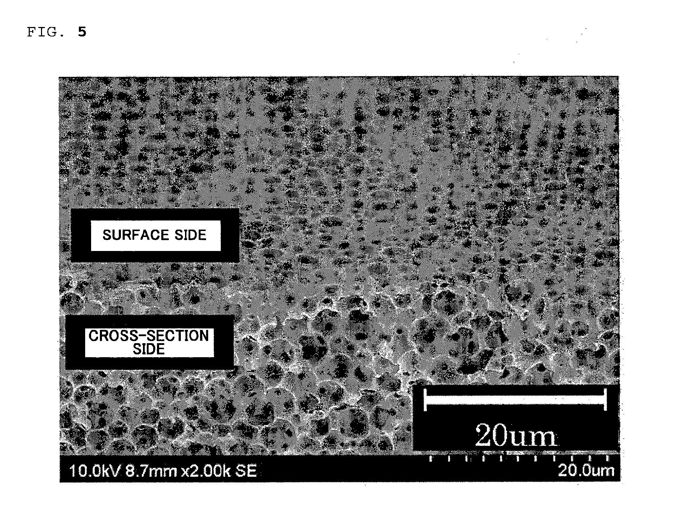

Further, FIG. **5** shows a photographic view of a surface/cross-sectional SEM photograph the resultant foam taken from an oblique direction.

(Comparative Example A-1)

AW/O type emulsion was prepared in the same manner as in Example A-1 except that, in Example A-1, the mixed monomer A-1 obtained in Production Example A-3 was used in place of the hydrophilic polyurethane-based polymer/ethylenically unsaturated monomer mixed syrup A-1 obtained in Production Example A-1. It should be noted that the generation of free water was observed in the emulsifying step. Further, the emulsion had the aqueous phase and the oil phase at a weight ratio of 75/25.

Next, a foam (A-C1) having a thickness of about 700 $\mu$m was obtained in the same manner as in Example A-1 except that free water visually observable on the surface of the resultant W/O type emulsion was removed immediately before the emulsion was formed into a shape.

Table 2 shows the results.

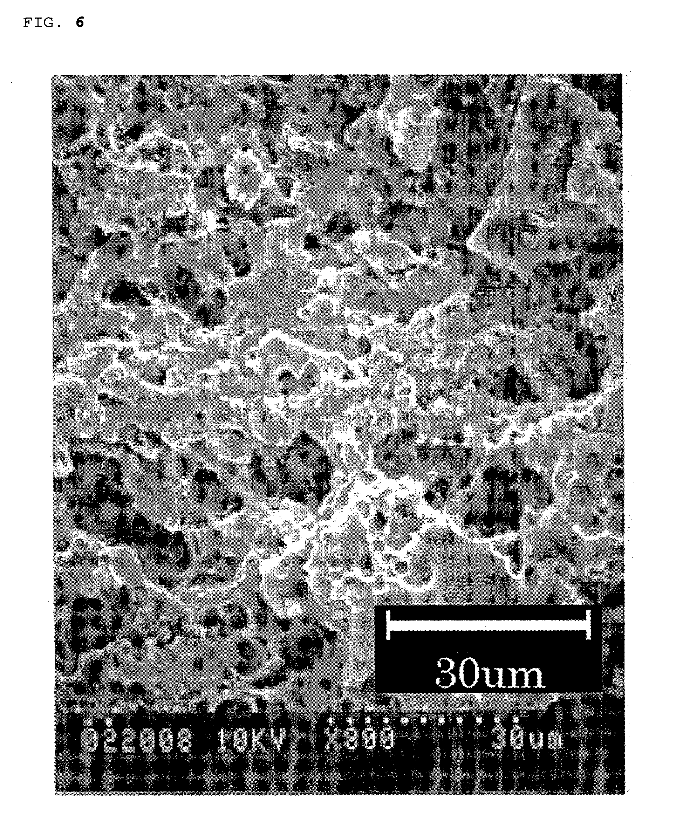

Further, FIG. **6** shows a photographic view of a cross-sectional SEM photograph of the resultant foam.

(Comparative Example A-2)

A W/O type emulsion was prepared in the same manner as in Comparative Example A-1 except that, in Comparative Example A-1, bisphenol A propylene oxide-modified diacrylate(a product available under the trade name "FANCRYLFA-P321A" from Hitachi Chemical Company, Ltd.) (molecular weight: 898) was used in place of the urethane acrylate. It should be noted that the emulsion had the aqueous phase and the oil phase at a weight ratio of 75/25. The generation of free water was observed 30 minutes after the preparation of the emulsion.

Next, a foam (A-C2) having a thickness of about 1 mm was obtained in the same manner as in Example A-1 except that free water visually observable on the surface of the resultant W/O type emulsion was removed immediately before the emulsion was formed into a shape.

Table 2 shows the results.

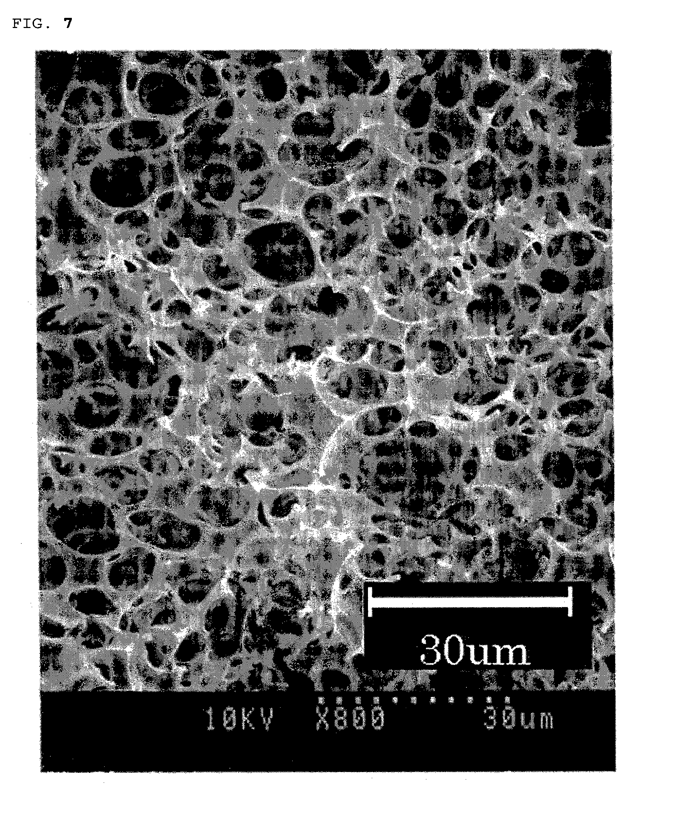

Further, FIG. **7** shows a photographic view of a cross-sectional SEM photograph of the resultant foam.

(Comparative Example A-3)

AW/O type emulsion was prepared in the same manner as in Example A-2 except that, in Example A-2, NK Ester A-HD-N was not used and 20 parts by weight of UA as a reactive oligomer were used. It should be noted that the emulsion had the aqueous phase and the oil phase at a weight ratio of 75/25.

Next, a high-water-content cross-linked polymer having a thickness of about 1 mm was obtained in the same manner as in Example A-1, and then heated at 130°C over 20 minutes. Thus, a foam (A-C3) shrunk in its entirety, having a partially collapsed cell structure, and having a thickness of about 300 $\mu$m was obtained.

Table 2 shows the results.

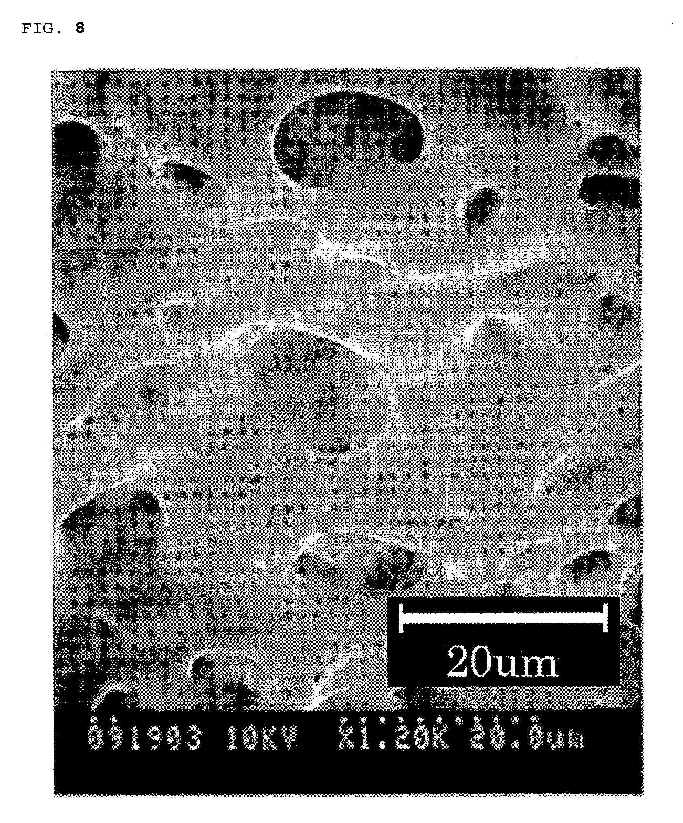

Further, FIG. **8** shows a photographic view of a cross-sectional SEM photograph of the resultant foam.

(Comparative Example A-4)

AW/O type emulsion was prepared in the same manner as in Example A-2 except that, in Example A-2, 40 parts by weight of NK Ester A-HD-N were used and UA as a reactive oligomer was not used. It should be noted that the emulsion had the aqueous phase and the oil phase at a weight ratio of 75/25.

Next, a foam (A-C4) having a thickness of about 1 mm was obtained in the same manner as in Example A-1.

Table 2 shows the results.

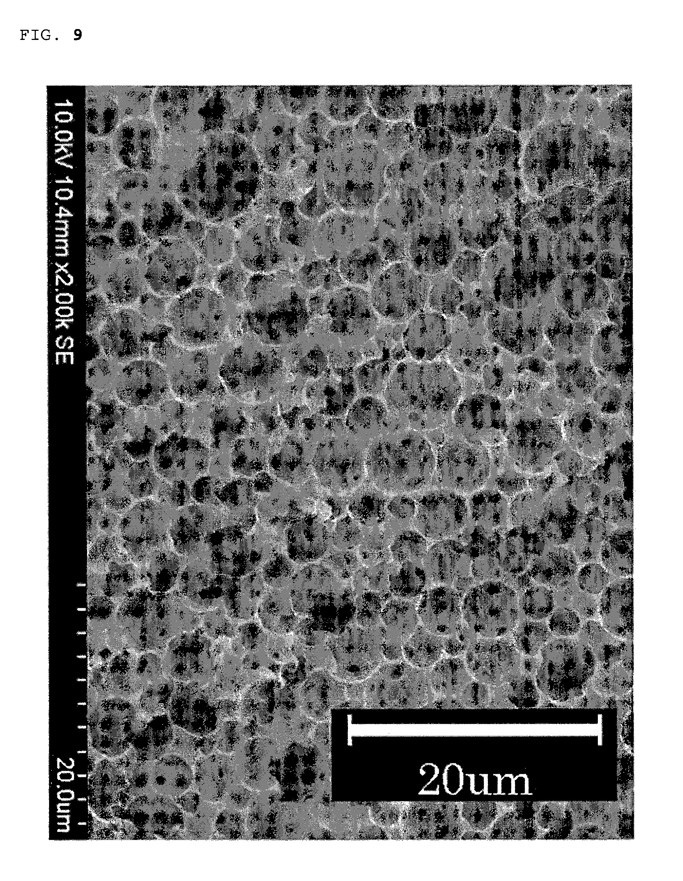

Further, FIG. **9** shows a photographic view of a cross-sectional SEM photograph of the resultant foam.

[Table 1]

| | | | Example A-1 | Example A-2 | Example A-3 | Example A-4 | Example A-5 |
|---|---|---|---|---|---|---|---|
| Oil phase | Polymerization-reactive syrup | Syrup A-1 | 100 | - | - | - | - |
| | | Syrup A-2 | - | 100 | 100 | 100 | 100 |
| | | Mixed monomer A-1 | - | - | - | - | - |
| | | Sorbitan monooleate | Absent | Absent | Absent | Absent | Absent |
| | Cross-linking agent 1 | Kind | UA | UA | UA | UA | FA-P321A |
| | | Molecular weight | 3,720 | 3,720 | 3,720 | 3,720 | 898 |
| | | Compounding amount | 56 | 56 | 56 | 56 | 56 |
| | Cross-linking agent 2 | Kind | A-HD-N | A-HD-N | A-HD-N | A-HD-N | A-HD-N |
| | | Molecular weight | 226 | 226 | 226 | 226 | 226 |
| | | Compounding amount | 10 | 10 | 10 | 10 | 10 |
| | Lucirin TPO | | 0.5 | 0.5 | 0.5 | 0.5 | 0.5 |
| | Irganox 1010 | | 1.0 | 1.0 | 1.0 | 1.0 | 1.0 |
| Aqueous phase | Ion-exchanged water | | 502.5 | 502.5 | 311.1 | 949.2 | 502.5 |
| Static storage stability of emulsion | | | O | O | O | O | O |
| Structure of foam | Average pore diameter of spherical cell ($\mu$m) | | 4.2 | 4.3 | 3.4 | 4.7 | 3.8 |
| | Variance of pore diameters of spherical cells | | 0.6 | 0.1 | 0.2 | 0.5 | 0.2 |
| | Standard deviation of pore diameters of spherical cells | | 0.8 | 0.4 | 0.4 | 0.7 | 0.5 |
| | Average pore diameter of through-hole ($\mu$m) | | 1.0 | 1.3 | 0.4 | 1.4 | 0.7 |
| | Variance of pore diameters of through-holes | | 0.02 | 0.03 | 0.09 | 0.61 | 0.15 |
| | Standard deviation of pore diameters of through-holes | | 0.1 | 0.2 | 0.30 | 0.8 | 0.4 |
| | Density (g/cm$^3$) | | 0.264 | 0.260 | 0.455 | 0.155 | 0.258 |
| Physical properties of foam | Tensile strength (MPa) | | 0.30 | 0.42 | 0.91 | 0.21 | 0.41 |
| | 50% Compression load (kPa) | | 87 | 85 | 186 | 54 | 87 |
| | Generation of crack in 180° bending test | | Absent | Absent | Absent | Absent | Absent |
| Heat resistance of foam | Rate of dimensional change (%) | | -0.4 | -0.3 | -0.5 | -0.3 | -0.3 |
| | Rate of change in tensile strength (%) | | 16.2 | 16.8 | 17.6 | 11.6 | 13.2 |

[Table 2]

| | | | Comparative Example A-1 | Comparative Example A-2 | Comparative Example A-3 | Comparative Example A-4 |
|---|---|---|---|---|---|---|
| Oil phase | Polymerization-reactive syrup | Syrup A-1 | - | - | - | - |
| | | Syrup A-2 | - | - | 100 | 100 |
| | | Mixed monomer A-1 | 100 | 100 | - | - |
| | | Sorbitan monooleate | Present | Present | Absent | Absent |
| | Cross-linking agent 1 | Kind | UA | FA-P 321A | UA | - |
| | | Molecular weight | 3,720 | 898 | 3,720 | - |
| | | Compounding amount | 56 | 56 | 20 | - |
| | Cross-linking agent 2 | Kind | A-HD-N | A-HD-N | - | A-HD-N |
| | | Molecular weight | 226 | 226 | - | 226 |
| | | Compounding amount | 10 | 10 | - | 40 |
| | Lucirin TPO | | 0.5 | 0.5 | 0.5 | 0.5 |
| | Irganox 1010 | | 1.0 | 1.0 | 1.0 | 1.0 |
| Aqueous phase | Ion-exchanged water | | 502.5 | 502.5 | 364.5 | 424.5 |
| Static storage stability of emulsion | | | × | Δ | ○ | ○ |
| Structure of foam | Average pore diameter of spherical cell ($\mu$m) | | Foam not having uniform cell structure | 19.7 | Foam having partially collapsed cell structure | 5.2 |
| | Variance of pore diameters of spherical cells | | | 15.9 | | 0.8 |
| | Standard deviation of pore diameters of spherical cells | | | 4.0 | | 0.9 |
| | Average pore diameter of through-hole ($\mu$m) | | | 9.5 | | 1.0 |
| | Variance of pore diameters of through-holes | | | 4.36 | | 0.03 |
| | Standard deviation of pore diameters of through-holes | | | 2.1 | | 0.2 |
| | Density (g/cm$^3$) | | | 0.298 | | 0.27 |
| Physical properties of foam | Tensile strength (MPa) | | | 0.07 | | 0.08 |
| | 50% Compression load (kPa) | | | 79 | | 116 |
| | Generation of crack in 180° bending test | | | Broken | | Broken |
| Heat resistance of foam | Rate of dimensional change (%) | | | -0.4 | | -0.2 |
| | Rate of change in tensile strength (%) | | | 15.4 | | 14.2 |

(Production Example B-1): Preparation of mixed syrup B-1

The mixed syrup A-2 obtained in Production Example A-2 was used as a hydrophilic polyurethane-based polymer/ethylenically unsaturated monomer mixed syrup B-1 without being subjected to any treatment.

(Example B-1)

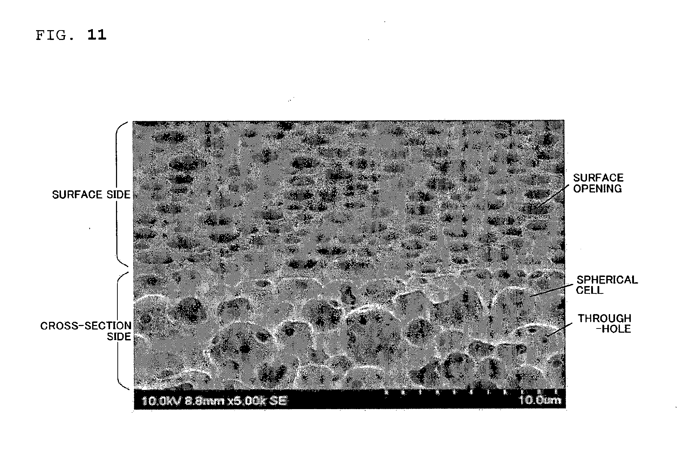

100 Parts by weight of the hydrophilic polyurethane-based polymer/ethylenically unsaturated monomer mixed syrup B-1 obtained in Production Example B-1 were homogeneously mixed with 10 parts by weight of 1,6-hexanediol diacrylate (a product available under the trade name "NK Ester A-HD-N" from Shin Nakamura Chemical Co., Ltd.) (molecular weight: 226), 56 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.5 part by weight of diphenyl(2,4,6-trimethylbenzoyl)phosphine oxide (a product available under the trade name "Lucirin TPO" from BASF), and 1.0 part by weight of a hindered phenol-based antioxidant (a product available under the trade name "Irganox 1010" from Ciba Japan). Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The W/O type emulsion statically stored at normal temperature for 30 minutes after the preparation was applied onto a polyethylene terephthalate film (hereinafter, referred to as "PET film") subjected to releasing treatment and having a thickness of 38 $\mu$m, so that the thickness of a foamed layer was 150 $\mu$m after photoirradiation, and continuously formed into a sheet shape. The top of the resultant sheet was further laminated with a polyester fiber laminated fabric having a thickness of 70 $\mu$m (a product available under the trade name "MILIFE (trademark) TY1010E" from JX Nippon ANCI, Inc.) obtained by laminating stretched polyester long fibers arranged in a matrix in a plane. Further, a PET film subjected to releasing treatment and having a thickness of 38 $\mu$m, onto which a W/O type emulsion statically stored at room temperature for 30 minutes after the preparation was applied so that the thickness of a foamed layer was 150 $\mu$m after photoirradiation, was separately prepared, and the polyester fiber laminated fabric was covered with the applied surface of the film. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 310 $\mu$m was obtained. Next, the upper surface film was peeled off, and the high-water-content cross-linked polymer was heated at 130°C over 10 minutes. Thus, a foamed pressure-sensitive adhesive (B-1) having a thickness of about 0.3 mm was obtained.
Table 3 shows the results.
It should be noted that no crack was generated in the foamed pressure-sensitive adhesive (B-1) in a 180° bending test. Further, FIG. 11 shows a photographic view of a surface/cross-sectional SEM photograph of the produced foamed pressure-sensitive adhesive taken from an oblique direction.

(Example B-2)

A stable W/O type emulsion was prepared in the same manner as in Example B-1 except that, in Example B-1, 186 parts by weight of ion-exchanged water as the aqueous phase were continuously supplied dropwise at normal temperature. The emulsion had the aqueous phase and the oil phase at a weight ratio of 65/35.
Next, a foamed pressure-sensitive adhesive (B-2) having a thickness of about 0.3 mm was obtained in the same manner as in Example B-1.
Table 3 shows the results.
It should be noted that no crack was generated in the foamed pressure-sensitive adhesive (B-2) in a 180° bending test.

(Example B-3)

A stable W/O type emulsion was prepared in the same manner as in Example B-1 except that, in Example B-1, 567 parts by weight of ion-exchanged water as the aqueous phase were continuously supplied dropwise at normal temperature. The emulsion had the aqueous phase and the oil phase at a weight ratio of 85/15.
Next, a foamed pressure-sensitive adhesive (B-3) having a thickness of about 0.4 mm was obtained in the same manner as in Example B-1.
Table 3 shows the results.

It should be noted that no crack was generated in the foamed pressure-sensitive adhesive (B-3) in a 180° bending test.
[Table 3]

|  | Example B-1 | Example B-2 | Example B-3 |
|---|---|---|---|
| Thickness (mm) | 0.3 | 0.3 | 0.4 |
| Density (g/cm$^3$) | 0.273 | 0.349 | 0.170 |
| Cell content (%) | 72.7 | 65.1 | 83.0 |
| Expansion ratio (times) | 3.7 | 2.9 | 5.9 |
| Average pore diameter of spherical cell ($\mu$m) | 3.9 | 2.8 | 4.9 |
| Average pore diameter of through-hole ($\mu$m) | 1.1 | 0.5 | 1.9 |
| Average pore diameter of surface opening ($\mu$m) | 2.3 | 1.9 | 2.5 |
| Ordinary-state shearing adhesive strength (N/cm$^2$) | 20.9 | 10.6 | 24.4 |
| 180° Peel test force (N/25 mm) | 0.1 | 0.1 | 0.1 |
| 60°C Retention force (mm) | 0.1 | 0.1 | 0.1 |
| 50% Compression load (N/cm$^2$) | 16.2 | 48.9 | 6.4 |
| Rate of dimensional change by heating (%) | -0.4 | -0.5 | -0.3 |

(Production Example C-1): Preparation of mixed syrup C-1

The mixed syrup A-2 obtained in Production Example A-2 was used as a hydrophilic polyurethane-based polymer/ethylenically unsaturated monomer mixed syrup C-1 without being subjected to any treatment.

(Production Example C-2): Preparation of mixed syrup C-2

A hydrophilicpolyurethane-based polymer having an acryloyl group at each of both terminals/ethylenically unsaturated monomer mixed syrup was obtained in the same manner as in Production Example C-1 except that, in Production Example C-1, isobornyl acrylate (manufactured by OSAKA ORGANIC CHEMICAL INDUSTRY LTD., hereinafter, abbreviated as "IBXA") was used in place of 2EHA as the ethylenically unsaturated monomer. The resultant hydrophilic polyurethane-based polymer had a weight average molecularweight of 15,000. To 100 parts by weight of the resultant hydrophilic polyurethane-based polymer/ethylenically unsaturated monomer mixed syrup were added 7.9 parts by weight of 2EHA, 114 parts by weight of IBXA, and 16.2 parts by weight of AA as a polar monomer, and the mixture was used as a hydrophilic polyurethane-based polymer/ethylenically unsaturated monomer mixed syrup C-2.

(Example C-1)

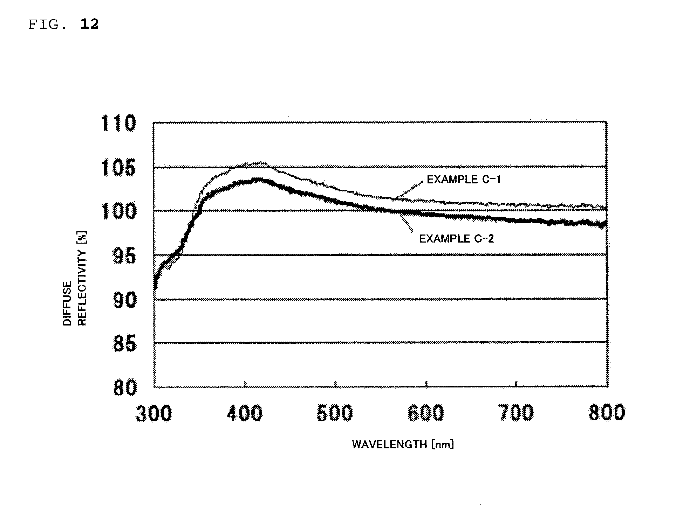

100 Parts by weight of the hydrophilic polyurethane-based polymer/ethylenically unsaturated monomer mixed syrup C-1 obtained in Production Example C-1 were homogeneously mixed with 10 parts by weight of 1,6-hexanediol diacrylate (a product available under the trade name "NK Ester A-HD-N" from ShinNakamura Chemical Co., Ltd.) (molecular weight: 226), 56 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.5 part by weight of diphenyl(2,4,6-trimethylbenzoyl)phosphine oxide (a product available under the trade name "Lucirin TPO" from BASF), and 1.0 part by weight of a hindered phenol-based antioxidant (a product available under the trade name "Irganox 1010" from by Ciba Japan) . Thus, a continuous oil phase component (hereinafter, referred to as "oil phase") was obtained. Meanwhile, 300 parts by weight of ion-exchangedwater as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 1 hour, and was then applied onto a substrate subjected to releasing treatment, so as to have a thickness of 0.5 mm after photoirradiation, and continuously formed into a shape. The top of the resultant was further covered with a polyethylene terephthalate film subj ected to releasing treatment and having a thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 0.5 mm was obtained. Next, the upper surface film was peeled off, and the high-water-content cross-linked polymer was heated at 130°C over 20 minutes. Thus, a foamed diffuse reflector (C-1) having a thickness of about 0.5 mm was obtained.
Table 4 and FIG. 12 show the results.
It should be noted that no crack was generated in the foamed diffuse reflector (C-1) in a 180° bending test.

(Example C-2)

An oil phase was prepared in the same manner as in Example C-1 except that, in Example C-1, the hydrophilic polyurethane-based polymer/ethylenically unsaturated monomer mixed syrup C-2 obtained in Production Example C-2 was used in place of the hydrophilic polyurethane-based polymer/ethylenically unsaturated monomer mixed syrup C-1 obtained in Production Example C-1, 15 parts by weight of NK Ester A-HD-N were used, and 70 parts by weight of UA were used. Further, 186 parts by weight of ion-exchanged water as an aqueous phase with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 65/35.
A foamed diffusive reflector (C-2) having a thickness of about 0.5 mm was obtained by subjecting the resultant W/O type emulsion to the same operation as in Example C-1.
Table 4 and FIG. 12 show the results.
It should be noted that no crack was generated in the foamed diffusive reflector (C-2) in a 180° bending test.
[Table 4]

|  | Example C-1 | Example C-2 |
|---|---|---|
| Thickness (mm) | 0.5 | 0.5 |
| Density (g/cm$^3$) | 0.262 | 0.316 |
| Cell content (%) | 73.8 | 68.4 |
| Average pore diameter of spherical cell ($\mu$m) | 3.9 | 3.5 |
| Average pore diameter of through-hole ($\mu$m) | 1.2 | 0.7 |
| Average pore diameter of surface opening ($\mu$m) | 2.4 | 2.0 |
| Diffuse reflectivity at 400 nm | 103 | 105 |
| Diffuse reflectivity at 550 nm | 100.1 | 101.5 |
| 50% Compression load (N/cm$^2$) | 16.2 | 300 |
| Rate of dimensional change by heating (%) | -0.4 | -0.3 |

As can be seen from FIG. 12, the foamed diffusive reflector of the present invention has a very high diffuse reflectivity in the wavelength range of 400 nm to 700 nm, and in particular, has an extremely high diffuse reflectivity in the wavelength range of 400 nm to 500 nm. It should be noted that, although there is a region whose diffuse reflectivity is more than 100% in the chart of FIG. 12, this is probably attributed to the fact that a measurement apparatus was adjusted with the diffuse reflectivity of barium sulfate powder defined as 100%. However, it is conceivable that a region in which the measurement result of a diffuse reflectivity in the case of using, as a comparative substance, barium sulfate powder exhibiting a diffuse reflectivity of 100% in theory is more than 100% exhibit a diffuse reflectivity nearly equal to or higher than that of the barium sulfate powder. Accordingly, in the chart of FIG. 12, it is conceivable that the diffuse reflectivity in the wavelength range of 400 nm to 700 nm be nearly equal to 100% in both of Examples C-1 and C-2.

(Production Example D-1): Preparation of mixed syrup D-1

The mixed syrup A-2 obtained in Production Example A-2 was used as a hydrophilic polyurethane-based polymer/ethylenically unsaturated monomer mixed syrup D-1 without being subjected to any treatment.

(Example D-1)

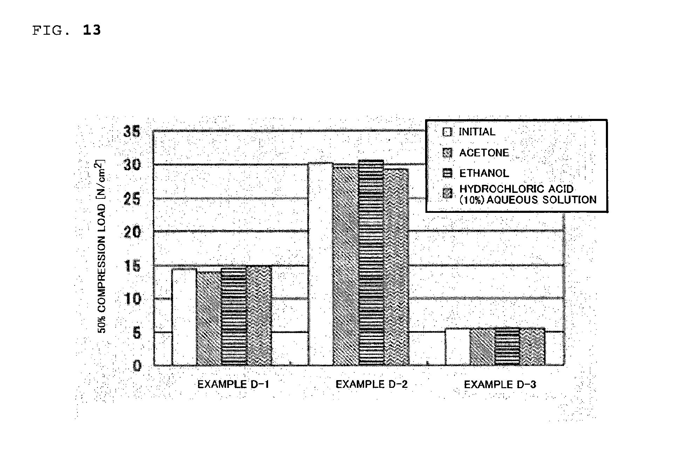

100 Parts by weight of the hydrophilic polyurethane-based polymer/ethylenically unsaturated monomer mixed syrup D-1 obtained in Production Example D-1 were homogeneously mixed with 12 parts by weight of 1,6-hexanediol diacrylate (a product available under the trade name "NK Ester A-HD-N" from Shin Nakamura Chemical Co., Ltd.) (molecular weight: 226), 48 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.5 part by weight of diphenyl(2,4,6-trimethylbenzoyl)phosphine oxide (a product available under the trade name "Lucirin TPO" from BASF), and 1.0 part by weight of a hindered phenol-based antioxidant (a product available under the trade name "Irganox 1010" from Ciba Japan). Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 1 hour, and was then applied onto a substrate subjected to releasing treatment, so as to have a thickness of 1 mm after photoirradiation, and continuously formed into a shape. The top of the resultant was further covered with a polyethylene terephthalate film subjected to releasing treatment and having a thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 20 minutes. Thus, a chemical-resistant foam (D-1) having a thickness of about 1 mm was obtained.
Table 5 and FIG. **13** show the results.
It should be noted that no crack was generated in the chemical-resistant foam (D-1) in a 180° bending test.

(Example D-2)

A stable W/O type emulsion was prepared in the same manner as in Example D-1 except that, in Example D-1, 186 parts by weight of ion-exchanged water as the aqueous phase were continuously supplied dropwise at normal temperature. The emulsion had the aqueous phase and the oil phase at a weight ratio of 65/35.
A chemical-resistant foam (D-2) having a thickness of about 1 mm was obtained by subjecting the resultant W/O type emulsion to the same operation as in Example D-1.
Table 5 and FIG. **13** show the results.
It should be noted that no crack was generated in the chemical-resistant foam (D-2) in a 180° bending test.

(Example D-3)

A stable W/O type emulsion was prepared in the same manner as in Example D-1 except that, in Example D-1, 566.7 parts by weight of ion-exchanged water as the aqueous phase were continuously supplied dropwise at normal temperature. The emulsion had the aqueous phase and the oil phase at a weight ratio of 85/15.
A chemical-resistant foam (D-3) having a thickness of about 1 mm was obtained by subjecting the resultant W/O type emulsion to the same operation as in Example D-1.
Table 5 and FIG. **13** show the results.
It should be noted that no crack was generated in the chemical-resistant foam (D-3) in a 180° bending test.
[Table 5]

|  | Example D-1 | Example D-2 | Example D-3 |
|---|---|---|---|
| Thickness (mm) | 1.0 | 1.0 | 1.0 |
| Density (g/cm$^3$) | 0.273 | 0.349 | 0.170 |
| Cell content (%) | 72.7 | 65.1 | 83.0 |

(continued)

|  | | Example D-1 | Example D-2 | Example D-3 |
|---|---|---|---|---|
| Expansion ratio (times) | | 3.7 | 2.9 | 5.9 |
| Average pore diameter of spherical cell ($\mu$m) | | 3.9 | 2.8 | 4.9 |
| Average pore diameter of through-hole ($\mu$m) | | 1.1 | 0.5 | 1.9 |
| Average pore diameter of surface opening ($\mu$m) | | 2.3 | 1.9 | 2.5 |
| Rate of dimensional change by heating (%) | | -0.4 | -0.5 | -0.3 |
| Rate of change in average pore diameter of spherical cell (%) | Acetone | 1.0 | 1.8 | 1.2 |
| | Ethanol | 1.4 | 1.9 | 1.4 |
| | 10% Hydrochloric acid aqueous solution | 0.8 | 1.2 | 0.7 |
| Rate of change in 50% compression load (%) | Acetone | 3.5 | 2.1 | 0.7 |
| | Ethanol | 1.6 | 1.0 | 2.3 |
| | 10% Hydrochloric acid aqueous solution | 2.8 | 3.0 | 1.1 |
| Rate of change in weight (%) | Acetone | 0.2 | 0.3 | 0.3 |
| | Ethanol | 0.3 | 0.2 | 0.2 |
| | 10% Hydrochloric acid aqueous solution | 0.3 | 0.2 | 0.4 |

(Production Example E-1): Preparation of mixed syrup E-1

A reactor equipped with a cooling tube, a temperature gauge, and a stirrer was fed with 100 parts by weight of a monomer solution formed of 2-ethylhexyl acrylate (manufactured by TOAGOSEI CO., LTD., hereinafter, abbreviated as "2EHA") as an ethylenically unsaturated monomer, 56.5 parts by weight of ADEKA (trademark) Pluronic L-62 (molecular weight: 2,500, manufactured by ADEKA CORPORATION, polyether polyol) as polyoxyethylene polyoxypropylene glycol, and 0.00832 part by weight of dibutyltin dilaurate (manufactured by KISHIDA CHEMICAL Co., Ltd., hereinafter, abbreviated as "DBTL") as a urethane reaction catalyst. To the stirred mixture were added dropwise 7.02 parts by weight of hydrogenated xylylene diisocyanate (manufactured by Takeda Pharmaceutical Co., Ltd., TAKENATE 600, hereinafter, abbreviated as "HXDI"), and the resultant mixture was subjected to a reaction at 65°C for 4 hours. It should be noted that the usage of a polyisocyanate component and a polyol component in terms of NCO/OH (equivalent ratio) was 1.6. After that, 3.15 parts by weight of 2-hydroxyethyl acrylate (manufactured by KISHIDA CHEMICAL Co., Ltd., hereinafter, abbreviated as "HEA") were added dropwise, and the mixture was subjected to a reaction at 65°C for 2 hours. Thus, a hydrophilic polyurethane-based polymer having an acryloyl group at each of both terminals/ethylenically unsaturated monomer mixed syrup (solid content: 40 wt%) was obtained. The resultant hydrophilic polyurethane-based polymer had a weight average molecular weight of 15,000. The resultant mixed syrup was used as a mixed syrup E-1.

(Production Example E-2) : Preparation of mixed syrup E-2

A reactor equipped with a cooling tube, a temperature gauge, and a stirrer was fed with 100 parts by weight of a monomer solution formed of butyl acrylate (manufactured by TOAGOSEI CO., LTD., hereinafter, abbreviatedas "BA") as an ethylenically unsaturated monomer, 56.5 parts by weight of ADEKA (trademark) Pluronic L-62 (molecular weight: 2,500, manufactured by ADEKA CORPORATION, polyether polyol) as polyoxyethylene polyoxypropylene glycol, and 0. 00832 part by weight of dibutyltin dilaurate (manufactured by KISHIDA CHEMICAL Co., Ltd., hereinafter, abbreviated as "DBTL") as a urethane reaction catalyst. To the stirred mixture were added dropwise 7.02 parts by weight of hydrogenated xylylene diisocyanate (manufactured by Takeda Pharmaceutical Co., Ltd., TAKENATE 600, hereinafter, abbreviated as "HXDI"), and the resultant mixture was subjected to a reaction at 65°C for 4 hours. It should be noted that the usage of a polyisocyanate component and a polyol component in terms of NCO/OH (equivalent ratio) was 1.6. After that, 3.15 parts by weight of 2-hydroxyethyl acrylate (manufactured by KISHIDA CHEMICAL Co., Ltd., hereinafter, abbreviated as "HEA") were added dropwise, and the mixture was subjected to a reaction at 65°C for 2 hours. Thus, a hydrophilic polyurethane-based polymer having an acryloyl group at each of both terminals/ethylenically unsaturated monomer mixed syrup (solid content: 40 wt%) was obtained. The resultant hydrophilic polyurethane-based polymer had a weight average molecular weight of 15,000. The resultant mixed syrup was used as a mixed syrup E-2.

(Production Example E-3) : Preparation of mixed syrup E-3

A reactor equipped with a cooling tube, a temperature gauge, and a stirrer was fed with 100 parts by weight of a monomer solution formed of isobornyl acrylate (manufactured by TOAGOSEI CO. , LTD. , hereinafter, abbreviated as "IBXA") as an ethylenically unsaturated monomer, 56.5 parts by weight of ADEKA (trademark) Pluronic L-62 (molecular weight: 2,500, manufactured by ADEKA CORPORATION, polyether polyol) as polyoxyethylene polyoxypropylene glycol, and 0.00832 part by weight of dibutyltin dilaurate (manufactured by KISHIDA CHEMICAL Co., Ltd., hereinafter, abbreviated as "DBTL") as a urethane reaction catalyst. To the stirred mixture were added dropwise 7. 02 parts by weight of hydrogenated xylylene diisocyanate (manufactured by Takeda Pharmaceutical Co., Ltd., TAKENATE 600, hereinafter, abbreviated as "HXDI"), and the resultant mixture was subjected to a reaction at 65°C for 4 hours. It should be noted that the usage of a polyisocyanate component and a polyol component in terms of NCO/OH (equivalent ratio) was 1.6. After that, 3.15 parts by weight of 2-hydroxyethyl acrylate (manufactured by KISHIDA CHEMICAL Co., Ltd., hereinafter, abbreviated as "HEA") were added dropwise, and the mixture was subjected to a reaction at 65°C for 2 hours. Thus, a hydrophilic polyurethane-based polymer having an acryloyl group at each of both terminals/ethylenically unsaturated monomer mixed syrup (solid content: 40 wt%) was obtained. The resultant hydrophilic polyurethane-based polymer had a weight average molecular weight of 15,000. The resultant mixed syrup was used as a mixed syrup E-3.

(Example E-1)

56 Parts by weight (22.4 parts by weight in terms of solid content) of the hydrophilic polyurethane-based polymer/ ethylenically unsaturated monomer mixed syrup E-1 (solid content: 40 wt%) obtained in Production Example E-1 were homogeneously mixed with 12 parts by weight of 1,6-hexanediol diacrylate (a product available under the trade name "NK Ester A-HD-N" from Shin Nakamura Chemical Co., Ltd.) (molecular weight: 226), 87.5 parts by weight (70 parts by weight in terms of solid content) of a urethane acrylate (hereinafter, abbreviated as "UA") (molecular weight: 3,720, dilution monomer: 2EHA, solid content: 80%) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.61 part by weight of diphenyl(2,4,6-trimethylbenzoyl)phosphine oxide (a product available under the trade name "Lucirin TPO" from BASF), 1.02 parts by weight of a hindered phenol-based antioxidant (a product available under the trade name "Irganox 1010" from Ciba Japan), and 21.5 parts by weight of 2EHA and 5.1 parts by weight of acrylic acid (manufactured by TOAGOSEI Co., Ltd., hereinafter, abbreviated as "AA") as ethylenically unsaturated monomers for oil phase amount adjustment. Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 30 minutes, and was then applied onto a substrate subjected to releasing treatment, so as to have a thickness of 1 mm after photoirradiation, and continuously formed into a shape. The top of the resultant was further covered with a polyethylene terephthalate film subjected to releasing treatment andhaving a thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 30 minutes. Thus, a high-resilience foam (E-1) having a thickness of about 1 mm was obtained.
Table 6 shows the results.
It should be noted that no crack was generated in the high-resilience foam (E-1) in a 180° bending test.
Further, the resultant high-resilience foam (E-1) had an open-cell structure in which through-holes were present between adjacent spherical cells, and had a density of 0.26 g/cm$^3$, the spherical cells each had an average pore diameter of 4.8 $\mu$m, the through-holes each had an average pore diameter of 1.2 $\mu$m, and the foam had surface openings each having an average pore diameter of 2.1 $\mu$m in a surface thereof.

(Example E-2)

A high-resilience foam (E-2) having a thickness of about 1 mm was obtained by performing the same operation as in Example E-1 except that, in Example E-1, 9.8 parts by weight of 2EHA, 11.7 parts by weight of IBXA, and 5.1 parts by weight of AA as the ethylenically unsaturated monomers for oil phase amount adjustment were homogeneously mixed to prepare an oil phase.
Table 6 shows the results.
It should be noted that no crack was generated in the high-resilience foam (E-2) in a 180° bending test.
Further, the resultant high-resilience foam (E-2) had an open-cell structure in which through-holes were present between adjacent spherical cells, and had a density of 0.263 g/cm$^3$, the spherical cells each had an average pore diameter of 4.8 $\mu$m, the through-holes each had an average pore diameter of 1.1 $\mu$m, and the foam had surface openings each having an average pore diameter of 2.1 $\mu$m in a surface thereof.

(Example E-3)

A high-resilience foam (E-3) having a thickness of about 1 mm was obtained by performing the same operation as in Example E-1 except that, in Example E-1, 23.3 parts by weight of IBXA and 5.1 parts by weight of AA as the ethylenically unsaturated monomers for oil phase amount adjustment were homogeneously mixed to prepare an oil phase.
Table 6 shows the results.
It should be noted that no crack was generated in the high-resilience foam (E-3) in a 180° bending test.
Further, the resultant high-resilience foam (E-3) had an open-cell structure in which through-holes were present between adjacent spherical cells, and had a density of 0.263 g/cm$^3$, the spherical cells each had an average pore diameter of 5.1 $\mu$m, the through-holes each had an average pore diameter of 1.9 $\mu$m, and the foam had surface openings each having an average pore diameter of 2.6 $\mu$m in a surface thereof.

(Example E-4)

A high-resilience foam (E-4) having a thickness of about 1 mm was obtained by performing the same operation as in Example E-1 except that, in Example E-1, the mixed syrup E-2 was used in place of the mixed syrup E-1, BA was used in place of 2EHA as the dilution monomer for UA, and 21.5 parts by weight of BA and 5.1 parts by weight of AA as the ethylenically unsaturated monomers for oil phase amount adjustment were homogeneously mixed to prepare an oil phase.
Table 6 shows the results.
It should be noted that no crack was generated in the high-resilience foam (E-4) in a 180° bending test.
Further, the resultant high-resilience foam (E-4) had an open-cell structure in which through-holes were present between adjacent spherical cells, and had a density of 0.265 g/cm$^3$, the spherical cells each had an average pore diameter of 4.4 $\mu$m, the through-holes each had an average pore diameter of 1.1 $\mu$m, and the foam had surface openings each having an average pore diameter of 2.2 $\mu$m in a surface thereof.

(Example E-5)

A high-resilience foam (E-5) having a thickness of about 1 mm was obtained by performing the same operation as in Example E-1 except that, in Example E-1, the mixed syrup E-2 was used in place of the mixed syrup E-1, BA was used in place of 2EHA as the dilution monomer for UA, and 9.8 parts by weight of BA, 11.7 parts by weight of IBXA, and 5.1 parts by weight of AA as the ethylenically unsaturated monomers for oil phase amount adjustment were homogeneously mixed to prepare an oil phase.
Table 6 shows the results.
It should be noted that no crack was generated in the high-resilience foam (E-5) in a 180° bending test.
Further, the resultant high-resilience foam (E-5) had an open-cell structure in which through-holes were present between adjacent spherical cells, and had a density of 0.265 g/cm$^3$, the spherical cells each had an average pore diameter of 4.6 $\mu$m, the through-holes each had an average pore diameter of 1.2 $\mu$m, and the foam had surface openings each having an average pore diameter of 2.4 $\mu$m in a surface thereof.

(Example E-6)

A high-resilience foam (E-6) having a thickness of about 1 mm was obtained by performing the same operation as in Example E-1 except that, in Example E-1, the mixed syrup E-2 was used in place of the mixed syrup E-1, BA was used in place of 2EHA as the dilution monomer for UA, and 23.3 parts by weight of IBXA and 5.1 parts by weight of AA as the ethylenically unsaturated monomers for oil phase amount adjustment were homogeneously mixed to prepare an oil phase.

Table 6 shows the results.

It should be noted that no crack was generated in the high-resilience foam (E-6) in a 180° bending test.

Further, the resultant high-resilience foam (E-6) had an open-cell structure in which through-holes were present between adjacent spherical cells, and had a density of 0.264 g/cm$^3$, the spherical cells each had an average pore diameter of 4.4 $\mu$m, the through-holes each had an average pore diameter of 0.9 $\mu$m, and the foam had surface openings each having an average pore diameter of 2 $\mu$m in a surface thereof.

(Example E-7)

An oil phase was obtained by performing the same operation as in Example E-1 except that, in Example E-1, the usage of the mixed syrup E-1 (solid content: 40 wt%) was changed to 34.7 parts by weight (13.9 parts by weight in terms of solid content), and 42.3 parts by weight of 2EHA and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsionwas prepared. It should be noted that the emulsion had the aqueous phase and the oil phase at a weight ratio of 65/35.

A high-resilience foam (E-7) having a thickness of about 1 mm was obtained by performing the same operation as in Example E-1 except for the foregoing.

Table 7 shows the results.

It should be noted that no crack was generated in the high-resilience foam (E-7) in a 180° bending test.

Further, the resultant high-resilience foam (E-7) had an open-cell structure in which through-holes were present between adjacent spherical cells, and had a density of 0.35 g/cm$^3$, the spherical cells each had an average pore diameter of 5 $\mu$m, the through-holes each had an average pore diameter of 1.3 $\mu$m, and the foam had surface openings each having an average pore diameter of 2.6 $\mu$m in a surface thereof.

(Example E-8)

An oil phase was obtained by performing the same operation as in Example E-1 except that, in Example E-1, the usage of the mixed syrup E-1 (solid content: 40 wt%) was changed to 34.7 parts by weight (13.9 parts by weight in terms of solid content), and 29.3 parts by weight of 2EHA, 12.9 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A high-resilience foam (E-8) having a thickness of about 1 mm was obtained by performing the same operation as in Example E-1 except for the foregoing.

Table 7 shows the results.

It should be noted that no crack was generated in the high-resilience foam (E-8) in a 180° bending test.

Further, the resultant high-resilience foam (E-8) had an open-cell structure in which through-holes were present between adjacent spherical cells, and had a density of 0.35 g/cm$^3$, the spherical cells each had an average pore diameter of 4.7 $\mu$m, the through-holes each had an average pore diameter of 1.1 $\mu$m, and the foam had surface openings each having an average pore diameter of 2.4 $\mu$m in a surface thereof.

(Example E-9)

An oil phase was obtained by performing the same operation as in Example E-1 except that, in Example E-1, the usage of the mixed syrup E-1 (solid content: 40 wt%) was changed to 34.7 parts by weight (13.9 parts by weight in terms of solid content), and 16.4 parts by weight of 2EHA, 25.9 parts by weight of IBXA, and 5.6 parts by weight of AA as the ethylenical ly unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A high-resilience foam (E-9) having a thickness of about 1 mm was obtained by performing the same operation as in Example E-1 except for the foregoing.

Table 7 shows the results.

It should be noted that no crack was generated in the high-resilience foam (E-9) in a 180° bending test.

Further, the resultant high-resilience foam (E-9) had an open-cell structure in which through-holes were present between adjacent spherical cells, and had a density of 0.352 g/cm$^3$, the spherical cells each had an average pore diameter of 5.1 $\mu$m, the through-holes each had an average pore diameter of 1.4 $\mu$m, and the foam had surface openings each having an average pore diameter of 2.5 $\mu$m in a surface thereof.

(Example E-10)

An oil phase was obtained by performing the same operation as in Example E-1 except that, in Example E-1, 34.7 parts by weight (13.9 parts by weight in terms of solid content) of the mixed syrup E-3 (solid content: 40 wt%) were used in place of 56 parts by weight (22.4 parts by weight in terms of solid content) of the mixed syrup E-1 (solid content: 40 wt%), and 25.7 parts by weight of 2EHA, 16.5 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A high-resilience foam (E-10) having a thickness of about 1 mm was obtained by performing the same operation as in Example E-1 except for the foregoing.

Table 7 shows the results.

It should be noted that no crack was generated in the high-resilience foam (E-10) in a 180° bending test.

Further, the resultant high-resilience foam (E-10) had an open-cell structure in which through-holes were present between adjacent spherical cells, and had a density of 0.352 g/cm$^3$, the spherical cells each had an average pore diameter of 4.9 $\mu$m, the through-holes each had an average pore diameter of 1.3 $\mu$m, and the foam had surface openings each having an average pore diameter of 2.4 $\mu$m in a surface thereof.

(Example E-11)

An oil phase was obtained by performing the same operation as in Example E-1 except that, in Example E-1, 34.7 parts by weight (13.9 parts by weight in terms of solid content) of the mixed syrup E-3 (solid content: 40 wt%) were used in place of 56 parts by weight (22.4 parts by weight in terms of solid content) of the mixed syrup E-1 (solid content: 40 wt%), and 20 parts by weight of 2EHA, 22.3 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsionwas prepared. It should be noted that the emulsion had the aqueous phase and the oil phase at a weight ratio of 65/35.

A high-resilience foam (E-11) having a thickness of about 1 mm was obtained by performing the same operation as in Example E-1 except for the foregoing.

Table 7 shows the results.

It should be noted that no crack was generated in the high-resilience foam (E-11) in a 180° bending test.

Further, the resultant high-resilience foam (E-11) had an open-cell structure in which through-holes were present between adjacent spherical cells, and had a density of 0.363 g/cm$^3$, the spherical cells each had an average pore diameter of 4.8 $\mu$m, the through-holes each had an average pore diameter of 1.1 $\mu$m, and the foam had surface openings each having an average pore diameter of 2.5 $\mu$m in a surface thereof.

(Reference Example E-1)

An oil phase was obtained by performing the same operation as in Example E-1 except that, in Example E-1, 34.7 parts by weight (13.9 parts by weight in terms of solid content) of the mixed syrup E-3 (solid content: 40 wt%) were used in place of 56 parts by weight (22.4 parts by weight in terms of solid content) of the mixed syrup E-1 (solid content: 40 wt%), and 11.3 parts by weight of 2EHA, 30.9 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A foam (E-C1) having a thickness of about 1 mm was obtained by performing the same operation as in Example E-1 except for the foregoing.

Table 7 shows the results.

It should be noted that no crack was generated in the foam (E-C1) in a 180° bending test.

Further, the resultant foam (E-C1) had an open-cell structure in which through-holes were present between adjacent spherical cells, and had a density of 0.352 g/cm$^3$, the spherical cells each had an average pore diameter of 4.8 $\mu$m, the through-holes each had an average pore diameter of 1.4 $\mu$m, and the foam had surface openings each having an average pore diameter of 2.7 $\mu$m in a surface thereof.

[Table 6]

| | | | Example E-1 | Example E-2 | Example E-3 | Example E-4 | Example E-5 | Example E-6 |
|---|---|---|---|---|---|---|---|---|
| W/O type Em foam | Mixed syrup (solid content: 40 wt%) | Kind | Syrup E-1 | Syrup E-1 | Syrup E-1 | Syrup E-2 | Syrup E-2 | Syrup E-2 |
| | | Part(s) | 56 | 56 | 56 | 56 | 56 | 56 |
| | NK Ester A-HD-N | Part(s) | 15 | 15 | 15 | 15 | 15 | 15 |
| | Unsaturated urethane acrylate (solid content: 80 wt%) | Dilution | 2EHA | 2EHA | 2EHA | BA | BA | BA |
| | | Part(s) | 87.5 | 87.5 | 87.5 | 87.5 | 87.5 | 87.5 |
| | Lucirin TPO | Part(s) | 1.02 | 1.02 | 1.02 | 1.02 | 1.02 | 1.02 |
| | Irganox 1010 | Part(s) | 0.61 | 0.61 | 0.61 | 0.61 | 0.61 | 0.61 |
| | Ethylenically unsaturated monomer for oil phase amount adjustment | 2EHA | Part(s) | 21.5 | 9.8 | - | - | - | - |
| | | BA | Part(s) | - | - | - | 21.5 | 9.8 | - |
| | | IBXA | Part(s) | - | 11.7 | 23.3 | - | 11.7 | 23.3 |
| | | AA | Part(s) | 5.1 | 5.1 | 5.1 | 5.1 | 5.1 | 5.1 |
| | Cell content | % | 75 | 75 | 75 | 75 | 75 | 75 |
| | Thickness | mm | 1 | 1 | 1 | 1 | 1 | 1 |
| 50% Compression load | | N/mm$^2$ | 0.16 | 0.18 | 0.21 | 0.17 | 0.18 | 0.27 |
| Stress relaxation rate | | % | 13.5 | 16.1 | 14.1 | 2.6 | 4.4 | 6.3 |
| 50% Compression set recovery rate | | % | 96.0 | 96.7 | 97.2 | 96.8 | 96.3 | 91.8 |

[Table 7]

| | | | Example E-7 | Example E-8 | Example E-9 | Example E-10 | Example E-11 | Reference Example E-1 |
|---|---|---|---|---|---|---|---|---|
| W/O type Em foam | Mixed syrup (solid content: 40 wt%) | Kind | Syrup E-1 | Syrup E-1 | Syrup E-1 | Syrup E-3 | Syrup E-3 | Syrup E-3 |
| | | Part(s) | 34.7 | 34.7 | 34.7 | 34.7 | 34.7 | 34.7 |
| | NK Ester A-HD-N | Part(s) | 15 | 15 | 15 | 15 | 15 | 15 |
| | Unsaturated urethane acrylate (solid content: 80 wt%) | Dilution | 2EHA | 2EHA | 2EHA | 2EHA | 2EHA | 2EHA |
| | | Part(s) | 87.5 | 87.5 | 87.5 | 87.5 | 87.5 | 87.5 |
| | Lucirin TPO | Part(s) | 1.02 | 1.02 | 1.02 | 1.02 | 1.02 | 1.02 |
| | Irganox 1010 | Part(s) | 0.61 | 0.61 | 0.61 | 0.61 | 0.61 | 0.61 |
| | Ethylenically unsaturated monomer for oil phase amount adjustment | 2EHA | Part(s) | 42.3 | 29.3 | 16.4 | 25.7 | 20 | 11.3 |
| | | BA | Part(s) | - | - | - | - | - | - |
| | | IBXA | Part(s) | - | 12.9 | 25.9 | 16.5 | 22.3 | 30.9 |
| | | AA | Part(s) | 5.6 | 5.6 | 5.6 | 5.6 | 5.6 | 5.6 |
| | Cell content | % | 65 | 65 | 65 | 65 | 65 | 65 |
| | Thickness | mm | 1 | 1 | 1 | 1 | 1 | 1 |
| 50% Compression load | | N/mm$^2$ | 0.49 | 0.50 | 0.61 | 1.02 | 1.52 | 2.65 |
| Stress relaxation rate | | % | 6.8 | 5.7 | 7.1 | 9.6 | 11.8 | 18.6 |
| 50% Compression set recovery rate | | % | 97.3 | 96.9 | 96.5 | 96.2 | 95.3 | 34.6 |

(Production Example F-1): Preparation of mixed syrup F-1

The mixed syrup E-1 obtained in Production Example E-1 was used as a hydrophilic polyurethane-based polymer/ethylenically unsaturated monomer mixed syrup F-1 without being subjected to any treatment.

(Production Example F-2) : Preparation of mixed syrup F-2

The mixed syrup E-2 obtained in Production Example E-2 was used as a hydrophilic polyurethane-based polymer/ethylenically unsaturated monomer mixed syrup F-2 without being subjected to any treatment.

(Production Example F-3) : Preparation of mixed syrup F-3

The mixed syrup E-3 obtained in Production Example E-3 was used as a hydrophilic polyurethane-based polymer/ethylenically unsaturated monomer mixed syrup F-3 without being subjected to any treatment.

(Production Example F-4): Preparation of mixed syrup F-4

A reactor equipped with a cooling tube, a temperature gauge, and a stirrer was fed with 100 parts by weight of a monomer solution formed of 2-ethylhexyl acrylate (manufactured by TOAGOSEI CO., LTD., hereinafter, abbreviated as "2EHA") as an ethylenically unsaturated monomer, 126.5 parts by weight of ADEKA (trademark) Pluronic L-62 (molecular weight: 2,500, manufactured by ADEKA CORPORATION, polyether polyol) as polyoxyethylene polyoxypropylene glycol, and 0.0125 part by weight of dibutyltin dilaurate (manufactured by KISHIDA CHEMICAL Co., Ltd., hereinafter, abbreviated as "DBTL") as a urethane reaction catalyst. To the stirred mixture were added dropwise 15.72 parts by weight of hydrogenated xylylene diisocyanate (manufactured by Takeda Pharmaceutical Co., Ltd., TAKENATE 600, hereinafter, abbreviated as "HXDI"), and the resultant mixture was subjected to a reaction at 65°C for 4 hours. It should be noted that the usage of a polyisocyanate component and a polyol component in terms of NCO/OH (equivalent ratio) was 1.6. After that, 7.05 parts by weight of 2-hydroxyethyl acrylate (manufactured by KISHIDA CHEMICAL Co., Ltd., hereinafter, abbreviated as "HEA") were added dropwise, and the mixture was subjected to a reaction at 65°C for 2 hours. Thus, a hydrophilic polyurethane-based polymer having an acryloyl group at each of both terminals/ethylenically unsaturated monomer mixed syrup (solid content: 60 wt%) was obtained. The resultant hydrophilic polyurethane-based polymer had a weight average molecular weight of 15,000. The resultant mixed syrup was used as a mixed syrup F-4.

(Example F-1)

56 Parts by weight (22.4 parts by weight in terms of solid content) of the hydrophilic polyurethane-based polymer/ ethylenically unsaturated monomer mixed syrup F-1 (solid content: 40 wt%) obtained in Production Example F-1 were homogeneously mixed with 12 parts by weight of 1,6-hexanediol diacrylate (a product available under the trade name "NK Ester A-HD-N" from Shin Nakamura Chemical Co. , Ltd.) (molecular weight: 226), 87.5 parts by weight (70 parts by weight in terms of solid content) of a urethane acrylate (hereinafter, abbreviated as "UA") (molecular weight: 3,720, dilution monomer: 2EHA, solid content: 80%) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.61 part by weight of diphenyl(2,4,6-trimethylbenzoyl)phosphine oxide (a product available under the trade name "Lucirin TPO" from BASF), 1.02 parts by weight of a hindered phenol-based antioxidant (a product available under the trade name "Irganox 1010" from Ciba Japan), and 21.5 parts by weight of 2EHA and 5.1 parts by weight of acrylic acid (manufactured by TOAGOSEI Co., Ltd., hereinafter, abbreviated as "AA") as ethylenically unsaturated monomers for oil phase amount adjustment. Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 30 minutes, and was then applied onto a substrate subjected to releasing treatment, so as to have a thickness of 1 mm after photoirradiation, and continuously formed into a shape. The top of the resultant was further covered with a polyethylene terephthalate film subjected to releasing treatment andhavinga thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 30 minutes. Thus, a high-airtight foam (F-1) having a thickness of about 1 mm was obtained.
Table 8 shows the results.
It should be noted that no crack was generated in the high-airtight foam (F-1) in a 180° bending test.
Further, the resultant high-airtight foam (F-1) had an open-cell structure in which through-holes were present between adjacent spherical cells, and had a density of 0.26 g/cm$^3$, and the foam had surface openings each having an average pore diameter of 2.1 $\mu$m in a surface thereof.

(Example F-2)

A high-airtight foam (F-2) having a thickness of about 1 mm was obtained by performing the same operation as in Example F-1 except that, in Example F-1, 9.8 parts by weight of 2EHA, 11.7 parts by weight of IBXA, and 5.1 parts by weight of AA as the ethylenically unsaturated monomers for oil phase amount adjustment were homogeneously mixed to prepare an oil phase.
Table 8 shows the results.
It should be noted that no crack was generated in the high-airtight foam (F-2) in a 180° bending test.
Further, the resultant high-airtight foam (F-2) had an open-cell structure in which through-holes were present between adjacent spherical cells, and had a density of 0.263 g/cm$^3$, and the foam had surface openings each having an average pore diameter of 2.1 $\mu$m in a surface thereof.

(Example F-3)

A high-airtight foam (F-3) having a thickness of about 1 mm was obtained by performing the same operation as in Example F-1 except that, in Example F-1, 23.3 parts by weight of IBXA and 5.1 parts by weight of AA as the ethylenically unsaturated monomers for oil phase amount adjustment were homogeneously mixed to prepare an oil phase.

Table 8 shows the results.

It should be noted that no crack was generated in the high-airtight foam (F-3) in a 180° bending test.

Further, the resultant high-airtight foam (F-3) had an open-cell structure in which through-holes were present between adjacent spherical cells, and had a density of 0.263 g/cm$^3$, and the foam had surface openings each having an average pore diameter of 2.6 μm in a surface thereof.

(Example F-4)

A high-airtight foam (F-4) having a thickness of about 1 mm was obtained by performing the same operation as in Example F-1 except that, in Example F-1, the mixed syrup F-2 was used in place of the mixed syrup F-1, BA was used in place of 2EHA as the dilution monomer for UA, and 21.5 parts by weight of BA and 5.1 parts by weight of AA as the ethylenically unsaturated monomers for oil phase amount adjustment were homogeneously mixed to prepare an oil phase.

Table 8 shows the results.

It should be noted that no crack was generated in the high-airtight foam (F-4) in a 180° bending test.

Further, the resultant high-airtight foam (F-4) had an open-cell structure in which through-holes were present between adjacent spherical cells, and had a density of 0.265 g/cm$^3$, and the foam had surface openings each having an average pore diameter of 2.2 μm in a surface thereof.

(Example F-5)

A high-airtight foam (F-5) having a thickness of about 1 mm was obtained by performing the same operation as in Example F-1 except that, in Example F-1, the mixed syrup F-2 was used in place of the mixed syrup F-1, BA was used in place of 2EHA as the dilution monomer for UA, and 9.8 parts by weight of BA, 11.7 parts by weight of IBXA, and 5.1 parts by weight of AA as the ethylenically unsaturated monomers for oil phase amount adjustment were homogeneously mixed to prepare an oil phase.

Table 8 shows the results.

It should be noted that no crack was generated in the high-airtight foam (F-5) in a 180° bending test.

Further, the resultant high-airtight foam (F-5) had an open-cell structure in which through-holes were present between adjacent spherical cells, and had a density of 0.265 g/cm$^3$, and the foam had surface openings each having an average pore diameter of 2.4 μm in a surface thereof.

(Example F-6)

A high-airtight foam (F-6) having a thickness of about 1 mm was obtained by performing the same operation as in Example F-1 except that, in Example F-1, the mixed syrup F-2 was used in place of the mixed syrup F-1, BA was used in place of 2EHA as the dilution monomer for UA, and 23.3 parts by weight of IBXA and 5.1 parts by weight of AA as the ethylenically unsaturated monomers for oil phase amount adjustment were homogeneously mixed to prepare an oil phase.

Table 8 shows the results.

It should be noted that no crack was generated in the high-airtight foam (F-6) in a 180° bending test.

Further, the resultant high-airtight foam (F-6) had an open-cell structure in which through-holes were present between adjacent spherical cells, and had a density of 0.264 g/cm$^3$, and the foam had surface openings each having an average pore diameter of 2 μm in a surface thereof.

(Example F-7)

An oil phase was obtained by performing the same operation as in Example F-1 except that, in Example F-1, the usage of the mixed syrup F-1 (solid content: 40 wt%) was changed to 34.7 parts by weight (13.9 parts by weight in terms of solid content), and 42.3 parts by weight of 2EHA and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A high-airtight foam (F-7) having a thickness of about 1 mm was obtained by performing the same operation as in Example F-1 except for the foregoing.

Table 9 shows the results.

It should be noted that no crack was generated in the high-airtight foam (F-7) in a 180° bending test.

Further, the resultant high-airtight foam (F-7) had an open-cell structure in which through-holes were present between adjacent spherical cells, and had a density of 0.35 g/cm$^3$, and the foam had surface openings each having an average pore diameter of 2.6 $\mu$m in a surface thereof.

(Example F-8)

An oil phase was obtained by performing the same operation as in Example F-1 except that, in Example F-1, the usage of the mixed syrup F-1 (solid content: 40 wt%) was changed to 34.7 parts by weight (13.9 parts by weight in terms of solid content), and 29.3 parts by weight of 2EHA, 12.9 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsionwas prepared. It should be noted that the emulsion had the aqueous phase and the oil phase at a weight ratio of 65/35.

A high-airtight foam (F-8) having a thickness of about 1 mm was obtained by performing the same operation as in Example F-1 except for the foregoing.

Table 9 shows the results.

It should be noted that no crack was generated in the high-airtight foam (F-8) in a 180° bending test.

Further, the resultant high-airtight foam (F-8) had an open-cell structure in which through-holes were present between adjacent spherical cells, and had a density of 0.35 g/cm$^3$, and the foam had surface openings each having an average pore diameter of 2.4 $\mu$m in a surface thereof.

(Example F-9)

An oil phase was obtained by performing the same operation as in Example F-1 except that, in Example F-1, the usage of the mixed syrup F-1 (solid content: 40 wt%) was changed to 34.7 parts by weight (13.9 parts by weight in terms of solid content), and 16.4 parts by weight of 2EHA, 25.9 parts by weight of IBXA, and 5.6 parts by weight of AAas the ethylenicallyunsaturatedmonomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A high-airtight foam (F-9) having a thickness of about 1 mm was obtained by performing the same operation as in Example F-1 except for the foregoing.

Table 9 shows the results.

It should be noted that no crack was generated in the high-airtight foam (F-9) in a 180° bending test.

Further, the resultant high-airtight foam (F-9) had an open-cell structure in which through-holes were present between adjacent spherical cells, and had a density of 0.362 g/cm$^3$, and the foam had surface openings each having an average pore diameter of 2.5 $\mu$m in a surface thereof.

(Example F-10)

An oil phase was obtained by performing the same operation as in Example F-1 except that, in Example F-1, 34.7 parts by weight (13.9 parts by weight in terms of solid content) of the mixed syrup F-3 (solid content: 40 wt%) were used in place of 56 parts by weight (22.4 parts by weight in terms of solid content) of the mixed syrup F-1 (solid content: 40 wt%), and 25.7 parts by weight of 2EHA, 16.5 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A high-airtight foam (F-10) having a thickness of about 1 mm was obtained by performing the same operation as in Example F-1 except for the foregoing.

Table 9 shows the results.

It should be noted that no crack was generated in the high-airtight foam (F-10) in a 180° bending test.

Further, the resultant high-airtight foam (F-10) had an open-cell structure in which through-holes were present between adjacent spherical cells, and had a density of 0.352 g/cm$^3$, and the foam had surface openings each having an average pore diameter of 2.4 μm in a surface thereof.

(Example F-11)

An oil phase was obtained by performing the same operation as in Example F-1 except that, in Example F-1, 34.7 parts by weight (13.9 parts by weight in terms of solid content) of the mixed syrup F-3 (solid content: 40 wt%) were used in place of 56 parts by weight (22.4 parts by weight in terms of solid content) of the mixed syrup F-1 (solid content: 40 wt%), and 20 parts by weight of 2EHA, 22.3 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsion was prepared. It should be noted that the emulsion had the aqueous phase and the oil phase at a weight ratio of 65/35.

A high-airtight foam (F-11) having a thickness of about 1 mm was obtained by performing the same operation as in Example F-1 except for the foregoing.

Table 9 shows the results.

It should be noted that no crack was generated in the high-airtight foam (F-11) in a 180° bending test.

Further, the resultant high-airtight foam (F-11) had an open-cell structure in which through-holes were present between adjacent spherical cells, and had a density of 0.353 g/cm$^3$, and the foam had surface openings each having an average pore diameter of 2.5 μm in a surface thereof.

(Example F-12)

An oil phase was obtained by performing the same operation as in Example F-1 except that, in Example F-1, 34.7 parts by weight (13.9 parts by weight in terms of solid content) of the mixed syrup F-3 (solid content: 40 wt%) were used in place of 56 parts by weight (22.4 parts by weight in terms of solid content) of the mixed syrup F-1 (solid content: 40 wt%), and 11.3 parts by weight of 2EHA, 30.9 parts by weight of IBXA, and 5.6 parts by weight of AA as the ethylenically unsaturated monomers for oil phase amount adjustment were homogeneously mixed.

185.7 Parts by weight of ion-exchanged water as an aqueous phase with respect to 100 parts by weight of the oil phase were continuously supplied dropwise at normal temperature into a stirring/mixing machine as an emulsifying machine fed with the oil phase component. Thus, a stable W/O type emulsionwas prepared. It should be noted that the emulsion had the aqueous phase and the oil phase at a weight ratio of 65/35.

A high-airtight foam (F-12) having a thickness of about 1 mm was obtained by performing the same operation as in Example F-1 except for the foregoing.

Table 9 shows the results.

It should be noted that no crack was generated in the high-airtight foam (F-12) in a 180° bending test.

Further, the resultant high-airtight foam (F-12) had an open-cell structure in which through-holes were present between adjacent spherical cells, and had a density of 0.352 g/cm$^3$, and the foam had surface openings each having an average pore diameter of 2.7 μm in a surface thereof.

[Table 8]

|  |  |  |  | Example F-1 | Example F-2 | Example F-3 | Example F-4 | Example F-5 | Example F-6 |
|---|---|---|---|---|---|---|---|---|---|
| W/O type Em foam | Mixed syrup (solid content: 40 wt%) | | Kind | Syrup F-1 | Syrup F-1 | Syrup F-1 | Syrup F-2 | Syrup F-2 | Syrup F-2 |
| | | | Part(s) | 56 | 56 | 56 | 56 | 56 | 56 |
| | NK Ester A-HD-N | | Part(s) | 15 | 15 | 15 | 15 | 15 | 15 |
| | Unsaturated urethane acrylate (solid content: 80 wt%) | | Dilution | 2EHA | 2EHA | 2EHA | BA | BA | BA |
| | | | Part(s) | 87.5 | 87.5 | 87.5 | 87.5 | 87.5 | 87.5 |
| | Lucirin TPO | | Part(s) | 1.02 | 1.02 | 1.02 | 1.02 | 1.02 | 1.02 |
| | Irganox 1010 | | Part(s) | 0.61 | 0.61 | 0.61 | 0.61 | 0.61 | 0.61 |
| | Ethylenically unsaturated monomer for oil phase amount adjustment | 2EHA | Part(s) | 21.5 | 9.8 | - | - | - | - |
| | | BA | Part(s) | - | - | - | 21.5 | 9.8 | - |
| | | IBXA | Part(s) | - | 11.7 | 23.3 | - | 11.7 | 23.3 |
| | | AA | Part(s) | 5.1 | 5.1 | 5.1 | 5.1 | 5.1 | 5.1 |
| | Cell content | | % | 75 | 75 | 75 | 75 | 75 | 75 |
| | Thickness | | mm | 1 | 1 | 1 | 1 | 1 | 1 |
| Average pore diameter | Spherical cell | | $\mu$m | 4.2 | 4.2 | 4.3 | 4.1 | 4.3 | 4.5 |
| | Through-hole | | $\mu$m | 1.1 | 1.0 | 1.3 | 1.0 | 1.2 | 1.3 |
| 50% Compression load | | | N/mm$^2$ | 0.16 | 0.18 | 0.21 | 0.17 | 0.18 | 0.27 |
| 50% Compression set recovery rate (at normal temperature) | | | % | 100 | 99 | 100 | 100 | 100 | 99 |
| Airtightness | | | kPa | >5.5 | >5.5 | >5.5 | >5.5 | >5.5 | >5.5 |
| Dustproofness index | | | % | 100 | 100 | 100 | 100 | 100 | 100 |

[Table 9]

|  |  |  |  | Example F-7 | Example F-8 | Example F-9 | Example F-10 | Example F-11 | Example F-12 |
|---|---|---|---|---|---|---|---|---|---|
| W/O type Em foam | Mixed syrup (solid content: 40 wt%) | | Kind | Syrup F-1 | Syrup F-1 | Syrup F-1 | Syrup F-3 | Syrup F-3 | Syrup F-3 |
|  | | | Part(s) | 34.7 | 34.7 | 34.7 | 34.7 | 34.7 | 34.7 |
|  | NK Ester A-HD-N | | Part(s) | 15 | 15 | 15 | 15 | 15 | 15 |
|  | Unsaturated urethane acrylate (solid content: 80 wt%) | | Dilution | 2EHA | 2EHA | 2EHA | 2EHA | 2EHA | 2EHA |
|  | | | Part(s) | 87.5 | 87.5 | 87.5 | 87.5 | 87.5 | 87.5 |
|  | Lucirin TPO | | Part(s) | 1.02 | 1.02 | 1.02 | 1.02 | 1.02 | 1.02 |
|  | Irganox 1010 | | Part(s) | 0.61 | 0.61 | 0.61 | 0.61 | 0.61 | 0.61 |
|  | Ethylenically unsaturated monomer for oil phase amount adjustment | 2EHA | Part(s) | 42.3 | 29.3 | 16.4 | 25.7 | 20 | 11.3 |
|  | | BA | Part(s) | - | - | - | - | - | - |
|  | | IBXA | Part(s) | - | 12.9 | 25.9 | 16.5 | 22.3 | 30.9 |
|  | | AA | Part(s) | 5.6 | 5.6 | 5.6 | 5.6 | 5.6 | 5.6 |
|  | Cell content | | % | 65 | 65 | 65 | 65 | 65 | 65 |
|  | Thickness | | mm | 1 | 1 | 1 | 1 | 1 | 1 |
| Average pore diameter | Spherical cell | | $\mu$m | 3.4 | 3.5 | 3.4 | 3.8 | 3.6 | 3.5 |
|  | Through-hole | | $\mu$m | 0.4 | 0.6 | 0.5 | 0.8 | 0.6 | 0.5 |
| 50% Compression load | | | N/mm$^2$ | 0.49 | 0.50 | 0.61 | 1.02 | 1.52 | 2.65 |
| 50% Compression set recovery rate (at normal temperature) | | | % | 96 | 96 | 95 | 95 | 95 | 86 |
| Airtightness | | | kPa | >5.5 | >5.5 | >5.5 | >5.5 | >5.5 | >5.5 |
| Dustproofness index | | | % | 100 | 100 | 100 | 100 | 100 | 100 |

EP 2 612 886 A1

(Example F-13)

15.2 Parts by weight (9.1 parts by weight in terms of solid content) of the hydrophilic polyurethane-based polymer/ethylenically unsaturated monomer mixed syrup F-4 (solid content: 60 wt%) obtained in Production Example F-4 were homogeneously mixed with 15 parts by weight of 1,6-hexanediol diacrylate (a product available under the trade name "NK Ester A-HD-N" from Shin Nakamura Chemical Co. , Ltd.) (molecular weight: 226), 87.5 parts by weight (70 parts by weight in terms of solid content) of a urethane acrylate (hereinafter, abbreviated as "UA") (molecular weight: 3,720, dilution monomer: 2EHA, solid content: 80%) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.61 part by weight of diphenyl(2,4,6-trimethylbenzoyl)phosphine oxide (a product available under the trade name "Lucirin TPO" from BASF), 1.02 parts by weight of a hindered phenol-based antioxidant (a product available under the trade name "Irganox 1010" from Ciba Japan), and 61.4 parts by weight of 2EHA and 5.9 parts by weight of acrylic acid (manufactured by TOAGOSEI Co., Ltd., hereinafter, abbreviated as "AA") as ethylenically unsaturated monomers for oil phase amount adjustment. Thus, a continuous oil phase component (hereinafter, referred to as "oil phase") was obtained. Meanwhile, 122 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 55/45.

The resultant W/O type emulsion was statically stored at normal temperature for 30 minutes, and was then applied onto a substrate subjected to releasing treatment, so as to have a thickness of 1 mm after photoirradiation, and continuously formed into a shape. The top of the resultant was further covered with a polyethylene terephthalate film subjected to releasing treatment and having a thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 30 minutes. Thus, a high-airtight foam (F-13) having a thickness of about 1 mm was obtained.

Table 10 shows the results.

It should be noted that no crack was generated in the high-airtight foam (F-13) in a 180° bending test.

Further, the resultant high-airtight foam (F-13) had an open-cell structure in which through-holes were present between adjacent spherical cells, and had a density of 0.452 g/cm$^3$, the through-holes each had an average pore diameter of 1.7 $\mu$m, and the foam had surface openings each having an average pore diameter of 2.5 $\mu$m in a surface thereof.

(Example F-14)

An oil phase was obtained by performing the same operation as in Example F-13 except that, in Example F-13, the usage of the mixed syrup F-4 (solid content: 60 wt%) was changed to 23.1 parts by weight (13.9 parts by weight in terms of solid content), and 53.8 parts by weight of 2EHA and 5.6 parts by weight of AA as the ethylenically unsaturated monomers for oil phase amount adjustment were homogeneously mixed.

A stable W/O type emulsion was prepared in the same manner as in Example F-13 except that 186 parts by weight of ion-exchanged water as an aqueous phase with respect to 100 parts by weight of the resultant oil phase were continuously supplied dropwise at normal temperature into a stirring/mixing machine as an emulsifying machine fed with the oil phase component. It should be noted that the emulsion had the aqueous phase and the oil phase at a weight ratio of 65/35.

A high-airtight foam (F-14) having a thickness of about 1 mm was obtained by performing the same operation as in Example F-13 except for the foregoing.

Table 10 shows the results.

It should be noted that no crack was generated in the high-airtight foam (F-14) in a 180° bending test.

Further, the resultant high-airtight foam (F-14) had an open-cell structure in which through-holes were present between adjacent spherical cells, and had a density of 0.349 g/cm$^3$, the through-holes each had an average pore diameter of 1.2 $\mu$m, and the foam had surface openings each having an average pore diameter of 2.5 $\mu$m in a surface thereof.

(Example F-15)

An oil phase was obtained by performing the same operation as in Example F-13 except that, in Example F-13, the usage of the mixed syrup F-4 (solid content: 60 wt%) was changed to 37.3 parts by weight (22.4 parts by weight in terms of solid content), and 40.1 parts by weight of 2EHA and 5.0 parts by weight of AA as the ethylenically unsaturated monomers for oil phase amount adjustment were homogeneously mixed.

A stable W/O type emulsion was prepared in the same manner as in Example F-13 except that 300 parts by weight of ion-exchanged water as an aqueous phase with respect to 100 parts by weight of the resultant oil phase were continuously supplied dropwise at normal temperature into a stirring/mixing machine as an emulsifying machine fed with the oil phase component. It should be noted that the emulsion had the aqueous phase and the oil phase at a weight ratio of 75/25.

A high-airtight foam (F-15) having a thickness of about 1 mm was obtained by performing the same operation as in Example F-13 except for the foregoing.

Table 10 shows the results.

It should be noted that no crack was generated in the high-airtight foam (F-15) in a 180° bending test.

Further, the resultant high-airtight foam (F-15) had an open-cell structure in which through-holes were present between adjacent spherical cells, and had a density of 0.248 $g/cm^3$, the through-holes each had an average pore diameter of 1.4 $\mu m$, and the foam had surface openings each having an average pore diameter of 2.5 $\mu m$ in a surface thereof.

(Example F-16)

A high-airtight foam (F-16) having a thickness of about 1 mm was obtained in the same manner as in Example F-13 except that, in Example F-13, the usage of the mixed syrup F-4 (solid content: 60 wt%) was changed to 5.8 parts by weight (3.5 parts by weight in terms of solid content), and 70.4 parts by weight of 2EHA and 6.3 parts by weight of AA as the ethylenically unsaturated monomers for oil phase amount adjustment were homogeneously mixed.

Table 10 shows the results.

It should be noted that no crack was generated in the high-airtight foam (F-16) in a 180° bending test.

Further, the resultant high-airtight foam (F-16) had an open-cell structure in which through-holes were present between adjacent spherical cells, and had a density of 0.462 $g/cm^3$, the through-holes each had an average pore diameter of 2.4 $\mu m$, and the foam had surface openings each having an average pore diameter of 3.1 $\mu m$ in a surface thereof.

(Example F-17)

A high-airtight foam (F-17) having a thickness of about 1 mm was obtained in the same manner as in Example F-13 except that, in Example F-13, the usage of the mixed syrup F-4 (solid content: 60 wt%) was changed to 28.6 parts by weight (17.2 parts by weight in terms of solid content), and 48.5 parts by weight of 2EHA and 5.4 parts by weight of AA as the ethylenically unsaturated monomers for oil phase amount adjustment were homogeneously mixed.

Table 10 shows the results.

It should be noted that no crack was generated in the high-airtight foam (F-17) in a 180° bending test.

Further, the resultant high-airtight foam (F-17) had an open-cell structure in which through-holes were present between adjacent spherical cells, and had a density of 0.444 $g/cm^3$, the through-holes each had an average pore diameter of 0.9 $\mu m$, and the foam had surface openings each having an average pore diameter of 2.1 $\mu m$ in a surface thereof.

(Example F-18)

An oil phase was obtained in the same manner as in Example F-13 except that, in Example F-13, the usage of the mixed syrup F-4 (solid content: 60 wt%) was changed to 14.2 parts by weight (8.5 parts by weight in terms of solid content), and 62.4 parts by weight of 2EHA and 5.4 parts by weight of AA as the ethylenically unsaturated monomers for oil phase amount adjustment were homogeneously mixed.

A stable W/O type emulsion was prepared in the same manner as in Example F-13 except that 300 parts by weight of ion-exchanged water as an aqueous phase with respect to 100 parts by weight of the resultant oil phase were continuously supplied dropwise at normal temperature into a stirring/mixing machine as an emulsifying machine fed with the oil phase component. It should be noted that the emulsion had the aqueous phase and the oil phase at a weight ratio of 75/25.

A high-airtight foam (F-18) having a thickness of about 1 mm was obtained by performing the same operation as in Example F-13 except for the foregoing.

Table 10 shows the results.

It should be noted that no crack was generated in the high-airtight foam (F-18) in a 180° bending test.

Further, the resultant high-airtight foam (F-18) had an open-cell structure in which through-holes were present between adjacent spherical cells, and had a density of 0.461 $g/cm^3$, the through-holes each had an average pore diameter of 1.6 $\mu m$, and the foam had surface openings each having an average pore diameter of 2.8 $\mu m$ in a surface thereof.

(Example F-19)

An oil phase was obtained in the same manner as in Example F-13 except that, in Example F-13, the usage of the mixed syrup F-4 (solid content: 60 wt%) was changed to 59.6 parts by weight (35.8 parts by weight in terms of solid content), and 18.7 parts by weight of 2EHA and 4.2 parts by weight of AA as the ethylenically unsaturated monomers for oil phase amount adjustment were homogeneously mixed.

A stable W/O type emulsion was prepared in the same manner as in Example F-13 except that 300 parts by weight of ion-exchanged water as an aqueous phase with respect to 100 parts by weight of the resultant oil phase were continuously supplied dropwise at normal temperature into a stirring/mixing machine as an emulsifying machine fed with the oil phase component. It should be noted that the emulsion had the aqueous phase and the oil phase at a weight ratio of 75/25.

A high-airtight foam (F-19) having a thickness of about 1 mm was obtained by performing the same operation as in Example F-13 except for the foregoing.

Table 10 shows the results.

It should be noted that no crack was generated in the high-airtight foam (F-19) in a 180° bending test.

Further, the resultant high-airtight foam (F-19) had an open-cell structure in which through-holes were present between adjacent spherical cells, and had a density of 0.436 g/cm$^3$, the through-holes each had an average pore diameter of 0.8 $\mu$m, and the foam had surface openings each having an average pore diameter of 2 $\mu$m in a surface thereof.

(Example F-20)

56 Parts by weight (22.4 parts by weight in terms of solid content) of the hydrophilic polyurethane-based polymer/ethylenically unsaturated monomer mixed syrup F-1 obtained in Production Example F-1 (solid content: 40 wt%) were homogeneously mixed with 15 parts by weight of 1,6-hexanediol diacrylate (a product available under the trade name "NK Ester A-HD-N" from Shin Nakamura Chemical Co. , Ltd.) (molecular weight: 226), 87.5 parts by weight (70 parts by weight in terms of solid content) of a urethane acrylate (hereinafter, abbreviated as "UA") (molecular weight: 3,720, dilution monomer: 2EHA, solid content: 80%) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.61 part by weight of diphenyl(2,4,6-trimethylbenzoyl)phosphine oxide (a product available under the trade name "Lucirin TPO" from BASF), 1.02 parts by weight of a hindered phenol-based antioxidant (a product available under the trade name "Irganox 1010" from Ciba Japan), and 21. 5 parts by weight of 2EHA and 5.0 parts by weight of acrylic acid (manufactured by TOAGOSEI Co., Ltd., hereinafter, abbreviated as "AA") as ethylenically unsaturated monomers for oil phase amount adjustment. Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.

The resultant W/O type emulsion was statically stored at normal temperature for 30 minutes, and was then applied onto a substrate subjected to releasing treatment, so as to have a thickness of 1 mm after photoirradiation, and continuously formed into a shape. The top of the resultant was further covered with a polyethylene terephthalate film subjected to releasing treatment andhaving a thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 30 minutes. Thus, a high-airtight foam (F-20) having a thickness of about 1 mm was obtained.

Table 11 shows the results.

It should be noted that no crack was generated in the high-airtight foam (F-20) in a 180° bending test.

Further, the resultant high-airtight foam (F-20) had an open-cell structure in which through-holes were present between adjacent spherical cells, and had a density of 0.248 g/cm$^3$, the through-holes each had an average pore diameter of 1.4 $\mu$m, and the foam had surface openings each having an average pore diameter of 2.5 $\mu$m in a surface thereof.

(Example F-21)

A high-airtight foam (F-21) having a thickness of about 1 mm was obtained in the same manner as in Example F-20 except that, in Example F-20, the usage of the mixed syrup F-1 (solid content: 40 wt%) was changed to 55.1 parts by weight (22.0 parts by weight in terms of solid content), the usage of 1, 6-hexanediol diacrylate (a product available under the trade name "NK Ester A-HD-N" from Shin Nakamura Chemical Co. , Ltd.) (molecular weight: 226) was changed to 12 parts by weight, and 22.3 parts by weight of 2EHA and 5.1 parts by weight of AA as the ethylenically unsaturated monomers for oil phase amount adjustment were homogeneously mixed.

Table 11 shows the results.

It should be noted that no crack was generated in the high-airtight foam (F-21) in a 180° bending test.

Further, the resultant high-airtight foam (F-21) had an open-cell structure in which through-holes were present between adjacent spherical cells, and had a density of 0.247 g/cm$^3$, the through-holes each had an average pore diameter of 1.3 $\mu$m, and the foam had surface openings each having an average pore diameter of 2.2 $\mu$m in a surface thereof.

(Example F-22)

A high-airtight foam (F-22) having a thickness of about 1 mm was obtained in the same manner as in Example F-20 except that, in Example F-20, the usage of the mixed syrup F-1 (solid content: 40 wt%) was changed to 54.2 parts by weight (21.7 parts by weight in terms of solid content), the usage of 1, 6-hexanediol diacrylate (a product available under the trade name "NK Ester A-HD-N" from Shin Nakamura Chemical Co. , Ltd.) (molecular weight: 226) was changed to 9 parts by weight, and 23.2 parts by weight of 2EHA and 5.1 parts by weight of AA as the ethylenically unsaturated monomers for oil phase amount adjustment were homogeneously mixed.
Table 11 shows the results.
It should be noted that no crack was generated in the high-airtight foam (F-22) in a 180° bending test.
Further, the resultant high-airtight foam (F-22) had an open-cell structure in which through-holes were present between adjacent spherical cells, and had a density of 0.26 g/cm$^3$, the through-holes each had an average pore diameter of 1.2 $\mu$m, and the foam had surface openings each having an average pore diameter of 2.1 $\mu$m in a surface thereof.

(Example F-23)

A high-airtight foam (F-23) having a thickness of about 1 mm was obtained in the same manner as in Example F-20 except that, in Example F-20, 15 parts by weight of trimethylolpropane triacrylate (a product available under the trade name "TMPTA" from Shin Nakamura Chemical Co., Ltd.) were used in place of 15 parts by weight of 1, 6-hexanediol diacrylate (a product available under the trade name "NK Ester A-HD-N" from Shin Nakamura Chemical Co., Ltd.) (molecular weight: 226).
Table 11 shows the results.
It should be noted that no crack was generated in the high-airtight foam (F-23) in a 180° bending test.
Further, the resultant high-airtight foam (F-23) had an open-cell structure in which through-holes were present between adjacent spherical cells, and had a density of 0.243 g/cm$^3$, the through-holes each had an average pore diameter of 1.1 $\mu$m, and the foam had surface openings each having an average pore diameter of 2.1 $\mu$m in a surface thereof.

(Example F-24)

A high-airtight foam (F-24) having a thickness of about 1 mm was obtained in the same manner as in Example F-20 except that, in Example F-20, 15 parts by weight of pentaerythritol tetraacrylate (a product available under the trade name "V#400" from OSAKA ORGANIC CHEMICAL INDUSTRY LTD.) were used in place of 15 parts by weight of 1,6-hexanediol diacrylate (a product available under the trade name "NK Ester A-HD-N" from Shin Nakamura Chemical Co., Ltd.) (molecular weight: 226).
Table 11 shows the results.
It should be noted that no crack was generated in the high-airtight foam (F-24) in a 180° bending test.
Further, the resultant high-airtight foam (F-24) had an open-cell structure in which through-holes were present between adjacent spherical cells, and had a density of 0.243 g/cm$^3$, the through-holes each had an average pore diameter of 1.1 $\mu$m, and the foam had surface openings each having an average pore diameter of 2.1 $\mu$m in a surface thereof.

[Table 10]

| | | | Example F-13 | Example F-14 | Example F-15 | Example F-16 | Example F-17 | Example F-18 | Example F-19 |
|---|---|---|---|---|---|---|---|---|---|
| W/O type Em foam | Polymerization-reactive syrup (60 wt%) | Kind | Syrup F-4 | Syrup F-4 | Syrup F-4 | Syrup F-4 | Syrup F-4 | Syrup F-4 | Syrup F-4 |
| | | Part(s) | 15.2 | 23.1 | 37.3 | 5.8 | 28.6 | 14.2 | 59.6 |
| | NK Ester A-HD-N | Part(s) | 15 | 15 | 15 | 15 | 15 | 15 | 15 |
| | Unsaturated urethane acrylate (80 wt%) | Dilution | 2EHA | 2EHA | 2EHA | 2EHA | 2EHA | 2EHA | 2EHA |
| | | Part(s) | 87.5 | 87.5 | 87.5 | 87.5 | 87.5 | 87.5 | 87.5 |
| | Lucirin TPO | Part(s) | 0.61 | 0.61 | 0.61 | 0.61 | 0.61 | 0.61 | 0.61 |
| | Irganox 1010 | Part(s) | 1.02 | 1.02 | 1.02 | 1.02 | 1.02 | 1.02 | 1.02 |
| | Ethylenically unsaturated monomer for oil phase amount adjustment | 2EHA Part(s) | 61.4 | 53.8 | 40.1 | 70.4 | 48.5 | 62.4 | 18.7 |
| | | IBXA Part(s) | 0.0 | 0.0 | 0.0 | 0 | 0 | 0 | 0 |
| | | AA Part(s) | 5.9 | 5.6 | 5.0 | 6.3 | 5.4 | 5.9 | 4.2 |
| | Cell content | | 55% | 65% | 75% | 55% | 55% | 75% | 75% |
| | Thickness | mm | 1.0 | 1.0 | 1.0 | 1.0 | 1.0 | 1.0 | 1.0 |
| Average pore diameter | | $\mu$m | 5.2 | - | 6.2 | 17.7 | 4.1 | 10.4 | 2.3 |
| 50% Compression load | | $N/mm^2$ | 0.96 | 0.46 | 0.18 | 0.93 | 1.09 | 0.20 | 0.17 |
| Foam passing-through particle | | Pixel×Pixel | 72 | 9 | 16 | 88 | 17 | 641 | 3 |

[Table 11]

| | | | | Example F-20 | Example F-21 | Example F-22 | Example F-23 | Example F-24 |
|---|---|---|---|---|---|---|---|---|
| W/O type Em foam | Polymerization-reactive syrup (40 wt%) | | Kind | Syrup F-1 | Syrup F-1 | Syrup F-1 | Syrup F-1 | Syrup F-1 |
| | | | Part(s) | 56.0 | 55.1 | 54.2 | 56.0 | 56.0 |
| | NK Ester A-HD-N | | Part(s) | 15 | 12 | 9 | | |
| | TMPTA | | Part(s) | | | | 15 | |
| | V#400 | | Part(s) | | | | | 15 |
| | Unsaturated urethane acrylate (80 wt%) | | Dilution | 2EHA | 2EHA | 2EHA | 2EHA | 2EHA |
| | | | Part(s) | 87.5 | 87.5 | 87.5 | 87.5 | 87.5 |
| | Lucirin TPO | | Part(s) | 0.61 | 0.61 | 0.61 | 0.61 | 0.61 |
| | Irganox 1010 | | Part(s) | 1.02 | 1.02 | 1.02 | 1.02 | 1.02 |
| | Ethylenically unsaturated monomer for oil phase amount adjustment | 2EHA | Part(s) | 21.5 | 22.3 | 23.2 | 21.5 | 21.5 |
| | | IBXA | Part(s) | 0 | 0 | 0 | 0 | 0 |
| | | AA | Part(s) | 5.0 | 5.1 | 5.1 | 5.0 | 5.0 |
| | Cell content | | | 75% | 75% | 75% | 75% | 75% |
| | Thickness | | mm | 1.0 | 1.0 | 1.0 | 1.0 | 1.0 |
| Average pore diameter | Spherical cell | | μm | - | - | - | - | - |
| 50% Compression load | | | N/mm$^2$ | 0.17 | 0.15 | 0.12 | 0.26 | 0.32 |
| Foam passing-through particle | | | Pixel×Pixel | 11 | 47 | 69 | 52 | 54 |

(Production Example G-1) : Preparation of mixed syrup G-1

A reactor equipped with a cooling tube, a temperature gauge, and a stirrer was fed with 173.2 parts by weight of a monomer solution formed of 2-ethylhexyl acrylate (manufactured by TOAGOSEI CO., LTD., hereinafter, abbreviated as "2EHA") as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of dibutyltin dilaurate (manufactured by KISHIDA CHEMICAL Co., Ltd., hereinafter, abbreviated as "DBTL") as a urethane reaction catalyst. To the stirred mixture were added dropwise 12.4 parts by weight of hydrogenated xylylene diisocyanate (manufactured by Takeda Pharmaceutical Co., Ltd., TAKENATE 600, hereinafter, abbreviated as "HXDI"), and the resultant mixture was subjected to a reaction at 65°C for 4 hours. It should be noted that the usage of a polyisocyanate component and a polyol component in terms of NCO/OH (equivalent ratio) was 1.6. After that, 5. 6 parts by weight of 2-hydroxyethyl acrylate (manufactured by KISHIDA CHEMICAL Co., Ltd., hereinafter, abbreviated as "HEA") were added dropwise, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer had a weight average molecular weight of 15, 000. To 100 parts by weight of the resultant hydrophilic polyurethane-based polymer/ethylenically unsaturated monomer mixed syrup were added 25 parts by weight of 2EHA, 56 parts by weight of n-butyl acrylate (manufactured by TOAGOSEI CO., LTD., hereinafter, abbreviated as "BA"), 17.9 parts by weight of isobornyl acrylate (manufactured by OSAKA CHEMICAL INDUSTRY LTD., hereinafter, abbreviated as "IBXA"), and 10.7 parts by weight of acrylic acid (manufactured by TOAGOSEI CO., LTD., hereinafter, abbreviated as "AA") as a polar monomer. Thus, a hydrophilic polyurethane-based polymer/ethylenically unsaturated monomer mixed syrup G-1 was obtained.

(Example G-1)

100 Parts by weight of the hydrophilic polyurethane-based polymer/ethylenically unsaturated monomer mixed syrup G-1 obtained in Production Example G-1 were homogeneously mixed with 11.9 parts by weight of 1,6-hexanediol diacrylate (a product available under the trade name "NK Ester A-HD-N" from Shin Nakamura Chemical Co. , Ltd.) (molecular weight: 226), 47.7 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.41 part by weight of diphenyl(2,4,6-trimethylbenzoyl)phosphine oxide (a product available under the trade name "Lucirin TPO" from BASF) , and 0.69 part by weight of a hindered phenol-based antioxidant (a product available under the trade name "Irganox 1010" from Ciba Japan) . Thus, a continuous oil phase component (hereinafter, referred to as "oil phase") was obtained. Meanwhile, 300 parts by weight ofion-exchanged water asan aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 1 hour, andwas then applied onto a substrate subjected to releasing treatment, so as to have a thickness of 1 mm after photoirradiation, and continuously formed into a shape. The top of the resultant was further covered with a polyethylene terephthalate film subjected to releasing treatment and having a thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 20 minutes. Thus, a heat-resistant impact-absorbing foam (G-1) having a thickness of about 1 mm was obtained.
Table 12 shows the results.
It should be noted that no crack was generated in the heat-resistant impact-absorbing foam (G-1) in a 180° bending test. Further, the resultant heat-resistant impact-absorbing foam (G-1) had an open-cell structure in which through-holes were present between adjacent spherical cells, and had a cell content of 75%, and the foam had surface openings each having an average pore diameter of 2.8 $\mu$m in a surface thereof.

(Example G-2)

A stable W/O type emulsion was prepared in the same manner as in Example G-1 except that 566.7 parts by weight of ion-exchanged water as an aqueous phase were continuously supplied dropwise at normal temperature. It should be noted that the emulsion had the aqueous phase and the oil phase at a weight ratio of 85/15.
The W/O type emulsion statically stored at room temperature for 30 minutes after the preparation was applied onto a polyethylene terephthalate film (hereinafter, referred to as "PET film") subjected to releasing treatment and having a thickness of 38 $\mu$m, so that the thickness of a foamed layer was 500 $\mu$m after photoirradiation, and continuously formed into a sheet shape. The top of the resultant sheet was further laminated with a polyester fiber laminated fabric having a thickness of 70 $\mu$m (a product available under the trade name "MILIFE (trademark) TY0505FE" from JX Nippon ANCI, Inc.) obtained by laminating polyester long fibers arranged in a matrix in a plane. Further, a PET film subjected to releasing treatment and having a thickness of 38 $\mu$m, onto which a W/O type emulsion statically stored at room temperature for 30 minutes after the preparation was applied so that the thickness of a foamed layer was 500 $\mu$m after photoirradiation, was separately prepared, and the polyester fiber laminated fabric was covered with the applied surface of the film. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 20 minutes. Thus, a heat-resistant impact-absorbing foam (G-2) having a thickness of about 1 mm was obtained.
Table 12 shows the results.
It should be noted that no crack was generated in the heat-resistant impact- absorbing foam (G-2) in a 180° bending test. Further, the resultant heat-resistant impact-absorbing foam (G-2) had an open-cell structure in which through-holes were present between adjacent spherical cells, and had a cell content of 84%, and the foam had surface openings each having an average pore diameter of 4.1 $\mu$m in a surface thereof.

[Table 12]

| | | | | Example G-1 | Example G-2 |
|---|---|---|---|---|---|
| Oil phase | Polymerization-reactive syrup | Syrup G-1 | [part (s)] | 100 | 100 |
| | Cross-linking agent | Compounding amount of reactive oligomer A-HD-N | [part (s)] / [part(s)] | 48 / 12 | 48 / 12 |
| | Polymerization initiator | Lucirin TPO | [part (s)] | 0.5 | 0.5 |
| | Antioxidant | Irganox 1010 | [part(s)] | 1.0 | 1.0 |
| Aqueous phase | Ion-exchanged water | | [part(s)] | 503 | 949 |
| Structure of foam | Average pore diameter of spherical cell Average pore diameter of through-hole Density | | [μm] / [μm] / [g/cm$^3$] | 3.2 / 1.1 / 0.273 | 4.4 / 2.6 / 0.170 |
| 50% Compression load | | | [N/ cm$^2$] | 12.4 | 5.5 |
| Heat resistance | 50% Compression load after heating storage | @100°C×22hrs / @125°C×22hrs / @150°C×22hrs | [N/cm$^2$] / [N/cm$^2$] / [N/cm$^2$] | 12.4 / 12.8 / 12.6 | 5.4 / 5.6 / 5.4 |
| | Rate of dimensional change after storage at 125°C | | [%] | -0.4 | -0.3 |
| Impact absorptivity | Compression rate | 5% / 20% / 40% / 60% / 80% | [%] / [%] / [%] / [%] / [%] | 74.5 / 73.2 / 74.3 / 73.5 / 63.8 | 80.7 / 80.5 / 82.2 / 80.4 / 77.7 |

(Production Example H-1): Preparation of mixed syrup H-1

The mixed syrup G-1 obtained in Production Example G-1 was used as a hydrophilic polyurethane-based polymer/ethylenically unsaturated monomer mixed syrup H-1 without being subjected to any treatment.

(Example H-1) : Production of test piece H-1

100 Parts by weight of the hydrophilic polyurethane-based polymer/ethylenically unsaturated monomer mixed syrup H-1 obtained in Production Example H-1 were homogeneously mixed with 11.9 parts by weight of 1,6-hexanediol diacrylate (a product available under the trade name "NK Ester A-HD-N" from Shin Nakamura Chemical Co., Ltd.) (molecular weight: 226) , 47.7 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.41 part by weight of diphenyl(2,4,6-trimethylbenzoyl)phosphine oxide (a product available under the trade name "Lucirin TPO" from BASF) , and 0. 69 part by weight of a hindered phenol-based antioxidant (a product available under the trade name "Irganox 1010" from Ciba Japan) . Thus, a continuous oil phase component (hereinafter, referred to as "oil phase") was obtained. Meanwhile, 300 parts by weight of ion-exchangedwater as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 1 hour, andwas then applied onto a substrate subjected to releasing treatment, so as to have a thickness of 1 mm after photoirradiation, and continuously formed into a shape. The top of the resultant was further covered with a polyethylene terephthalate film subjected to releasing treatment and having a thickness of 38 μm. The sheet was irradiated with UV light at a light illuminance of 5

mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 20 minutes. Thus, a liquid-absorbing open-cell porous material (H-1) having a thickness of about 1 mm was obtained. The material was used as test piece H-1.

It should be noted that no crack was generated in the liquid-absorbing open-cell porous material (H-1) in a 180° bending test.

Further, the resultant liquid-absorbing open-cell porous material (H-1) had an open-cell structure in which through-holes were present between adjacent spherical cells, and had a cell content of 75%.

(Example H-2): Production of test piece H-2

A stable W/O type emulsion was prepared in the same manner as in Example H-1.

The W/O type emulsion statically stored at room temperature for 30 minutes after the preparation was applied onto a polyethylene terephthalate film (hereinafter, referred to as "PET film") subjected to releasing treatment and having a thickness of 38 μm, so that the thickness of a porous layer was 150 μm after photoirradiation, and continuously formed into a sheet shape. The top of the resultant sheet was further laminated with a polyester fiber laminated fabric having a thickness of 70 μm (a product available under the trade name "MILIFE (trademark) TY0505FE" from JX Nippon ANCI, Inc.) obtained by laminating polyester long fibers arranged in a matrix in a plane. Further, a PET film subj ected to releasing treatment and having a thickness of 38 μm, onto which a W/O type emulsion statically stored at room temperature for 30 minutes after the preparation was applied so that the thickness of a porous layer was 150 μm after photoirradiation, was separately prepared, and the polyester fiber laminated fabric was covered with the applied surface of the film. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 300 μm was obtained. Next, the upper surface film was peeled off, and the high-water-content cross-linked polymer was heated at 130°C over 20 minutes. Thus, a liquid-absorbing open-cell porous material (H-2) having a thickness of about 300 μm was obtained. The material was used as test piece H-2. It should be noted that no crack was generated in the liquid-absorbing open-cell porous material (H-2) in a 180° bending test.

The resultant liquid-absorbing open-cell porous material (H-2) had an open-cell structure in which through-holes were present between adjacent spherical cells, and had a cell content of 74%, the spherical cells each had an average pore diameter of 5.5 μm, the through-holes each had an average pore diameter of 1.2 μm, and the foam had surface openings each having an average pore diameter of 2.8 μm in a surface thereof.

(Example H-3): Production of test piece H-3

A stable W/O type emulsion was prepared by performing the same operation as in Example H-1 except that, in Example H-1, 186 parts by weight of ion-exchanged water as an aqueous phase were continuously supplied dropwise at normal temperature. It should be noted that the emulsion had the aqueous phase and the oil phase at a weight ratio of 65/35.

Next, a liquid-absorbing open-cell porous material (H-3) having a thickness of about 300 μm was obtained by subjecting the resultant W/O type emulsion to the same operation as in Example H-2. The material was used as a test piece H-3. It should be noted that no crack was generated in the liquid-absorbing open-cell porous material (H-3) in a 180° bending test.

The resultant liquid-absorbing open-cell porous material (H-3) had an open-cell structure in which through-holes were present between adjacent spherical cells, and had a cell content of 65%, the spherical cells each had an average pore diameter of 4.1 μm, the through-holes each had an average pore diameter of 0.9 μm, and the foam had surface openings each having an average pore diameter of 2.1 μm in a surface thereof.

(Example H-4): Production of test piece H-4

A stable W/O type emulsion was prepared by performing the same operation as in Example H-1 except that, in Example H-1, 566.7 parts by weight of ion-exchanged water as an aqueous phase were continuously supplied dropwise at normal temperature. It should be noted that the emulsion had the aqueous phase and the oil phase at a weight ratio of 85/15.

Next, a liquid-absorbing open-cell porous material (H-4) having a thickness of about 400 μm was obtained by subjecting the resultant W/O type emulsion to the same operation as in Example H-2. The material was used as a test piece H-4. It should be noted that no crack was generated in the liquid-absorbing open-cell porous material (H-4) in a 180° bending test.

The resultant liquid-absorbing open-cell porous material (H-4) had an open-cell structure in which through-holes were present between adjacent spherical cells, and had a cell content of 85%, the spherical cells each had an average pore diameter of 10.2 μm, the through-holes each had an average pore diameter of 2.4 μm, and the foam had surface openings each having an average pore diameter of 4.1 μm in a surface thereof.

(Example H-5)

The test piece H-1 was immersed in ion-exchanged water for 30 minutes, measured for its liquid absorptivity (immersion time=30 minutes) (primary immersion test), measured for its rate of dimensional change after the liquid absorption (primary immersion test), and observed for its external appearance after the liquid absorption (primary immersion test).
Next, the test piece H-1 that had absorbed ion-exchanged water after the primary immersion test was subsequently immersed in ion-exchanged water for 30 minutes, measured for its liquid absorptivity (immersion time=30 minutes) (secondary immersion test), measured for its rate of dimensional change after the liquid absorption (secondary immersion test), and observed for its external appearance after the liquid absorption (secondary immersion test).
Table 13 shows the results.

(Example H-6)

The test piece H-1 was immersed in toluene for 30 minutes, measured for its liquid absorptivity (immersion time=30 minutes) (primary immersion test), measured for its rate of dimensional change after the liquid absorption (primary immersion test), and observed for its external appearance after the liquid absorption (primary immersion test).
Next, the test piece H-1 that had absorbed toluene after the primary immersion test was subsequently immersed in toluene for 30 minutes, measured for its liquid absorptivity (immersion time=30 minutes) (secondary immersion test), measured for its rate of dimensional change after the liquid absorption (secondary immersion test), and observed for its external appearance after the liquid absorption (secondary immersion test).
Table 13 shows the results.

(Example H-7)

The test piece H-1 was immersed in ion-exchanged water for 30 minutes, measured for its liquid absorptivity (immersion time=30 minutes) (primary immersion test), measured for its rate of dimensional change after the liquid absorption (primary immersion test), and observed for its external appearance after the liquid absorption (primary immersion test).
Next, the test piece H-1 that had absorbed ion-exchanged water after the primary immersion test was subsequently immersed in toluene for 30 minutes, measured for its liquid absorptivity (immersion time=30 minutes) (secondary immersion test), measured for its rate of dimensional change after the liquid absorption (secondary immersion test), and observed for its external appearance after the liquid absorption (secondary immersion test).
Even when the test piece H-1 that had absorbed ion-exchanged water after the primary immersion test was subsequently immersed in toluene for 30 minutes, the separation of ion-exchanged water was not observed.
Table 13 shows the results.
[Table 13]

|  |  |  | Example H-5 | Example H-6 | Example H-7 |
|---|---|---|---|---|---|
| Kind of test piece |  |  | Test piece H-1 | Test piece H-1 | Test piece H-1 |
| Volume density |  | [g/cm³] | 0.262 | 0.262 | 0.262 |
| Average pore diameter | Spherical cell | [μm] | 3.9 | 3.9 | 3.9 |
|  | Through-hole | [μm] | 1.1 | 1.1 | 1.1 |
|  | Surface opening | [μm] | 2.3 | 2.3 | 2.3 |
| Heat resistance | Rate of dimensional change by heating | [%] | -0.8 | -0.8 | -0.8 |

(continued)

| | | | Example H-5 | Example H-6 | Example H-7 |
|---|---|---|---|---|---|
| Primary immersion test (immersion time; 30 minutes) | Kind of liquid | | Ion-exchanged water | Toluene | Ion-exchanged water |
| | Liquid absorptivity External appearance Rate of dimensional change after liquid absorption | [wt%] | 237 White | 583 Transparent | 243 White |
| | | [%] | 1.1 | 26.2 | 1.1 |
| Secondary immersion test (immersion time; 30 minutes) | Kind of liquid Liquid absorptivity External appearance Rate of dimensional change after liquid absorption | [wt%] | Ion-exchanged water 243 White | Toluene 584 Transparent | Toluene 569 White |
| | | [%] | 1.1 | 26.2 | 25.1 |

(Example H-8)

The test piece H-2 was used and subjected to a re-immersion test in each of ethanol, hydrochloric acid (10% aqueous solution) , hydrochloric acid (3% aqueous solution) , and ion-exchanged water. Further, the test piece was measured for its rate of dimensional change after the primary immersion test.
Table 14 shows the results.

(Example H-9)

The test piece H-3 was used and subjected to a re-immersion test in each of ethanol, hydrochloric acid (10% aqueous solution) , hydrochloric acid (3% aqueous solution) , and ion-exchanged water. Further, the test piece was measured for its rate of dimensional change after the primary immersion test.
Table 14 shows the results.

(Example H-10)

The test piece H-4 was used and subjected to a re-immersion test in each of ethanol, hydrochloric acid (10% aqueous solution) , hydrochloric acid (3% aqueous solution) , and ion-exchanged water. Further, the test piece was measured for its rate of dimensional change after the primary immersion test.
Table 14 shows the results.

(Comparative Example H-1)

A commercially available urethane foam (manufactured by Rogers Inoac Corporation, "PORON" (trademark)) was used and subjected to a re-immersion test in each of ethanol, hydrochloric acid (10% aqueous solution), hydrochloric acid (3% aqueous solution), and ion-exchanged water. Further, the urethane foam was measured for its rate of dimensional change after the primary immersion test.
Table 14 shows the results.
[Table 14]

| | Example H-8 | Example H-9 | Example H-10 | Comparative Example H-1 |
|---|---|---|---|---|
| Kind of test piece | Test piece H-2 | Test piece H-3 | Test piece H-4 | Commercially available urethane foam |

(continued)

| | | | Example H-8 | Example H-9 | Example H-10 | Comparative Example H-1 |
|---|---|---|---|---|---|---|
| Volume density | | [g/cm$^3$] | 0.273 | 0.349 | 0.170 | 0.400 |
| Thickness of test piece | | [μm] | 300 | 300 | 400 | 1,000 |
| Primary immersion test | Ethanol absorptivity | [wt%] | 275 | 198 | 448 | 261 |
| | Hydrochloric acid (10% aq.) absorptivity | [wt%] | 269 | 182 | 482 | 71 |
| | Hydrochloric acid (3% aq.) absorptivity | [wt%] | 247 | 173 | 455 | 68 |
| | Ion-exchanged water absorptivity | [wt%] | 253 | 164 | 435 | 26 |
| Rate of dimensional change after primary immersion test | Ethanol absorptivity | [%] | 1.1 | 0.9 | 1.1 | 1.3 |
| | Hydrochloric acid (10% aq.) absorptivity | [%] | 1.1 | 0.8 | 1.1 | 0.3 |
| | Hydrochloric acid (3% aq.) absorptivity | [%] | 0.9 | 0.8 | 1.0 | 0.3 |
| | Ion-exchanged water absorptivity | [%] | 1.0 | 0.8 | 1.1 | 0.2 |
| Re-immersion test | Ethanol absorptivity | [wt%] | 274 | 198 | 446 | 180 |
| | Hydrochloric acid (10% aq.) absorptivity | [wt%] | 266 | 180 | 482 | 55 |
| | Hydrochloric acid (3% aq.) absorptivity | [wt%] | 248 | 174 | 453 | 53 |
| | Ion-exchanged water absorptivity | [wt%] | 253 | 164 | 436 | 18 |

(Production Example I-1) : Preparation of mixed syrup I-1

The mixed syrup G-1 obtained in Production Example G-1 was used as a hydrophilic polyurethane-based polymer/ethylenically unsaturated monomer mixed syrup I-1 without being subjected to any treatment.

(Example I-1)

100 Parts by weight of the hydrophilic polyurethane-based polymer/ethylenically unsaturated monomer mixed syrup I-1 obtained in Production Example I-1 were homogeneously mixed with 11.9 parts by weight of 1,6-hexanediol diacrylate (a product available under the trade name "NK Ester A-HD-N" from Shin Nakamura Chemical Co., Ltd.)

(molecular weight: 226), 47.7 parts by weight of a urethane acrylate (hereinafter, abbreviated as "UA") (molecular weight: 3,720) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.41 part by weight of diphenyl(2,4,6-trimethylbenzoyl)phosphine oxide (a product available under the trade name "Lucirin TPO" from BASF), and 0.69 part by weight of a hindered phenol-based antioxidant (a product available under the trade name "Irganox 1010" from Ciba Japan). Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.

The resultant W/O type emulsion was statically stored at normal temperature for 1 hour, andwas then applied onto a substrate subjected to releasing treatment, so as to have a thickness of 1 mm after photoirradiation, and continuously formed into a shape. The top of the resultant was further covered with a polyethylene terephthalate film subjected to releasing treatment and having a thickness of 38 $\mu$m. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 20 minutes. Thus, a heat-resistant low-thermal conductive foam (I-1) having a thickness of about 1 mm was obtained. Table 15 shows the results.

It should be noted that no crack was generated in the heat-resistant low-thermal conductive foam (I-1) in a 180° bending test.

Further, the resultant heat-resistant low-thermal conductive foam (I-1) had an open-cell structure in which through-holes were present between adjacent spherical cells, and had a cell content of 75%, and the foam had surface openings each having an average pore diameter of 2.8 $\mu$m in a surface thereof.

(Example I-2)

A stable W/O type emulsion was prepared in the same manner as in Example I-1 except that 230 parts by weight of ion-exchanged water as an aqueous phase were continuously supplied dropwise at normal temperature. It should be noted that the emulsion had the aqueous phase and the oil phase at a weight ratio of 60/40.

The W/O type emulsion statically stored at room temperature for 30 minutes after the preparation was applied onto a polyethylene terephthalate film (hereinafter, referred to as "PET film") subjected to releasing treatment and having a thickness of 38 $\mu$m, so that the thickness of a foamed layer was 500 $\mu$m after photoirradiation, and continuously formed into a sheet shape. The top of the resultant sheet was further laminated with a polyester fiber laminated fabric having a thickness of 70 $\mu$m (a product available under the trade name "MILIFE (trademark) TY0505FE" from JX Nippon ANCI, Inc.) obtained by laminating polyester long fibers arranged in a matrix in a plane. Further, a PET film subjected to releasing treatment and having a thickness of 38 $\mu$m, onto which a W/O type emulsion statically stored at room temperature for 30 minutes after the preparation was applied so that the thickness of a foamed layer was 500 $\mu$m after photoirradiation, was separately prepared, and the polyester fiber laminated fabric was covered with the applied surface of the film. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 20 minutes. Thus, a heat-resistant low-thermal conductive foam (I-2) having a thickness of about 1 mm was obtained.

Table 15 shows the results.

It should be noted that no crack was generated in the heat-resistant low-thermal conductive foam (1-2) in a 180° bending test.

Further, the resultant heat-resistant low-thermal conductive foam (I-2) had an open-cell structure in which through-holes were present between adj acent spherical cells, and had a cell content of 58%, and the foam had surface openings each having an average pore diameter of 2.8 $\mu$m in a surface thereof.

[Table 15]

| | | | | Example I-1 | Example I-2 |
|---|---|---|---|---|---|
| Oil phase | Polymerization-reactive syrup | Syrup I-1 | [part (s)] | 100 | 100 |
| | Cross-linking agent | Reactive oligomer compounding amount | [part(s)] | 48 | 48 |
| | | A-HD-N | [part(s)] | 12 | 12 |
| | Polymerization initiator | Lucirin TPO | [part (s)] | 0.5 | 0.5 |
| | Antioxidant | Irganox 1010 | [part(s)] | 1.0 | 1.0 |
| Aqueous phase | Ion-exchanged water | | [part(s)] | 503 | 230 |
| Structure of foam | Average diameter | Spherical cell | [μm] | 3.2 | 2.4 |
| | | Through-hole | [μm] | 1.1 | 0.6 |
| | Volume density | | [g/cm$^3$] | 0.273 | 0.445 |
| 50% Compression load | | | [N/cm$^2$] | 12.4 | 32.2 |
| Heat resistance | 50% Compression load after heating storage | @100°C×22hrs | [N/cm$^2$] | 12.4 | 32.9 |
| | | @125°C×22hrs | [N/cm$^2$] | 12.8 | 32.9 |
| | | @150°C×22hrs | [N/cm$^2$] | 12.6 | 32.6 |
| | Rate of dimensional change after storage at 125°C | | [%] | -0.4 | -0.5 |
| Thermal conductivity | Compression rate | 5 [%] | [W/(m·K)] | 0.056 | 0.070 |
| | | 20 [%] | [W/(m·K)] | 0.060 | 0.071 |

(Production Example J-1) : Preparation of mixed syrup J-1

The mixed syrup E-1 obtained in Production Example E-1 was used as a hydrophilic polyurethane-based polymer/ethylenically unsaturated monomer mixed syrup J-1 without being subjected to any treatment.

(Example J-1)

53 Parts by weight (21.2 parts by weight in terms of solid content) of the mixed syrup J-1 obtained in Production Example J-1 (solid content: 40 wt%) were homogeneously mixed with 15 parts by weight of 1, 6-hexanediol diacrylate (a product available under the trade name "NK Ester A-HD-N" from Shin Nakamura Chemical Co. , Ltd.) (molecular weight: 226), 75 parts by weight (60 parts by weight in terms of solid content) of a urethane acrylate (hereinafter, abbreviated as "UA") (molecular weight: 3,720, dilution monomer: 2EHA, solid content: 80%) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.55 part by weight of diphenyl(2,4,6-trimethylbenzoyl)phosphine oxide (a product available under the trade name "Lucirin TPO" from BASF), 1.11 parts by weight of a hindered phenol-based antioxidant (a product available under the trade name "Irganox 1010" from BASF), and 26.9 parts by weight of 2EHA and 5.1 parts by weight of acrylic acid (hereinafter, abbreviated as "AA") as ethylenically unsaturated monomers for oil phase amount adjustment. Thus, a continuous oil phase component (hereinafter, referred to as "oil phase") was obtained. Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The resultant W/O type emulsion was statically stored at normal temperature for 30 minutes, and was then applied onto a substrate subjected to releasing treatment, so as to have a thickness of 1 mm after photoirradiation, and continuously formed into a shape. The top of the resultant was further covered with a polyethylene terephthalate film subjected to releasing treatment andhavinga thickness of 38 μm. The sheet was irradiated with UV light at a light illuminance of 5

mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 1 mm was obtained. Next, the upper surface film was peeled off, and the high-water-content cross-linked polymer was heated at 130°C over 30 minutes. Thus, a weather-resistant foam (J-1) having a thickness of about 1 mm was obtained.

Table 16 shows the results.

It should be noted that no crack was generated in the weather-resistant foam (J-1) in a 180° bending test.

Further, the resultant weather-resistant foam (J-1) had an open-cell structure inwhich through-holes were present between adjacent spherical cells, and had a density of 0.247 g/cm$^3$, the spherical cells each had an average pore diameter of 4.4 $\mu$m, the through-holes each had an average pore diameter of 1.1 $\mu$m, and the foam had surface openings each having an average pore diameter of 2 $\mu$m in a surface thereof.

(Example J-2)

A weather-resistant foam (J-2) having a thickness of about 1 mm was obtained in the same manner as in Example J-1 except that, in Example J-1, 54.4 parts by weight (21.8 parts by weight in terms of solid content) of the mixed syrup J-1 (solid content: 40 wt%) obtained in Production Example J-1 were homogeneously mixed with 15 parts by weight of 1,6-hexanediol diacrylate (a product available under the trade name "NK Ester A-HD-N" from Shin Nakamura Chemical Co., Ltd.) (molecular weight: 226), 75 parts by weight (60 parts by weight in terms of solid content) of a urethane acrylate (hereinafter, abbreviated as "UA") (molecular weight: 3,720, dilution monomer: 2EHA, solid content: 80%) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as "IPDI") were treated with HEA, as a reactive oligomer, 0.55 part by weight of diphenyl(2,4,6-trimethylbenzoyl)phosphine oxide (product available under the trade name "Lucirin TPO" from BASF), 1.11 parts by weight of a hindered phenol-based antioxidant (a product available under the trade name "Irganox 1010" from BASF), and 25.5 parts by weight of 2EHA and 5.1 parts by weight of acrylic acid (hereinafter, abbreviated as "AA") as ethylenically unsaturated monomers for oil phase amount adjustment, and were additionally mixed with 2.32 parts by weight of TINUVIN 123 (manufactured by BASF) and 2.32 parts by weight of TINUVIN 400 (manufactured by BASF) to prepare a continuous oil phase component (hereinafter, referred to as "oil phase").

Table 16 shows the results.

It should be noted that no crack was generated in the weather-resistant foam (J-2) in a 180° bending test.

Further, the weather-resistant foam (J-2) had an open-cell structure in which through-holes were present between adjacent spherical cells, and had a density of 0.249 g/cm$^3$, the spherical cells each had an average pore diameter of 4.4 $\mu$m, the through-holes each had an average pore diameter of 1.1 $\mu$m, and the foam had surface openings each having an average pore diameter of 2 $\mu$m in a surface thereof.

[Table 16]

| | | | | Example J-1 | Example J-2 |
|---|---|---|---|---|---|
| W/O type Em foam | Polymerization-reactive syrup (40 wt%) | | Kind | Syrup J-1 | Syrup J-1 |
| | | | Part (s) | 56.0 | 57.4 |
| | NK Ester A-HD-N | | Part(s) | 15.0 | 15.0 |
| | Unsaturated urethane acrylate (80 wt%) | | Dilution | 2EHA | 2EHA |
| | | | Part(s) | 87.5 | 87.5 |
| | Lucirin TPO | | Part(s) | 0.55 | 0.55 |
| | Irganox 1010 | | Part(s) | 1.11 | 1.11 |
| | TINUVIN 123 | | Part(s) | - | 2.32 |
| | TINUVIN 400 | | Part(s) | - | 2.32 |
| | Ethylenically unsaturated monomer for oil phase amount adjustment | 2EHA | Part(s) | 21.5 | 20.1 |
| | | AA | Part(s) | 5.0 | 5.0 |
| | Cell content | | % | 75.0 | 75.0 |
| | Thickness | | mm | 1.0 | 1.0 |

(continued)

|  |  |  |  | Example J-1 | Example J-2 |
|---|---|---|---|---|---|
| Evaluation | Color difference (ΔE) | After irradiation (100 hr) | - | 1.0 | 0.8 |
|  |  | After irradiation (500 hr) | - | - | 0.7 |
|  | Reflectivity (550 nm) | Before irradiation | % | 101.2 | 101.3 |
|  |  | After irradiation (100 hr) | % | 101.2 | 101.8 |
|  |  | After irradiation (500 hr) | % | - | 101.4 |

(Production Example K-1) : Preparation of mixed syrup K-1

The mixed syrup E-1 obtained in Production Example E-1 was used as a hydrophilic polyurethane-based polymer/ethylenically unsaturated monomer mixed syrup K-1 without being subjected to any treatment.

(Example K-1)

47.7 Parts by weight (19.1 parts by weight in terms of solid content) of the hydrophilic polyurethane-based polymer/ethylenically unsaturated monomer mixed syrup K-1 obtained in Production Example K-1 were homogeneously mixed with 11.9 parts by weight of 1,6-hexanediol diacrylate (a product available under the trade name "NK Ester A-HD-N" from Shin Nakamura Chemical Co., Ltd.) (molecular weight: 226), 59.7 parts by weight (47.7 parts by weight in terms of solid content) of a urethane acrylate (hereinafter, abbreviated as "UA") (molecular weight: 3,720, dilution monomer: 2EHA, solid content: 80%) having an ethylenically unsaturated group at each of both terminals, in which both terminals of polyurethane synthesized from polytetramethylene glycol (hereinafter, abbreviated as "PTMG") and isophorone diisocyanate (hereinafter, abbreviated as"IPDI") were treated with HEA, as a reactive oligomer, 0.5 part by weight of diphenyl(2,4,6-trimethylbenzoyl)phosphine oxide (a product available under the trade name "Lucirin TPO" from BASF) , 1.0 part by weight of a hindered phenol-based antioxidant (a product available under the trade name "Irganox 1010" from Ciba Japan) , and 8.5 parts by weight of isobornyl acrylate (hereinafter, abbreviated as "IBXA") , 26.7 parts by weight of butyl acrylate (hereinafter, abbreviated as "BA"), and 5.1 parts by weight of acrylic acid (hereinafter, abbreviated as "AA") as ethylenically unsaturated monomers for oil phase amount adjustment. Thus, a continuous oil phase component (hereinafter, referred to as "oil phase") was obtained.
Meanwhile, 300 parts by weight of ion-exchanged water as an aqueous phase component (hereinafter, referred to as "aqueous phase") with respect to 100 parts by weight of the oil phase were continuously supplied dropwise at normal temperature into a stirring/mixing machine as an emulsifying machine fed with the oil phase. Thus, a stable W/O type emulsion was prepared. It should be noted that the emulsion had the aqueous phase and the oil phase at a weight ratio of 75/25.
The W/O type emulsion statically stored at normal temperature for 30 minutes after the preparation was applied onto a polyethylene terephthalate film (hereinafter, referred to as "PET film") subj ected to releasing treatment andhaving a thickness of 38 μm, so that the thickness of a foamed layer was 150 μm after photoirradiation, and continuously formed into a sheet shape. The top of the resultant sheet was further laminated with a polyester fiber laminated fabric having a thickness of 70 μm (a product available under the trade name "MILIFE (trademark) TY1010E" from JX Nippon ANCI, Inc.) obtained by laminating stretched polyester long fibers arranged in a matrix in a plane. Further, a PET film subjected to releasing treatment and having a thickness of 38 μm, onto which a W/O type emulsion statically stored at room temperature for 30 minutes after the preparation was applied so that the thickness of a foamed layer was 150 μm after photoirradiation, was separately prepared, and the polyester fiber laminated fabric was covered with the applied surface of the film. The sheet was irradiated with UV light at a light illuminance of 5 mW/cm$^2$ (measured with TOPCON UVR-T1 at a maximum peak sensitivity wavelength of 350 nm) through use of a Black Light lamp (15 W/cm). Thus, a high-water-content cross-linked polymer having a thickness of 500 μm was obtained. Next, the upper surface film was peeled off, and the high-water-content cross-linked polymer was heated at 130°C over 10 minutes. Thus, a foam sheet (K-1A) having a thickness of about 0.5 mm was obtained.
The resultant foam sheet (K-1A) was subjected to dipping treatment for 10 minutes with Fluorosurf (trademark) FS-1040TH (manufactured by Fluoro Technology, a water-repellent oil-repellent treatment agent for HFE and HFC solvents) as a water-repellent treatment agent, subjected to liquid draining, and then subjected to drying treatment at 130 °C for 20 minutes. Thus, a water-repellent foam (K-1B) was obtained.
Table 17 shows the results.
It should be noted that no crack was generated in the water-repellent foam (K-1B) in a 180° bending test.

(Example K-2)

Awater-repellent foam (K-2B) was obtained in the same manner as in Example K-1 except that, in Example K-1, the resultant foam sheet (K-1A) was subjected to dipping treatment for 10 minutes with a Fluorosurf (trademark) FS-6130 (manufactured by Fluoro Technology, HFE, an aqueous water-repellent oil-repellent treatment agent) 5-fold diluted product (using a solvent including water and ethyl alcohol at a ratio of 50:50) as a water-repellent treatment agent, subjected to liquid draining, and then subjected to drying treatment at 130°C for 20 minutes.
Table 17 shows the results.
It should be noted that no crack was generated in the water-repellent foam (K-2B) in a 180° bending test.

(Reference Example K-1)

A foam sheet (K-C1B) was obtained in the same manner as in Example K-1 except that, in Example K-1, the resultant foam sheet (K-1A) was not subjected to water-repellent treatment.
Table 17 shows the results.
It should be noted that no crack was generated in the foam sheet (K-C1B) in a 180° bending test.
[Table 17]

| | | Example K-1 | Example K-2 | Reference Example K-1 |
|---|---|---|---|---|
| Thickness (mm) | | 0.5 | 0.5 | 0.5 |
| Density (g/cm$^3$) | | 0.27 | 0.27 | 0.27 |
| Cell content (%) | | 75 | 75 | 75 |
| Average pore diameter of spherical cell ($\mu$m) | | 4 | 4 | 4 |
| Average pore diameter of through-hole ($\mu$m) | | 1 | 1 | 1 |
| Average pore diameter of surface opening ($\mu$m) | | 2 | 2 | 2 |
| Water-repellent treatment | | FS-1040TH | FS-6130 (5-fold dilution) | - |
| Shearing adhesive strength (N/cm$^2$) | Initial | 56.8 | | |
| | After water-repellent treatment | 45.0 | 55.9 | - |
| 50% Compression load (N/cm$^2$) | | 13.5 | 13.5 | 13.5 |
| Water absorptivity (times) In-water creep | | 0 >10 days | 0.07 >10 days | 1.82 5 to 9 minutes |

Industrial Applicability

The foam of the present invention is suitable for innumerable applications such as a cushioning material, an insulating material, a heat-insulating material, a soundproof material, a dustproof material, a filtration material, and a reflective material.
Reference Signs List

1    foam or the like
2    spacer
3    plate
1a   schematic configuration of dustproofness evaluation test apparatus
1b   schematic configuration of cross-section of dustproofness evaluation test apparatus
11   ceiling plate
12   spacer
13   double coated tape

(continued)

| 14 | foam or the like |
|---|---|
| 15 | housing for evaluation |
| 16a | through-hole |
| 16b | through-hole |
| 16c | through-hole |
| 17 | opening |
| 18 | space portion |
| 1000 | tumbler |
| 200 | evaluation container mounted with sample for evaluation |
| 211 | black acrylic plate |
| 212 | black acrylic plate |
| 22 | sample for evaluation |
| 23 | aluminum plate |
| 24 | base plate |
| 25 | powder supply portion |
| 26 | screw |
| 27 | foam compression plate |
| 28 | pin |
| 29 | evaluation container interior |
| 30 | aluminum spacer |
| 31 | impactor |
| 32 | supporting bar |
| 33 | test piece |
| 34 | force sensor |
| 35 | aluminum plate |
| 36 | power source |
| 37 | Multi-Purpose FTT Analyzer |
| 38 | acrylic plate |

## Claims

1. A foam, comprising spherical cells,
   wherein:

   the spherical cells each have an average pore diameter of less than 20 $\mu$m;
   the foam has a density of 0.15 g/cm$^3$ to 0.9 g/cm$^3$; and
   the foam is crack-free in a 180° bending test.

2. A foam according to claim 1, wherein the foam has a rate of dimensional change of less than $\pm$5% when stored at 125°C for 22 hours.

3. A foam according to claim 1, wherein the foam has a rate of change in tensile strength of less than $\pm$20% when stored at 125°C for 14 days.

4. A foam according to claim 1, wherein the foam has an open-cell structure in which through-holes are present between adjacent spherical cells.

5. A foam according to claim 4, wherein the through-holes each have an average pore diameter of 5 $\mu$m or less.

6. A foam according to claim 1, wherein the foam comprises a foam sheet having a sheet shape.

7. A production method for a foam comprising spherical cells, the method comprising:

a step (I) of preparing a W/O type emulsion comprising a continuous oil phase component and an aqueous phase component immiscible with the continuous oil phase component;
a step (II) of forming the resultant W/O type emulsion into a shape;
a step (III) of polymerizing the W/O type emulsion formed into a shape; and
a step (IV) of dehydrating the resultant water-containing polymer,

wherein:

the continuous oil phase component comprises a hydrophilic polyurethane-based polymer, an ethylenically unsaturated monomer, and a cross-linking agent; and
the cross-linking agent comprises one or more kinds selected from a polyfunctional (meth)acrylate, a polyfunctional (meth)acrylamide, and a polymerization-reactive oligomer each having a weight average molecular weight of 800 or more and one or more kinds selected from a polyfunctional (meth)acrylate and a polyfunctional (meth)acrylamide each having a weight average molecular weight of 500 or less.

8. A production method for a foam according to claim 7, wherein the hydrophilic polyurethane-based polymer comprises a polyoxyethylene polyoxypropylene unit derived from polyoxyethylene polyoxypropylene glycol, and the polyoxyethylene polyoxypropylene unit comprises 5 wt% to 25 wt% of polyoxyethylene.

9. A functional foam, comprising the foam according to claim 1.

10. A functional foam according to claim 9, wherein the functional foam comprises any one of a foamed pressure-sensitive adhesive, a foamed diffusive reflector, a chemical-resistant foam, a high-resilience foam, a high-airtight foam, a heat-resistant impact-absorbing foam, a liquid-absorbing open-cell porous material, a heat-resistant low-thermal conductive foam, a weather-resistant foam, and a water-repellent foam.

FIG. 1

FIG. 2

CROSS-SECTION
SIDE

20um

10.0kV 10.4mm x2.00k SE                    20.0um

FIG. 3

FIG. **4**

FIG. 5

FIG. **6**

FIG. 7

FIG. 8

FIG. 9

FIG. **10**

10.0kV 10.1mm x5.00k SE                    10.0um

FIG. 11

SURFACE SIDE

CROSS-SECTION SIDE

SURFACE OPENING

SPHERICAL CELL

THROUGH -HOLE

10.0kV 8.8mm x5.00k SE    10.0um

FIG. 12

FIG. **13**

FIG. **14**

(i)

(ii)

(iii)

FIG. 15

FIG. 16

FIG. 17

200

25  22  29  22  25  27

24

FIG. 18

FIG. 19

FIG. 20

FIG. 21

A-A' CROSS-SECTION OF TEST PIECE

FIG. 22

**INTERNATIONAL SEARCH REPORT**

| International application No. |
| --- |
| PCT/JP2011/068567 |

A.  CLASSIFICATION OF SUBJECT MATTER
*C08L75/04*(2006.01)i, *C08F2/32*(2006.01)i

According to International Patent Classification (IPC) or to both national classification and IPC

B.  FIELDS SEARCHED

Minimum documentation searched (classification system followed by classification symbols)
C08L1/00-101/14, C08F2/00-2/60, C08J5/00-5/24, C08J9/00-9/42

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2000-319475 A  (Mitsubishi Rayon Co., Ltd.), 21 November 2000 (21.11.2000), claims 1 to 7 (Family: none) | 1-10 |
| A | JP 2002-266463 A  (Japan U-Pica Co., Ltd.), 18 September 2002 (18.09.2002), claims 1 to 5 (Family: none) | 1-10 |
| A | JP 8-62891 A  (Dainippon Ink and Chemicals, Inc.), 08 March 1996 (08.03.1996), claims 1 to 5 (Family: none) | 1-10 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 November, 2011 (15.11.11) | 06 December, 2011 (06.12.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/068567

C (Continuation).   DOCUMENTS CONSIDERED TO BE RELEVANT

| Category* | Citation of document, with indication, where appropriate, of the relevant passages | Relevant to claim No. |
|---|---|---|
| A | JP 8-302218 A  (Sanyo Chemical Industries, Ltd.),<br>19 November 1996 (19.11.1996),<br>claims 1 to 10<br>& US 5994421 A           & WO 1996/012767 A1 | 1-10 |
| A | JP 8-277341 A  (Sanyo Chemical Industries, Ltd.),<br>22 October 1996 (22.10.1996),<br>claims 1 to 3<br>(Family: none) | 1-10 |
| A | JP 2001-105300 A  (Toray Industries, Inc.),<br>17 April 2001 (17.04.2001),<br>claims 1 to 6<br>(Family: none) | 1-10 |
| A | JP 2002-86345 A  (Toray Industries, Inc.),<br>26 March 2002 (26.03.2002),<br>claims 1 to 10<br>(Family: none) | 1-10 |
| A | JP 3-195713 A  (Mitsubishi Petrochemical Co., Ltd.),<br>27 August 1991 (27.08.1991),<br>claims<br>(Family: none) | 1-10 |
| A | JP 8-120019 A  (The Nippon Synthetic Chemical Industry Co., Ltd.),<br>14 May 1996 (14.05.1996),<br>claims 1 to 5<br>(Family: none) | 1-10 |
| A | JP 2009-537667 A  (Dow Global Technologies Inc.),<br>29 October 2009 (29.10.2009),<br>claims 1 to 19<br>& US 2009/0105411 A1    & WO 2007/136991 A1 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001009952 A
- JP 2001038837 A
- WO 2002101141 A1
- US 3565817 A
- JP 3066323 B
- JP 2003514052 W
- JP 2001163904 A
- JP 2003510390 W
- JP 2003013015 A
- JP 9111185 A

**Non-patent literature cited in the description**

- **LISSANT ; MAHAN.** A study of medium and high internal phase ratio water/polymer emulsions. *Journal of Colloid and Interface Science,* January 1973, vol. 42 (1), 201-208